# EUROPEAN PATENT APPLICATION

(11) **EP 4 354 251 A1**
(43) Date of publication of application: **17.04.2024**
(21) Application number: 22842320.8
(22) Date of filing: 24.06.2022
(51) Int. Cl.: G06F 1/16, G06F 3/041, G09F 9/30

(54) **ELECTRONIC DEVICE COMPRISING FOLDABLE METAL PLATE**

(30) Priority: 14.07.2021 KR 20210092180; 14.03.2022 KR 20220031589
(71) Applicant: Samsung Electronics Co., Ltd., Suwon-si, Gyeonggi-do 16677 (KR)
(72) Inventor: KIM, Seonghoon, Suwon-si, Gyeonggi-do 16677 (KR); KIM, Seongjun, Suwon-si, Gyeonggi-do 16677 (KR); KWON, Sera, Suwon-si, Gyeonggi-do 16677 (KR); YEOM, Donghyun, Suwon-si, Gyeonggi-do 16677 (KR); LEE, Gabseong, Suwon-si, Gyeonggi-do 16677 (KR)
(74) Representative: HGF
(86) International application number: PCT/KR2022/009068
(87) International publication number: WO 2023/287058

(57) **Abstract**

An electronic device, according to various embodiments of the present disclosure, may comprise a display panel that can be folded and unfolded on the basis of a folding axis, a metal plate that is disposed under the display panel, a first adhesive member that attaches the display panel and the metal plate, a first conductive plate that is disposed under the metal plate, a second adhesive member that attaches the metal plate and the first conductive plate, and a digitizer that is disposed under the display panel. Various other embodiments are possible.

## Description

### [Technical Field]

Various embodiments of the present disclosure relate to an electronic device including a foldable metal plate.

### [Background Art]

An electronic device gradually becomes slimmer, and the design factors of the electronic device are being enhanced and improved so that the electronic device has improved rigidity, and the electronic device has distinct functional elements. The electronic device may gradually have various shapes departing from a uniform rectangular shape. For example, the electronic device may have a deformable structure so that a user may conveniently carry the electronic device and use a large screen display when the user uses the electronic device. As the electronic devices, foldable type electronic devices continue to be consistently introduced, and support structure for foldable displays may also be improved.

### [Disclosure of Invention]

### [Technical Problem]

In general, an electronic device (e.g., a bar-type electronic device) having a single housing may include at least one conductive plate provided in an internal space and disposed on a rear surface of a display to support the display and assist in reinforcing the rigidity. The conductive plate may be grounded to a ground of a printed circuit board, which is disposed in the electronic device, through an electrical connection member. The foldable electronic device may include a hinge structure, and first and second housing structures disposed on the hinge structure and connected to each other in opposite directions. The foldable electronic device may operate in an in-folding and/or out-folding manner as the first housing structure rotates by means of the hinge structure relative to the second housing structure within a range of 0 to 360 degrees. The foldable electronic device may include a flexible display disposed to traverse the first and second housing structures in a state of being opened at 180 degrees.

In the case of the foldable electronic device, marks may remain on the display because the first and second housing structures move relative to each other by means of the hinge structure. The frequent operation of folding/unfolding the electronic device may cause folding marks on the display in a folding area in the vicinity of the hinge structure and finally cause creases, which may cause an erroneous operation of the electronic device and degrade operation reliability.

Various embodiments of the present disclosure may provide an electronic device including a foldable metal plate.

Various embodiments of the present disclosure may provide an electronic device capable of solving a problem of folding marks and creases in a folding area of a display.

Various embodiments of the present disclosure may provide an electronic device capable of solving a problem of folding marks and creases in a folding area of a display including a digitizer.

Technical problems to be solved by the present document are not limited to the above-mentioned technical problems, and other technical problems, which are not mentioned above, may be clearly understood from the following descriptions by those skilled in the art to which the present document pertains.

### [Solution to Problem]

An electronic device according to various embodiments of the present disclosure may include: a display panel configured to be folded and unfolded about a folding axis; a metal plate disposed on a lower portion of the display panel; a first adhesive member configured to join the display panel and the metal plate; a first conductive plate disposed on a lower portion of the metal plate; a second adhesive member configured to join the metal plate and the first conductive plate; and a digitizer disposed on a lower portion of the display panel.

### [Advantageous Effects of Invention]

According to various embodiments of the present disclosure, the integrated foldable metal plate (e.g., the liquid metal plate) and at least one conductive plate are provided to support the foldable flexible display. Therefore, it is possible to prevent the occurrence of folding marks and creases on the display caused by the frequent folding/unfolding operation and to improve the operation reliability of the electronic device.

In addition, various effects that can be directly or indirectly identified through the present document may be provided.

### [Brief Description of Drawings]

FIG. 1 is a block diagram of an electronic device in a network environment according to various embodiments of the present disclosure.
FIG. 2A is a perspective view of a front surface of the electronic device according to various embodiments of the present disclosure.
FIG. 2B is a perspective view of a rear surface of the electronic device according to various embodiments of the present disclosure.
FIG. 3A is a view illustrating an unfolded (e.g., opened) state of the electronic device according to various embodiments of the present disclosure.
FIG. 3B is a view illustrating a folded (e.g., closed) state of the electronic device according to various embodiments of the present disclosure.
FIG. 4 is a view illustrating the electronic device according to various embodiments of the present disclosure.
FIG. 5 is an exploded perspective view illustrating a layered structure of a display according to various embodiments of the present disclosure.
FIG. 6A is a cross-sectional view illustrating the layered structure of the display according to various embodiments of the present disclosure.
FIG. 6B is a view illustrating a first conductive plate.
FIG. 7 is an exploded perspective view illustrating the layered structure of the display according to various embodiments of the present disclosure.
FIG. 8 is a cross-sectional view illustrating the layered structure of the display according to various embodiments of the present disclosure.
FIG. 9 is an exploded perspective view illustrating the layered structure of the display according to various embodiments of the present disclosure.
FIG. 10 is a cross-sectional view illustrating the layered structure of the display according to various embodiments of the present disclosure.
FIG. 11 is an exploded perspective view illustrating the layered structure of the display according to various embodiments of the present disclosure.
FIG. 12 is a cross-sectional view illustrating the layered structure of the display according to various embodiments of the present disclosure.
FIG. 13 is a cross-sectional view illustrating the layered structure of the display according to various embodiments of the present disclosure.
FIG. 14 is a cross-sectional view illustrating the layered structure of the display according to various embodiments of the present disclosure.
FIG. 15 is a cross-sectional view illustrating the layered structure of the display according to various embodiments of the present disclosure.
FIG. 16 is a cross-sectional view illustrating the layered structure of the display according to various embodiments of the present disclosure.
FIG. 17 is a cross-sectional view illustrating the layered structure of the display according to various embodiments of the present disclosure.
FIG. 18 is a cross-sectional view illustrating the layered structure of the display according to various embodiments of the present disclosure.
FIG. 19 is a cross-sectional view illustrating the layered structure of the display according to various embodiments of the present disclosure.
FIG. 20 is a cross-sectional view illustrating the layered structure of the display according to various embodiments of the present disclosure.
FIG. 21 is a cross-sectional view illustrating the layered structure of the display according to various embodiments of the present disclosure.
FIG. 22 is a cross-sectional view illustrating the layered structure of the display according to various embodiments of the present disclosure.
FIG. 23 is a cross-sectional view illustrating the layered structure of the display according to various embodiments of the present disclosure.
FIG. 24 is a view illustrating an example of a method of manufacturing the display of the present disclosure.
FIG. 25 is a cross-sectional view illustrating the layered structure of the display according to various embodiments of the present disclosure.
FIG. 26 is a cross-sectional view illustrating the layered structure of the display according to various embodiments of the present disclosure.
FIG. 27 is a cross-sectional view illustrating the layered structure of the display according to various embodiments of the present disclosure.
FIG. 28 is a cross-sectional view illustrating the layered structure of the display according to various embodiments of the present disclosure.
FIG. 29 is a cross-sectional view illustrating the layered structure of the display according to various embodiments of the present disclosure.
FIG. 30 is a cross-sectional view illustrating the layered structure of the display according to various embodiments of the present disclosure.
FIG. 31 is a view illustrating the layered structure of the display according to various embodiments of the present disclosure.
FIG. 32 is a view illustrating a metal plate illustrated in FIG. 31 and illustrating a state in which a plurality of grooves is formed in a third area (e.g., a folding area).
FIG. 33 is a view illustrating the layered structure of the display according to various embodiments of the present disclosure.
FIG. 34 is a view illustrating the layered structure of the display according to various embodiments of the present disclosure.
FIG. 35 is a view illustrating the layered structure of the display according to various embodiments of the present disclosure.

### [Mode for the Invention]

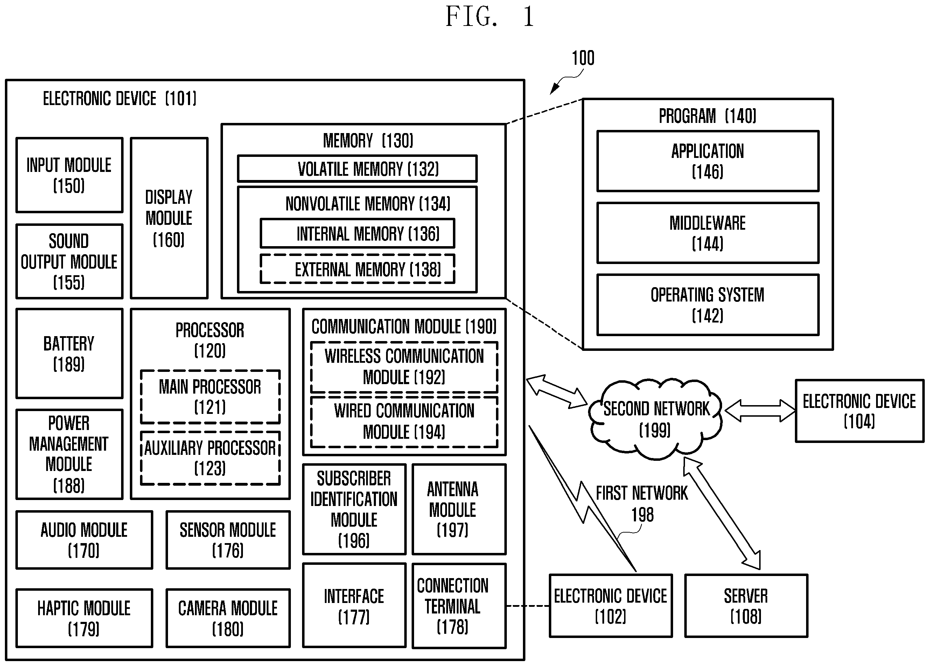

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to the embodiment, the display module 160 illustrated in FIG. 1 may include a flexible display having a screen (e.g., a display screen) constituted to be folded or unfolded.

According to the embodiment, the display module 160 illustrated in FIG. 1 may include the flexible display slidably disposed and configured to provide the screen (e.g., the display screen).

According to the embodiment, the display module 160 illustrated in FIG. 1 is described as having the foldable display or the flexible display. However, the present disclosure is not limited thereto. The display module 160 may also include a bar-type display or a flat plate-shaped (plate type) display.

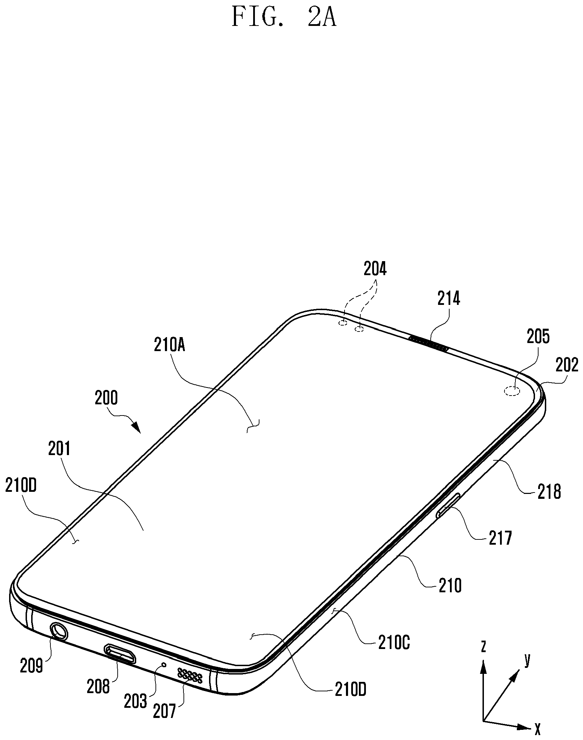

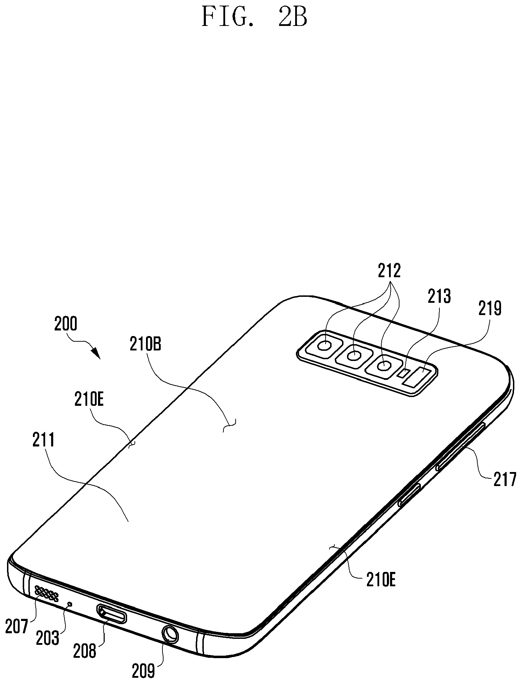

FIG. 2A is a perspective view of a front surface of the electronic device according to various embodiments of the present disclosure. FIG. 2B is a perspective view of a rear surface of the electronic device according to various embodiments of the present disclosure.

With reference to FIGS. 2A and 2B, an electronic device 200 (e.g., the electronic device 101 in FIG. 1) according to various embodiments of the present disclosure may include a first surface (or a front surface) 210A, a second surface (or a rear surface) 210B, and a housing 210. A display 210 (e.g., the display module 160 in FIG. 1) may be disposed in a space defined by the housing 210. The housing 210 may include a side surface 210C that surrounds a space between the first surface 210A and the second surface 210B. In another embodiment, the housing 210 may be a structure that defines some of the first surface 210A, the second surface 210B, and the side surface 210C.

According to the embodiment, at least a part of the first surface 210A may be defined by a substantially transparent front surface plate 202 (e.g., a glass or polymer plate including various coating layers).

According to the embodiment, the second surface 210B may be defined by a substantially opaque rear surface plate 211. For example, the rear surface plate 211 may be made of coated or tinted glass, ceramic, polymer, metal (e.g., aluminum, stainless steel (STS), or magnesium), or a combination of at least two of the above materials. However, the present disclosure is not limited thereto. The rear surface plate 211 may be made of transparent glass.

According to the embodiment, the side surface 210C may be defined by a side surface bezel structure 218 (or a "lateral member") coupled to the front surface plate 202 and the rear surface plate 211 and containing metal and/or polymer. In any embodiment, the rear surface plate 211 and side surface bezel structure 218 may be integrated and contain the same material (e.g., a metallic material such as aluminum).

In one embodiment, the front surface plate 202 may include two first areas 210D extending seamlessly while being bent from the first surface 210A toward the rear surface plate 211. The two first areas 210D may be disposed at two opposite ends of long edges of the front surface plate 202.

In one embodiment, the rear surface plate 211 may include two second areas 210E extending seamlessly while being bent from the second surface 210B toward the front surface plate 202.

In any embodiment, the front surface plate 202 (or the rear surface plate 211) may include only one of the first areas 210D (or the second areas 210E). In any embodiment, some of the first areas 210D or the second areas 210E may be excluded. In the embodiments, when viewed from the side surface of the electronic device 200, the side surface bezel structure 218 may have a first thickness (or width) at the side surface side at which the first areas 210D or the second areas 210E are excluded, the side surface bezel structure 218 may have a second thickness at the side surface side at which the first areas 210D or the second areas 210E are included, and the second thickness is smaller than the first thickness.

According to the embodiment, the electronic device 200 may include at least one of the display 201 (e.g., the display module 160 in FIG. 1), a sound input device 203 (e.g., the input module 150 in FIG. 1), sound output devices 207 and 214 (e.g., the sound output module 155 in FIG. 1), sensor modules 204 and 219 (e.g., the sensor module 176 in FIG. 1), camera modules 205 and 212 (e.g., the camera module 180 in FIG. 1), a flash 213, a key input device 217, an indicator (not illustrated), and connectors 208 and 209. In any embodiment, the electronic device 200 may exclude at least one (e.g., the key input device 217) of the constituent elements or may further include other constituent elements.

According to the embodiment, the display 201 (e.g., the display module 160 in FIG. 1) may be visually recognized through an upper end portion of the front surface plate 202. In any embodiment, at least a part of the display 201 may be visible through the front surface plate 202 that defines the first area 210D of the side surface 210C and the first surface 210A. The display 201 may be coupled to or disposed adjacent to a pressure sensor configured to measure intensity (pressure) of touch and/or a digitizer configured to detect a stylus pen that operates in a magnetic field manner. In any embodiment, at least a part of each of the sensor modules 204 and 219 and/or at least a part of the key input device 217 may be disposed in the first area 210D and/or the second area 210E.

In any embodiment, at least one of the sensor module 204, the camera module 205 (e.g., image sensor), the audio module 214, and a fingerprint sensor may be included in a rear surface of a screen display area of the display 201.

According to any embodiment, the display 201 may be coupled to or disposed adjacent to the pressure sensor configured to measure intensity (pressure) of touch and/or the digitizer configured to detect the stylus pen that operates in a magnetic field manner.

According to any embodiment, at least a part of each of the sensor modules 204 and 219 and/or at least a part of the key input device 217 may be disposed in the first areas 210D and/or the second areas 210E.

According to the embodiment, the sound input device 203 may include a microphone. In any embodiment, the input device 203 may include a plurality of microphones disposed to detect a direction of a sound. The sound output devices 207 and 214 may include the sound output devices 207 and 214. The sound output devices 207 and 214 may include an external speaker 207 and a telephone receiver (e.g., the audio module 214). In any embodiment, the sound input device 203 (e.g., a microphone), the sound output devices 207 and 214, and the connectors 208 and 209 may be disposed in an internal space of the electronic device 200 and exposed to an external environment through at least one hole formed in the housing 210. In any embodiment, the hole formed in the housing 210 may be used in common for the sound input devices 203 (e.g., the microphone) and the sound output devices 207 and 214. In any embodiment, the sound output devices 207 and 214 may include a speaker (e.g., a piezoelectric speaker) that operates without the hole formed in the housing 210.

According to the embodiment, the sensor modules 204 and 219 (e.g., the sensor module 176 in FIG. 1) may generate electrical signals or data values corresponding to the internal operating state of the electronic device 200 or the external environment state. For example, the sensor modules 204 and 219 may include a first sensor module 204 (e.g., a proximity sensor) disposed on the first surface 210A of the housing 210, a second sensor module 219 (e.g., an HRM sensor) disposed on the second surface 210B of the housing 210, and/or a third sensor module (not illustrated) (e.g., a fingerprint sensor). For example, the fingerprint sensor may also be disposed on the first surface 210A (e.g., the display 201) and/or the second surface 210B of the housing 210. The electronic device 200 may further include at least one of various non-illustrated other sensor modules, e.g., a gesture sensor, a gyro sensor, an atmospheric pressure sensor, a magnetic sensor, an acceleration sensor, a grip sensor, a color sensor, an infrared (IR) sensor, a biosensor, a temperature sensor, a humidity sensor, and an illuminance sensor.

According to the embodiment, the camera modules 205 and 212 may include a first camera module 205 disposed on the first surface 210A of the electronic device 200, and a second camera module 212 disposed on the second surface 210B. The flash 213 may be disposed at the periphery of the camera modules 205 and 212. The camera modules 205 and 212 may include one or a plurality of lenses, an image sensor, and/or an image signal processor. For example, the flash 213 may include a light-emitting diode or a xenon lamp.

In one embodiment, the first camera module 205 may be disposed under a display panel of the display 201 in an under-display camera (UDC) manner. In any embodiment, the two or more lenses (wide angle and telephoto lenses) and the image sensors may be disposed on one surface of the electronic device 200. In any embodiment, a plurality of first camera modules 205 may be disposed, in an under-display camera (UDC) manner, on the first surface (e.g., a surface on which the screen is displayed) of the electronic device 200.

In one embodiment, the key input device 217 may be disposed on the side surface 210C of the housing 210. In another embodiment, the electronic device 200 may exclude some or all of the above-mentioned key input devices 217, the excluded key input device 217 may be implemented as other types such as a soft key on the display 201. In any embodiment, the key input device 217 may be implemented by using a pressure sensor included in the display 201.

In one embodiment, the connectors 208 and 209 may include a first connector hole 208 capable of accommodating a connector (e.g., a USB connector) for transmitting or receiving electric power and/or data to or from the external electronic device, and/or a second connector hole 209 (e.g., an earphone jack) capable of accommodating a connector for transmitting or receiving an audio signal to or from the external electronic device. The first connector hole 208 may include a universal serial bus (USB) A type port or a USB C type port. In case that the first connector hole 208 supports the USB C type, the electronic device 200 (e.g., the electronic device 101 in FIG. 1) may support USB PD (power delivery) charging.

In one embodiment, some of the camera modules 205 among the camera modules 205 and 212 and/or some of the sensor modules 204 among the sensor modules 204 and 219 may be disposed to be visually recognized through the display 201. In another example, in case that the camera module 205 is disposed in an under-display camera (UDC) manner, the camera module 205 may not be visually recognized from the outside.

In one embodiment, the camera module 205 may be disposed to overlap the display area, and the screen may be displayed even in the display area corresponding to the camera module 205. Some of the sensor modules 204 may be disposed in the internal space of the electronic device to perform the functions thereof without being visually exposed through the front surface plate 202.

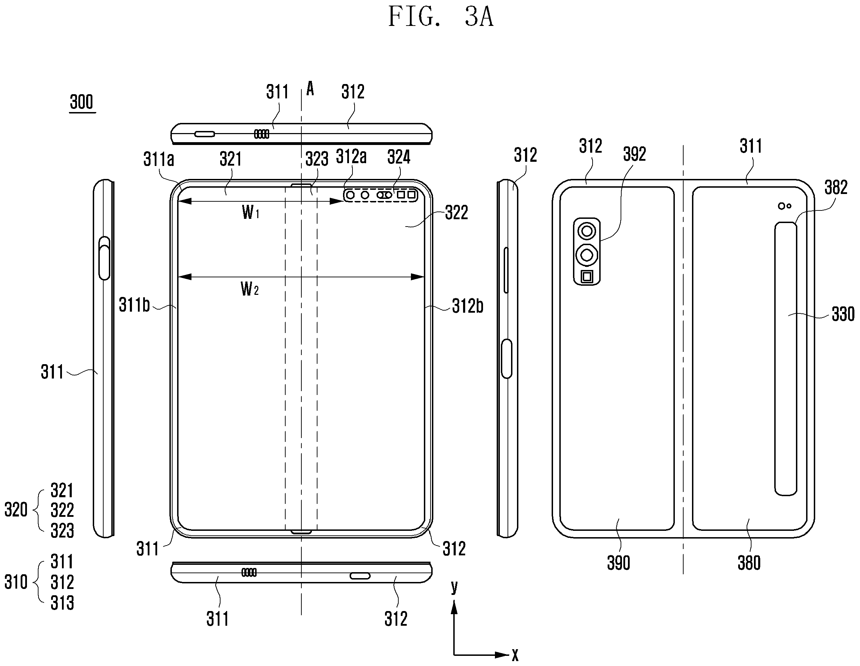

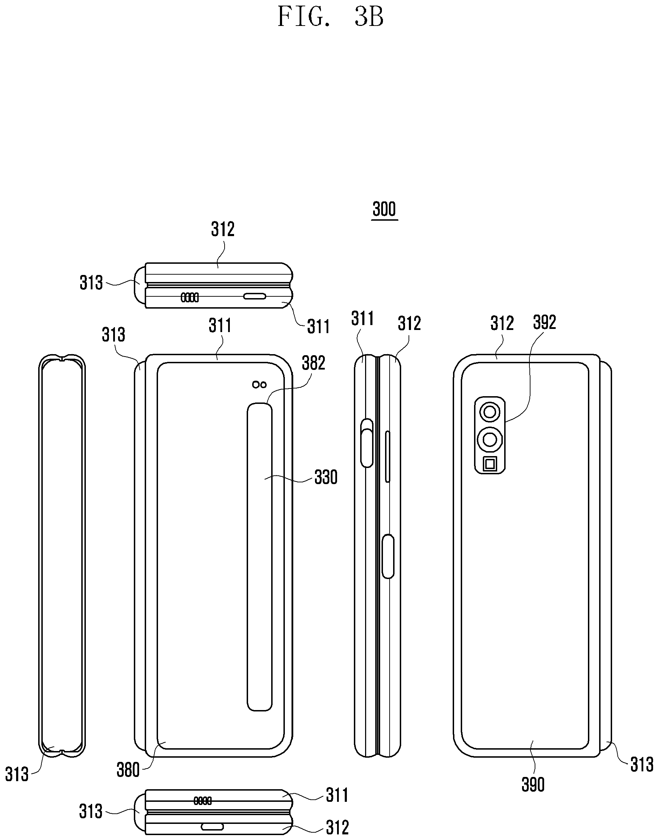

FIG. 3A is a view illustrating an unfolded (e.g., opened) state of the electronic device according to various embodiments of the present disclosure. FIG. 3B is a view illustrating a folded (e.g., closed) state of the electronic device according to various embodiments of the present disclosure.

With reference to FIGS. 3A and 3B, an electronic device 300 (e.g., the electronic device 101 in FIG. 1) may include a housing 310, and a display 320 disposed in a space defined by the housing 310. In one embodiment, the display 320 may include a flexible display or a foldable display.

A surface on which the display 320 is disposed may be defined as a first surface or a front surface (e.g., a surface on which a screen is displayed in an unfolded state) of the electronic device 300. Further, a surface opposite to the front surface may be defined as a second surface or a rear surface of the electronic device 300. In addition, a surface, which surrounds a space between the front surface and the rear surface, may be defined as a third surface or a side surface of the electronic device 300. For example, a folding area 323 of the electronic device 300 may be folded or unfolded about a folding axis (e.g., axis A) in a first direction (e.g., an x-axis direction).

In one embodiment, the housing 310 a first housing structure 311, a second housing structure 312 including a sensor area 324, a first rear surface cover 380, and a second rear surface cover 390. The housing 310 of the electronic device 300 is not limited by shapes and coupling illustrated in FIGS. 3A and 3B and may be implemented by combination and/or coupling of other shapes or components. For example, in another embodiment, the first housing structure 311 and the first rear surface cover 380 may be integrated, and the second housing structure 312 and the second rear surface cover 390 may be integrated.

In the embodiment, the first and second housing structures 311 and 312 may be disposed at two opposite sides based on the folding axis A and have an entirely symmetric shape with respect to the folding axis A. An angle or distance defined between the first housing structure 311 and the second housing structure 312 may vary depending on whether a state of the electronic device 300 is an unfolded state (e.g., a first state), a folded state (e.g., a second state), or an intermediate state (e.g., a third state).

In one embodiment, unlike the first housing structure 311, the second housing structure 312 additionally includes the sensor area 324 in which various sensors (e.g., an illuminance sensor, an iris sensor, and/or an image sensor) are disposed, but the second housing structure 312 may have a symmetric shape in the other areas.

In one embodiment, at least one sensor (e.g., a camera module, an illuminance sensor, an iris sensor, and/or an image sensor) may also be disposed below the display and/or in a bezel area in addition to the sensor area 324.

In one embodiment, the first housing structure 311 and the second housing structure 312 may collectively define a recess for accommodating the display 320. In the illustrated embodiment, because of the sensor area 324, the recess may have two or more different widths in the direction (e.g., x-axis direction) perpendicular to the folding axis A.

For example, the recess may have a first width W1 between a first portion 311a of the first housing structure 311 and a first portion 312a of the second housing structure 312 that is formed at an edge of the sensor area 324 of the second housing structure 312. The recess may have a second width W2 between a second portion 311b of the first housing structure 311 parallel to the folding axis A of the first housing structure 311 and a second portion 312b of the second housing structure 312 that is parallel to the folding axis A without corresponding to the sensor area 324 of the second housing structure 312. In this case, the second width W2 may be larger than the first width W1. In other words, the first portion 311a of the first housing structure 311 and the first portion 312a of the second housing structure 312, which have the asymmetric shape, may define the first width W1 of the recess. The second portion 311b of the first housing structure 311 and the second portion 312b of the second housing structure 312, which have the symmetric shape, may define the second width W2 of the recess.

In one embodiment, distances from the folding axis A to the first portion 312a and the second portion 312b of the second housing structure 312 may be different from each other. The width of the recess is not limited to the illustrated example. In various embodiments, the recess may have a plurality of widths by the shape of the sensor area 324 or the portion having the asymmetric shape of the first and second housing structures 311 and 312.

In one embodiment, the first housing structure 311 and the second housing structure 312 may each be at least partially made of a metallic material or a nonmetallic material having rigidity of a magnitude selected to support the display 320.

In one embodiment, the sensor area 324 may be formed to have a predetermined area adjacent to one corner of the second housing structure 312. However, the arrangement, shape, and size of the sensor area 324 are not limited to the illustrated example. For example, in another embodiment, the sensor area 324 may be provided in any area between other corners of the second housing structure 312 or between an upper end corner and a lower end corner of the second housing structure 312.

In one embodiment, the components, which are embedded in the electronic device 300 and perform various functions, may be visually exposed to the front surface of the electronic device 300 through the sensor area 324 or through one or more openings provided in the sensor area 324. In various embodiments, the components may include various types of sensors. For example, the sensors may include at least one of an illuminance sensor, a front surface camera (e.g., a camera module), a receiver, and a proximity sensor.

The first rear surface cover 380 may be disposed at one side of the folding axis A and provided on the rear surface of the electronic device 300. For example, the first rear surface cover 380 may have a substantially rectangular edge (periphery), and the edge may be surrounded by the first housing structure 311. Similarly, the second rear surface cover 390 may be disposed at the other side of the folding axis A and provided on the rear surface of the electronic device 300, and an edge of the second rear surface cover 390 may be surrounded by the second housing structure 312.

In the illustrated embodiment, the first rear surface cover 380 and the second rear surface cover 390 may have a substantially symmetric shape with respect to the folding axis A. However, the first rear surface cover 380 and the second rear surface cover 390 need not necessarily have the symmetric shape. In another embodiment, the electronic device 300 may include the first rear surface cover 380 and the second rear surface cover 390 having various shapes. In still another embodiment, the first rear surface cover 380 may be integrated with the first housing structure 311, and the second rear surface cover 390 may be integrated with the second housing structure 312.

In one embodiment, the first rear surface cover 380, the second rear surface cover 390, the first housing structure 311, and the second housing structure 312 may define the space in which various components (e.g., a printed circuit board or a battery) of the electronic device 300 may be disposed. In the embodiment, one or more components may be disposed or visually exposed on the rear surface of the electronic device 300. For example, at least a part of a sub-display 330 may be visually exposed through a first rear surface area 382 of the first rear surface cover 380. In another embodiment, one or more components or sensors may be visually exposed through a second rear surface area 392 of the second rear surface cover 390. In various embodiments, the sensors may include an illuminance sensor, a proximity sensor, and/or a rear surface camera.

In one embodiment, a hinge structure 313 may be disposed between the first housing structure 311 and the second housing structure 312 and constituted to cover the internal components (e.g., the hinge structure). The hinge structure 313 may include a hinge cover that covers the portion of the first housing structure 311 and the portion of the second housing structure 312 that come into contact with each other as the electronic device 300 is unfolded or folded.

In one embodiment, the hinge structure 313 may be covered by a part of the first housing structure 311 and a part of the second housing structure 312 or exposed to the outside depending on the state (the unfolded state (flat state) or the folded state) of the electronic device 300. In one embodiment, in case that the electronic device 300 is in the unfolded state, the hinge structure 313 may be covered by the first housing structure 311 and the second housing structure 312 without being exposed. In one embodiment, in case that the electronic device 300 is in the folded state (e.g., the fully folded state), the hinge structure 313 may be exposed to the outside between the first housing structure 311 and the second housing structure 312. In one embodiment, in the case of the intermediate state in which the first housing structure 311 and the second housing structure 312 define a predetermined angle (are folded with a certain angle), the hinge structure 313 may be partially exposed to the outside between the first housing structure 311 and the second housing structure 312. However, in this case, an exposed area may be smaller than an area in the fully folded state. In one embodiment, the hinge structure 313 may include a curved surface.

The display 320 may be disposed in the space defined by the housing 310. For example, the display 320 may be seated in a recess defined by the housing 310 and constitute a majority of the front surface of the electronic device 300.

Therefore, the front surface of the electronic device 300 may include the display 320, a partial area of the first housing structure 311 adjacent to the display 320, and a partial area of the second housing structure 312 adjacent to the display 320. Further, the rear surface of the electronic device 300 may include the first rear surface cover 380, a partial area of the first housing structure 311 adjacent to the first rear surface cover 380, the second rear surface cover 390, and a partial area of the second housing structure 312 adjacent to the second rear surface cover 390.

The display 320 may mean a display having at least a partial area that may be deformed to a flat or curved surface. In one embodiment, the display 320 may include the folding area 323, a first area 321 disposed at one side (e.g., the left side in FIG. 3A) based on the folding area 323, and a second area 322 disposed at the other side (e.g., the right side in FIG. 3A).

In one embodiment, the display 320 may include a top emission type OLED display or a bottom emission type OLED display. The OLED display may include a low-temperature color filter (LTCF) layer, a window glass (e.g., an ultra-thin glass (UTG) or polymer window), and an optical compensation film (OCF). In this case, the LTCF layer of the OLED display may be substituted for a polarizing film (or a polarizing layer).

The division of the area of the display 320 is illustrative. The display 320 may be divided into a plurality of areas (e.g., two or more areas) in accordance with the structure or function. In one embodiment, the area of the display 320 may be divided by the folding area 323, which extends in parallel with a y-axis, or the folding axis A. In another embodiment, the area of the display 320 may be divided based on another folding area (e.g., a folding area parallel to an x-axis) or another folding axis (e.g., a folding axis parallel to the x-axis).

In one embodiment, the first area 321 and the second area 322 may have an entirely symmetric shape with respect to the folding area 323.

Hereinafter, the operations of the first housing structure 311 and the second housing structure 312 and the respective areas of the display 320 in accordance with the states (e.g., the unfolded state (flat state) and the folded state) of the electronic device 300 will be described.

In one embodiment, in case that the electronic device 300 is in the unfolded state (flat state) (e.g., FIG. 3A), the first housing structure 311 and the second housing structure 312 may be disposed to be directed in the same direction while defining an angle of about 180 degrees. The surface of the first area 321 of the display 320 and the surface of the second area 322 may be directed in substantially the same direction (e.g., the direction of the front surface of the electronic device) while defining about 180 degrees. The folding area 323 may define substantially the same plane as the first area 321 and the second area 322.

In one embodiment, in case that the electronic device 300 is in the folded state (e.g., FIG. 3B), the first housing structure 311 and the second housing structure 312 may be disposed to face each other. The surface of the first area 321 of the display 320 and the surface of the second area 322 may face each other while defining a small angle (e.g., an angle between 0 degree and about 10 degrees). At least a part of the folding area 323 may have a curved surface having a predetermined curvature.

In one embodiment, in case that the electronic device 300 is in the intermediate state (half-folded state), the first housing structure 311 and the second housing structure 312 may be disposed at a predetermined angle (a certain angle) with respect to each other. The surface of the first area 321 of the display 320 and the surface of the second area 322 may define an angle larger than the angle in the folded state and smaller than the angle in the unfolded state. At least a part of the folding area 323 may have a curved surface having a predetermined curvature. In this case, the curvature may be smaller than the curvature in the folded state.

The electronic device according to various embodiments of the present disclosure may include an electrode devices such as a bar-type electronic device, a foldable type electronic device, a rollable type electronic device, a sliding type electronic device, a wearable type electronic device, a tablet PC, and/or a notebook PC. The electronic devices 101, 200, and 300 according to various embodiments of the present disclosure are not limited to the above-mentioned examples but may include various other electronic devices.

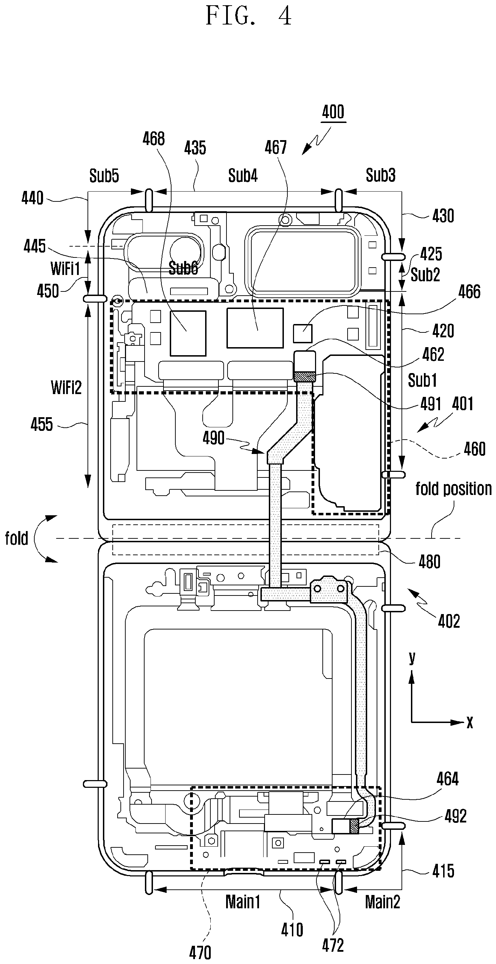

FIG. 4 is a view illustrating an electronic device 400 (e.g., the electronic device 101 in FIG. 1) according to various embodiments of the present disclosure.

With reference to FIG. 4, the electronic device 400 (e.g., the electronic device 101 in FIG. 1) according to various embodiments of the present disclosure may be a foldable device. The electronic device 400 may include a hinge structure 480 (e.g., hinge assembly) (e.g., the hinge structure 313 in FIGS. 3A and 3B) disposed at a fold position. For example, the electronic device 400 may be folded or unfolded in the y-axis direction (e.g., the vertical direction) about the fold position (e.g., the x-axis) by using the hinge structure 480.

In one embodiment, in case that the electronic device 400 is in the folded state, a first housing 401 and a second housing 402 may be close to or in contact with each other based on the fold position. In addition, when the electronic device 400 is in the unfolded state, the first housing 401 and the second housing 402 may be unfolded and spaced apart from each other based on the fold position.

According to the embodiment, the electronic device 400 may include the first housing 401, the second housing 402, a first printed circuit board 460 disposed in the first housing 401, a second printed circuit board 470 disposed in the second housing 402, a plurality of antenna modules, and a flexible circuit board 490 (e.g., a flexible printed circuit board type RF cable (FRC)). A modem 466, a plurality of front end modules 467, and a transceiver 468 may be disposed on the first printed circuit board 460. An antenna feeding part 472 connected to at least one antenna module may be disposed on the second printed circuit board 470. The flexible circuit board 490 may electrically connect the first printed circuit board 460 disposed in the first housing 401 and the second printed circuit board 470 disposed in the second housing 402.

In one embodiment, the plurality of antenna modules may include a first antenna module 410 (a first main antenna module), a second antenna module 415 (a second main antenna module), a third antenna module 420 (a sub-1 antenna module), a fourth antenna module 425 (e.g., a sub-2 antenna module), a fifth antenna module 430 (e.g., a sub-3 antenna module), a sixth antenna module 435 (e.g., a sub-4 antenna module), a seventh antenna module 440 (e.g., a sub-5 antenna module), an eighth antenna module 445 (e.g., a sub-6 antenna module), a first WiFi antenna module 450, and a second WiFi antenna module 455. According to the embodiment, a WiFi circuit, which supports WiFi communication, is exemplified as the WiFi (WiFi) module. However, the present disclosure is not limited thereto. For example, a Bluetooth circuit, which supports Bluetooth communication, may be included.

In one embodiment, a first connector 491 of the flexible circuit board 490 may be electrically connected to a connector 462 of the first printed circuit board 460. The flexible circuit board 490 may be electrically connected to the first printed circuit board 460 through the first connector 491. A second connector 492 of the flexible circuit board 490 may be electrically connected to a connector 464 of the second printed circuit board 470. The flexible circuit board 490 may be electrically connected to the second printed circuit board 470 through the second connector 492. The flexible circuit board 490 may be folded or unfolded at the fold position on the electronic device 400. Display signals, control signals, and/or RF signals may be transmitted or received between the first printed circuit board 460 and the second printed circuit board 470 by the flexible circuit board 490.

The electronic devices 101, 200, 300, and 400 according to various embodiments may each include an electrode devices such as a bar-type electronic device, a foldable type electronic device, a rollable type electronic device, a sliding type electronic device, a wearable type electronic device, a tablet PC, and/or a notebook PC. The electronic devices 101, 200, 300, and 400 according to various embodiments are not limited to the above-mentioned examples but may include various other electronic devices.

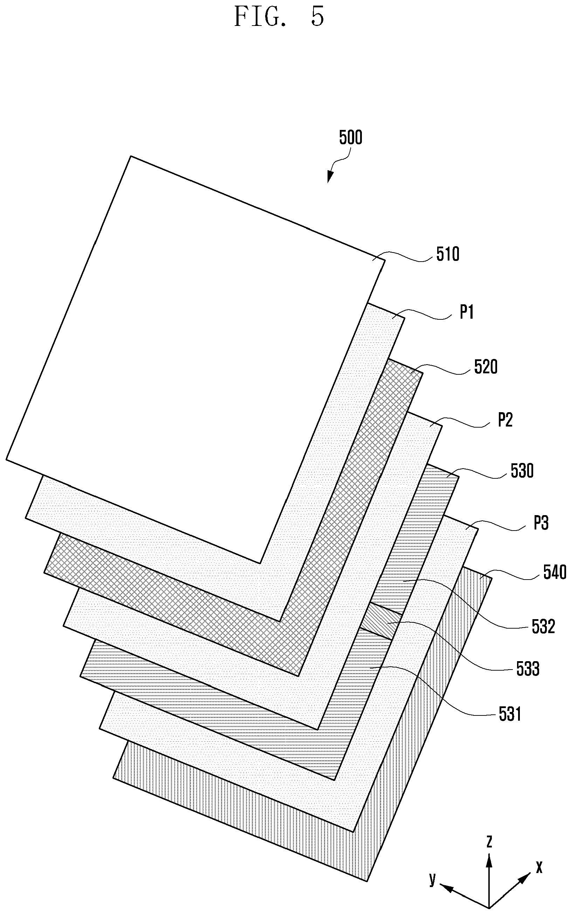

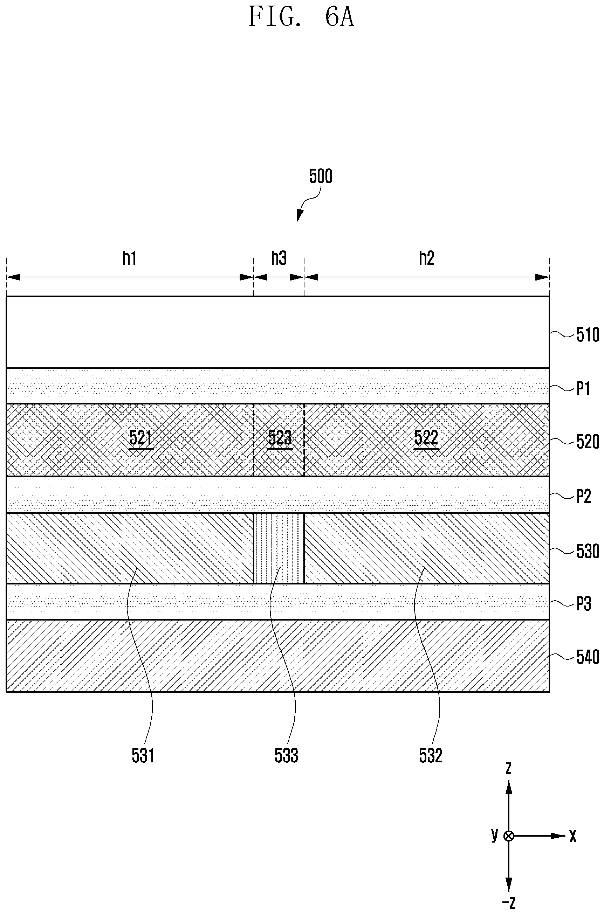

FIG. 5 is an exploded perspective view illustrating a layered structure of a display according to various embodiments of the present disclosure. FIG. 6A is a cross-sectional view illustrating the layered structure of the display according to various embodiments of the present disclosure.

With reference to FIGS. 5 and 6A, the electronic device (e.g., the electronic device 101 in FIG. 1, the electronic device 300 in FIGS. 3A and 3B, or the electronic device 400 in FIG. 4) according to various embodiments of the present disclosure may include a display 500.

According to the embodiment, the display 500 may include a display panel 510, a metal plate 520, a first conductive plate 530, and a second conductive plate 540.

In one embodiment, the display 500 may include a polarizer (POL) (e.g., a polarizing film) and a window (e.g., a polyimide (PI) film or a ultra-thin glass (UTG)) sequentially disposed on an upper portion of the display panel 510 (e.g., based on the z-axis direction). For example, the POL may be disposed on the upper portion of the display panel 510 (e.g., based on the z-axis direction), and the window may be disposed on an upper portion of the POL (e.g., based on the z-axis direction).

In one embodiment, the window, the POL, the display panel 510, the metal plate 520, the first conductive plate 530, and the second conductive plate 540 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 510, the metal plate 520, the first conductive plate 530, and the second conductive plate 540 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, in order to reduce plastic deformation of the layers (or the films and the plates) disposed in the display 500, a lower portion of at least one of the window, the POL, the display panel 510, the metal plate 520, the first conductive plate 530, and the second conductive plate 540, which are stacked in the display 500, may be coated with a material with high elasticity (e.g., an elastic strain ratio of 1.5% or higher). However, the present disclosure is not limited thereto. An upper portion of at least one of the window, the POL, the display panel 510, the metal plate 520, the first conductive plate 530, and the second conductive plate 540, which are stacked in the display 500, may be coated with a material with high elasticity (e.g., the elastic strain ratio of 1.5% or higher).

For example, a front surface of the upper portion and/or a front surface of the lower portion of at least one of the window, the POL, the display panel 510, the metal plate 520, the first conductive plate 530, and the second conductive plate 540, which are stacked in the display 500, may be coated with a material with high elasticity (e.g., the elastic strain ratio of 1.5% or higher). For example, the coating process may be performed by using a high-elasticity material together with liquid metal.

In another example, the areas (e.g., folding areas) of the upper portion and/or the lower portion of at least one of the window, the POL, the display panel 510, the metal plate 520, the first conductive plate 530, and the second conductive plate 540, which are stacked in the display 500, may be coated with the material with high elasticity (e.g., the elastic strain ratio of 1.5% or higher). For example, the coating process may be performed by using a high-elasticity material together with liquid metal.

In one embodiment, the display 500 may include a first area h1, a second area h, and a third area h3 positioned between the first area h1 and the second area h1. For example, the first area h1 may be a planar area corresponding to the first housing structure (e.g., the first housing structure 311 in FIGS. 3A and 3B) of the electronic device (the electronic device 300 in FIGS. 3A and 3B). For example, the second area h2 may be a planar area corresponding to the second housing structure (e.g., the second housing structure 312 in FIGS. 3A and 3B). For example, the third area h3 may face the hinge structure (e.g., the hinge structure 313 in FIGS. 3A and 3B or the hinge structure 480 in FIG. 4) and include an area (e.g., folding area) that is at least partially folded. For example, the first area h1 and the second area h2 may be constituted to be folded or unfolded about the third area h3.

In one embodiment, the display panel 510, the metal plate 520, the first conductive plate 530, and the second conductive plate 540 may be attached to one another by means of adhesive members P1, P2, and P3. For example, the adhesive members P1, P2, and P3 may each include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 520 may be disposed on the lower portion of the display panel 510 (e.g., based on the -z-axis direction). In one embodiment, the metal plate 520 may include liquid metal and have a thickness of about 12 um to 35 um. In one embodiment, an entire area of the metal plate 520 may have substantially the same thickness. In another embodiment, the metal plate 520 may be formed to have a plurality of thicknesses. For example, one area of the metal plate 520 may have a first thickness (e.g., about 35 um), and another area of the metal plate 520 may have a second thickness (e.g., about 12 um).

In one embodiment, the metal plate 520 may include a first planar area 521, a second planar area 522, and a folding area 523. For example, the folding area 523 may be positioned between the first planar area 521 and the second planar area 522. For example, the first planar area 521 of the metal plate 520 may face (e.g., overlap based on the z-axis) the first area h1 of the display 500. For example, the second planar area 522 of the metal plate 520 may face (e.g., overlap based on the z-axis) the second area h2 of the display 500. For example, the folding area 523 of the metal plate 520 may face (e.g., overlap based on the z-axis) the third area h3 of the display 500. For example, the folding area 523 of the metal plate 520 may be positioned to overlap the folding axis of the display panel 510.

In one embodiment, the metal plate 520 may be made of a material with an elastic strain ratio of 1.5% or higher and a modulus of 70 GPa or more. For example, because the metal plate 520 contains liquid metal, the molecule bonds are irregular, like a liquid, without being regular. Therefore, the metal plate 520 has a high elastic strain ratio and a high yield strength even though the metal plate 520 has a smaller modulus than a general metallic material. Therefore, the metal plate 520 may support the display 500. The metal plate 520 may prevent the occurrence of folding marks and creases in the folding area (e.g., the third area h3) when the display 500 is folded or unfolded.

In one embodiment, the metal plate 520 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 520 may include polymer. In one embodiment, the metal plate 520 may have a modulus 70 GPa or more and a yield strength 1200 MPa or higher. As an elastic strain ratio of a member for supporting the display panel 510 increases, the amount of generation of plastic deformation caused by a predetermined strain decreases. The modulus needs to be 50 GPa or more in order to reinforce the rigidity of the display panel 510. Because the metal plate 520 has a modulus of 70 GPa or more, the metal plate 520 may reinforce the rigidity of the display panel 510.

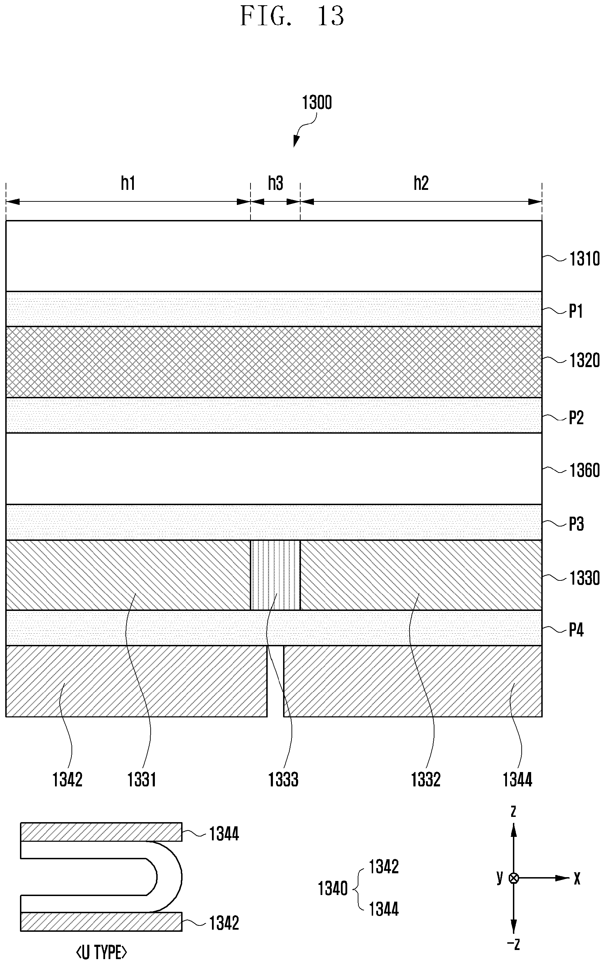

In one embodiment, specific resistance of the metal plate 520 may be about 1500 (ηΩ.m) or higher. In case that a digitizer (e.g., a digitizer 1360 in FIG. 13) is applied to the display 500, the high electrical resistance of the metal plate 520 may be advantageous in transmitting a signal of the digitizer to a digitizer pen (e.g., a stylus pen).

According to the embodiment, the first conductive plate 530 may be disposed on a lower portion of the metal plate 520 (e.g., based on the -z-axis direction). The first conductive plate 530 may be provided in the form of a metal sheet and assist in reinforcing the rigidity of the electronic device. The first conductive plate 530 may be used to block surrounding noise and disperse heat discharged from peripheral heat-radiating components. For example, the first conductive plate 530 may include at least one of Cu, Al, SUS, or CLAD (e.g., a stack member in which SUS and Al are alternately disposed). In another example, the first conductive plate 530 may include other alloy materials.

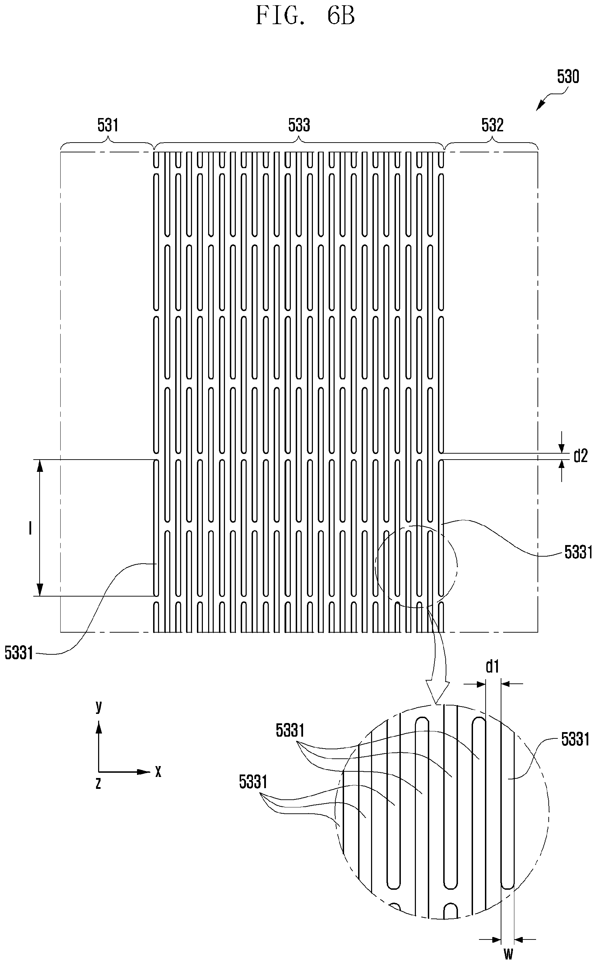

FIG. 6B is a view illustrating the first conductive plate. FIG. 6B is an enlarged view of a partial area of the first conductive plate 530.

With reference to FIGS. 6A and 6B, the first conductive plate 530 may include a first planar portion 531, a second planar portion 532, and a flexible portion 533. In one embodiment, the first planar portion 531, the second planar portion 532, and the flexible portion 533 of the first conductive plate 530 may be integrated. For example, the flexible portion 533 may be positioned to overlap the folding axis of the display panel 510.

In one embodiment, the first planar portion 531 may face (e.g., overlap based on the z-axis) the first area h1 of the display 500. In one embodiment, the second planar portion 532 may face (e.g., overlap based on the z-axis) the second area h2 of the display 500. In one embodiment, the flexible portion 533 may face (e.g., overlap based on the z-axis) the third area h3 of the display 500. In one embodiment, the first planar portion 531, the second planar portion 532, and the flexible portion 533 may be disposed to overlap the first area h1, the second area h2, and the third area h3 of the display 500 based on the z-axis.

According to the embodiment, in the unfolded state of the display 500, the first conductive plate 530 may be folded together with the display panel 510 by means of at least a part of the flexible portion 533.

According to the embodiment, in the folded state of the display 500, the first conductive plate 530 may be unfolded together with the display panel 510 by means of at least a part of the flexible portion 533.

According to the embodiment, at least a part of the flexible portion 533 may be disposed in the third area h3 of the display 500 so as to support the rear surface of the display panel 510 (e.g., the rear surface of the third area h3). In another embodiment, the third area h3 may correspond only to at least a part of the flexible portion 533. In this case, at least a part of the flexible portion 533 may be applied to an attachment area that is attached flat to the housing structures, such that at least a part of the flexible portion 533 may not be deformed when the display is bent.

According to the embodiment, the flexible portion 533 of the first conductive plate 530 may include a pattern. In one embodiment, the pattern of the flexible portion 533 may include a plurality of openings 5331 disposed to be spaced apart from one another. In any embodiment, the pattern may also include a plurality of recesses spaced apart from one another at predetermined intervals.

According to the embodiment, the openings 5331 may be formed in a plate (e.g., a SUS plate or a Cu plate) made of a metallic material by press-processing or laser-processing. According to the embodiment, the plurality of openings 5331 may be formed in a first direction (e.g., a length direction) (e.g., the y-axis direction) of the flexible portion 533 and a second direction (e.g., a width direction) (e.g., the x-axis direction) perpendicular to the first direction. According to the embodiment, the plurality of openings 5331 may each provided in the form of a long hole having an elliptical shape in the first direction (e.g., the y-axis direction) of the flexible portion 533. According to the embodiment, the plurality of openings 5331 may be disposed to be alternately coincident with one another in the second direction (e.g., the x-axis direction) of the flexible portion 533. According to the embodiment, the plurality of openings 5331 may be disposed at regular or irregular intervals in the first direction (e.g., the y-axis direction) and/or the second direction (e.g., the x-axis direction). According to the embodiment, the plurality of openings 5331 may be formed in the same shape. In another embodiment, the plurality of openings 5331 may be formed in different shapes.

According to the embodiment, the pierced lattice structure (the slit structure or the opening structure) of the flexible portion 533, which is implemented by the plurality of openings 5331, may provide an elastic force that restores the flexible portion 533 to an original state after the deformation of the flexible portion 533. The elastic force may assist in providing flexibility of the flexible portion 533.

In one embodiment, the widths and intervals of the plurality of openings 5331 (e.g., slits) of the flexible portion 533 may be variably configured on the basis of the strain ratio of the folding area (e.g., the third area h3).

In one embodiment, maximum stress of the entire flexible portion 533 may be 7.06 MPa, and a repulsive force of the entire flexible portion 533 may be 5.74e⁻³ N·mm. As the plurality of openings 5331 (e.g., slits) is formed, the maximum stress may be 3.77 MPa, and the repulsive force may be 2.05e⁻² N·mm. In case that the lattice structure is applied, the maximum stress may be 9.63 MPa, and the repulsive force may be 3.14e⁻² N mm. In case that the flexible portion 533 is provided in the form of a hole, the maximum stress may be 25.3 MPa, and the repulsive force may be 7.90e⁻²N·mm. The plurality of openings 5331 formed in the flexible portion 533 may assist in providing the flexibility of the flexible portion 533.

According to various embodiments, the flexibility of the flexible portion 533 may be determined on the basis of the intervals between the plurality of openings 5331 or the shapes or arrangement density of the plurality of openings 5331. For example, the flexibility of the flexible portion 533 may be determined on the basis of a length 1 of a unit opening. According to the embodiment, the flexibility of the flexible portion 533 may also be determined on the basis of a width w of the unit opening. According to the embodiment, the flexibility of the flexible portion 533 may be determined on the basis of a first interval d1 between the openings 5331 formed in the second direction (e.g., the x-axis direction). According to the embodiment, the flexibility of the flexible portion 533 may be determined on the basis of a second interval d2 between the openings 5331 formed in the first direction (e.g., the y-axis direction). According to the embodiment, the flexibility of the flexible portion 533 may be determined on the basis of an arrangement density of the plurality of openings 5331 disposed in the first direction (e.g., the y-axis direction) and/or the second direction (e.g., the x-axis direction).

With reference back to FIGS. 5 and 6A, in one embodiment, the second conductive plate 540 may be disposed on the lower portion of the first conductive plate 530 (e.g., based on the -z-axis direction). The second conductive plate 540 may be provided in the form of a metal sheet and assist in reinforcing the rigidity of the electronic device. The second conductive plate 540 may be used to support the first conductive plate 530 and disperse heat discharged from peripheral heat-radiating components. For example, the second conductive plate 540 may include at least one of Cu, Al, SUS, or CLAD (e.g., a stack member in which SUS and Al are alternately disposed). In another example, the second conductive plate 540 may include other alloy materials.

In the display 500 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 520 (e.g., the liquid metal plate) and the one or more conductive plates 530 and 540 are provided to support the foldable display panel 510 (e.g., the flexible display panel). Therefore, it is possible to prevent the occurrence of folding marks and creases on the display 500 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

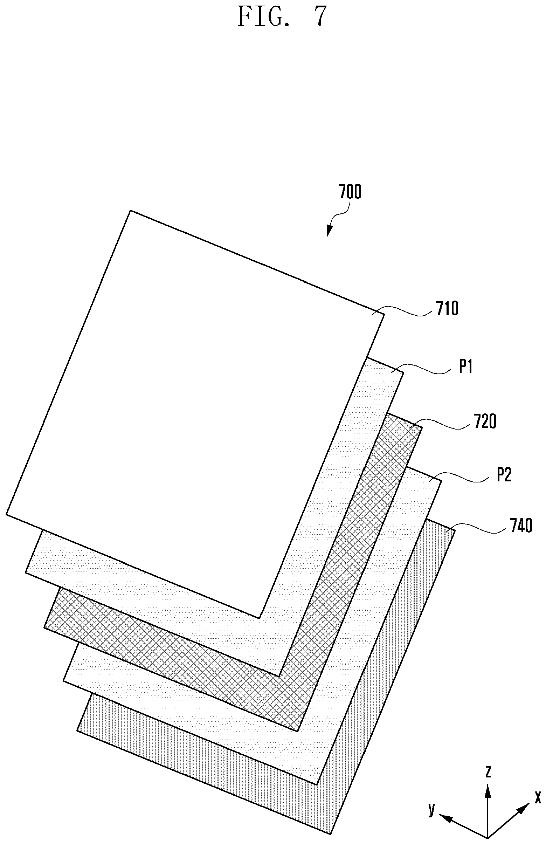

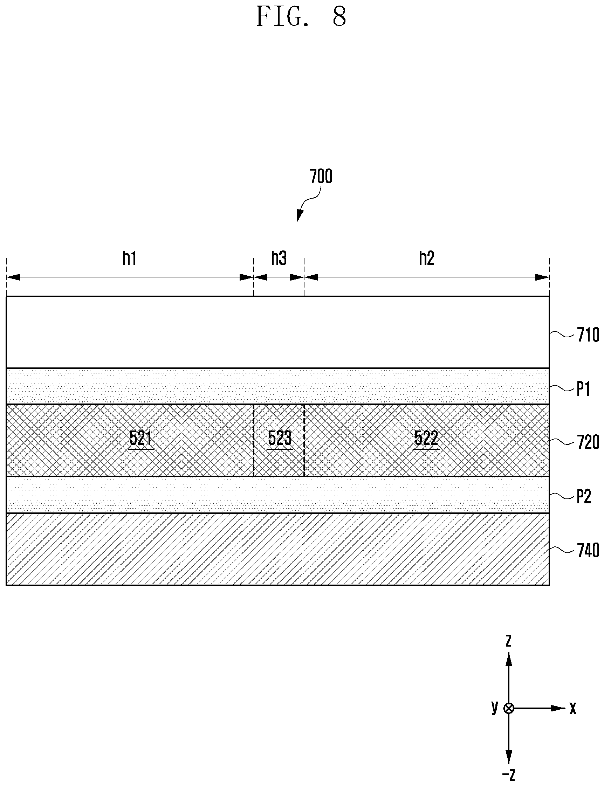

FIG. 7 is an exploded perspective view illustrating the layered structure of the display according to various embodiments of the present disclosure. FIG. 8 is a cross-sectional view illustrating the layered structure of the display according to various embodiments of the present disclosure. In the description of a display 700 illustrated in FIGS. 7 and 8, a detailed description of components identical or similar to those of the display 500 in FIGS. 5 and 6A may be omitted.

With reference to FIGS. 7 and 8, the electronic device (e.g., the electronic device 101 in FIG. 1, the electronic device 300 in FIGS. 3A and 3B, or the electronic device 400 in FIG. 4) according to various embodiments of the present disclosure may include the display 700.

According to the embodiment, the display 700 may include a display panel 710 (e.g., the display panel 510 in FIGS. 5 and 6A), a metal plate 720 (e.g., the metal plate 520 in FIGS. 5 and 6A), and a conductive plate 740 (e.g., the second conductive plate 540 in FIGS. 5 and 6A).

In one embodiment, the display 700 may include a polarizer (POL) (e.g., a polarizing film) and a window (e.g., a polyimide (PI) film or a ultra-thin glass (UTG)) sequentially disposed on an upper portion of the display panel 710 (e.g., based on the z-axis direction).

In one embodiment, the window, the POL, the display panel 710, the metal plate 720, and the conductive plate 740 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 710, the metal plate 720, and the conductive plate 740 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 700 may include a first area h1, a second area h2, and a third area h3 positioned between the first area h1 and the second area h2. For example, the first area h1 and the second area h2 may be constituted to be folded or unfolded about the third area h3.

In one embodiment, the display panel 710, the metal plate 720, and the conductive plate 740 may be attached to one another by means of the adhesive members P1 and P2. For example, the adhesive members P1 and P2 may each include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 720 may be disposed on the lower portion of the display panel 710 (e.g., based on the -z-axis direction). In one embodiment, the metal plate 720 may include liquid metal and have a thickness of about 12 um to 35 um. In one embodiment, an entire area of the metal plate 720 may have substantially the same thickness. In another embodiment, the metal plate 720 may be formed to have a plurality of thicknesses. For example, one area of the metal plate 720 may have a first thickness (e.g., about 35 um), and another area of the metal plate 720 may have a second thickness (e.g., about 12 um).

In one embodiment, the metal plate 720 may include the first planar area 521, the second planar area 522, and the folding area 523. For example, the folding area 523 may be positioned between the first planar area 521 and the second planar area 522. For example, the first planar area 521 of the metal plate 520 may face (e.g., overlap based on the z-axis) the first area h1 of the display 700. For example, the second planar area 522 of the metal plate 720 may face (e.g., overlap based on the z-axis) the second area h2 of the display 700. For example, the folding area 523 of the metal plate 720 may face (e.g., overlap based on the z-axis) the third area h3 of the display 700.

In one embodiment, the metal plate 720 may be made of a material with an elastic strain ratio of 1.5% or higher and a modulus of 70 GPa or more. In one embodiment, the metal plate 720 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 720 may include polymer. In one embodiment, the metal plate 720 may have a modulus 70 GPa or more and a yield strength 1200 MPa or higher. In one embodiment, specific resistance of the metal plate 720 may be about 1500 (nΩ.m) or higher. The metal plate 720 may reinforce the rigidity of the display panel 710 and support the display panel 710. The metal plate 720 may prevent the occurrence of folding marks and creases in the folding area (e.g., the third area h3) when the display 700 is folded or unfolded.

In the embodiment, the conductive plate 740 may be disposed on a lower portion of the metal plate 720 (e.g., based on the -z-axis direction). The conductive plate 740 may be provided in the form of a metal sheet and assist in reinforcing the rigidity of the electronic device. The conductive plate 740 may be used to support the metal plate 720 and disperse heat discharged from peripheral heat-radiating components. For example, the conductive plate 740 may include at least one of Cu, Al, SUS, or CLAD (e.g., a stack member in which SUS and Al are alternately disposed). In another example, the conductive plate 740 may include other alloy materials.

In the display 700 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 720 (e.g., the liquid metal plate) and the conductive plate 740 are provided to support the foldable display panel 710 (e.g., the flexible display panel). Therefore, it is possible to prevent the occurrence of folding marks and creases on the display 700 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

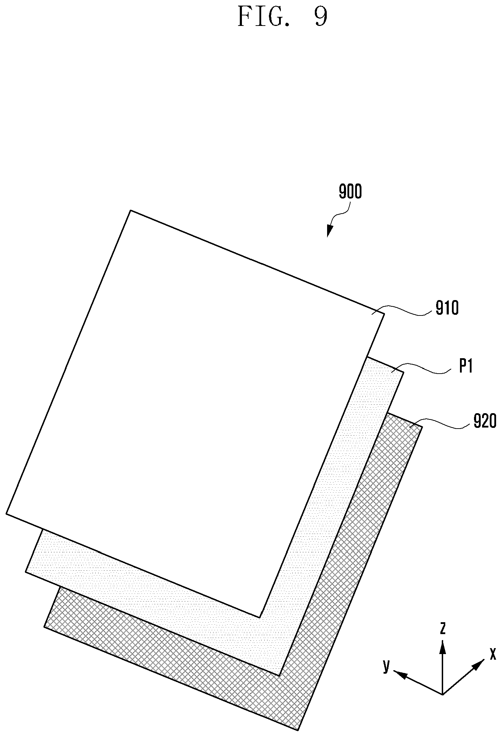

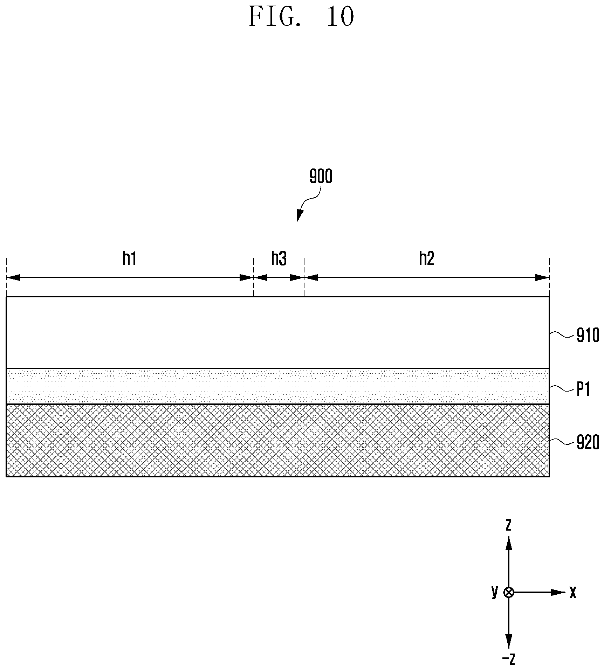

FIG. 9 is an exploded perspective view illustrating the layered structure of the display according to various embodiments of the present disclosure. FIG. 10 is a cross-sectional view illustrating the layered structure of the display according to various embodiments of the present disclosure. In the description of a display 900 illustrated in FIGS. 9 and 10, a detailed description of components identical or similar to those of the display 500 in FIGS. 5 and 6A may be omitted.

With reference to FIGS. 9 and 10, the electronic device (e.g., the electronic device 101 in FIG. 1, the electronic device 300 in FIGS. 3A and 3B, or the electronic device 400 in FIG. 4) according to various embodiments of the present disclosure may include the display 900.

According to the embodiment, the display 900 may include a display panel 910 (e.g., the display panel 510 in FIGS. 5 and 6A), and a metal plate 920 (e.g., the metal plate 520 in FIGS. 5 and 6A).

In one embodiment, the display 900 may include a polarizer (POL) (e.g., a polarizing film) and a window (e.g., a polyimide (PI) film or a ultra-thin glass (UTG)) sequentially disposed on an upper portion of the display panel 910 (e.g., based on the z-axis direction).

In one embodiment, the window, the POL, the display panel 910, and the metal plate 920 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 910, and the metal plate 920 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 900 may include a first area h1, a second area h2, and a third area h3 positioned between the first area h1 and the second area h2. For example, the first area h1 and the second area h2 may be constituted to be folded or unfolded about the third area h3.

In one embodiment, the display panel 910 and the metal plate 920 may be attached to each other by means of the adhesive member P1. For example, the adhesive member P1 may include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 920 may be disposed on the lower portion of the display panel 910 (e.g., based on the -z-axis direction). In one embodiment, the metal plate 920 may include liquid metal and have a thickness of about 12 um to 35 um. In one embodiment, an entire area of the metal plate 920 may have substantially the same thickness. In another embodiment, the metal plate 920 may be formed to have a plurality of thicknesses. For example, one area of the metal plate 920 may have a first thickness (e.g., about 35 um), and another area of the metal plate 920 may have a second thickness (e.g., about 12 um).

In one embodiment, the metal plate 920 may be made of a material with an elastic strain ratio of 1.5% or higher and a modulus of 70 GPa or more. In one embodiment, the metal plate 920 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 920 may include polymer. In one embodiment, the metal plate 920 may have a modulus 70 GPa or more and a yield strength 1200 MPa or higher. In one embodiment, specific resistance of the metal plate 920 may be about 1500 (nΩ.m) or higher. The metal plate 920 may reinforce the rigidity of the display panel 910 and support the display panel 910. The metal plate 920 may prevent the occurrence of folding marks and creases in the folding area (e.g., the third area h3) when the display 900 is folded or unfolded.

In the display 900 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 920 (e.g., the liquid metal plate) is provided to support the foldable display panel 910 (e.g., the flexible display panel). Therefore, it is possible to prevent the occurrence of folding marks and creases on the display 900 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

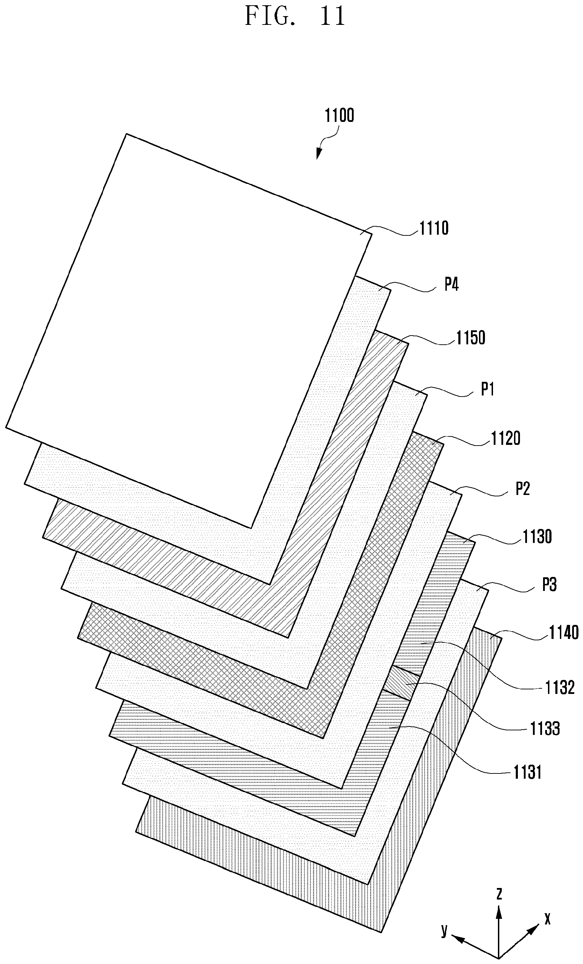

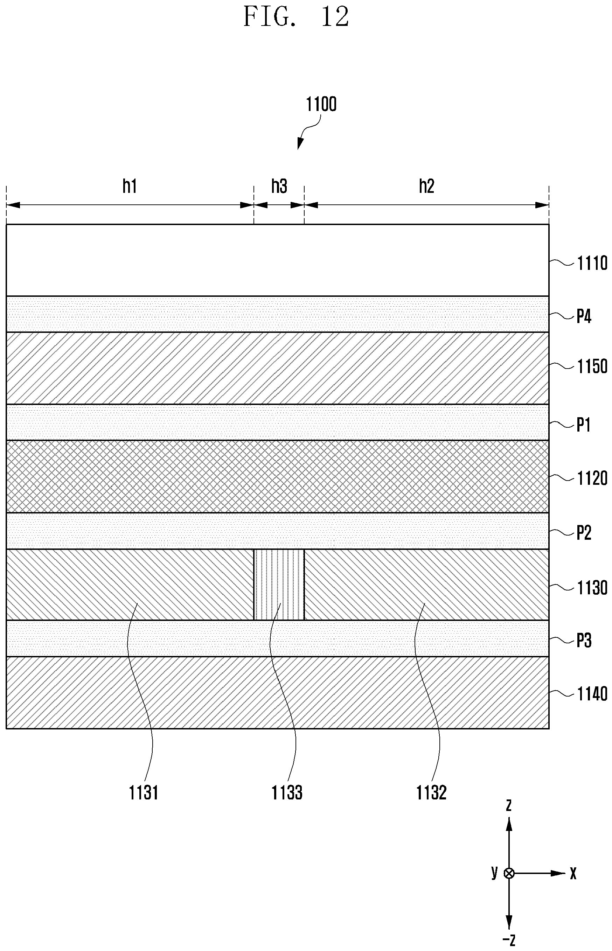

FIG. 11 is an exploded perspective view illustrating the layered structure of the display according to various embodiments of the present disclosure. FIG. 12 is a cross-sectional view illustrating the layered structure of the display according to various embodiments of the present disclosure. In the description of a display 1100 illustrated in FIGS. 11 and 12, a detailed description of components identical or similar to those of the display 500 in FIGS. 5 and 6A may be omitted.

With reference to FIGS. 11 and 12, the electronic device (e.g., the electronic device 101 in FIG. 1, the electronic device 300 in FIGS. 3A and 3B, or the electronic device 400 in FIG. 4) according to various embodiments of the present disclosure may include the display 1100.

According to the embodiment, the display 1100 may include a display panel 1110 (e.g., the display panel 510 in FIGS. 5 and 6A), a metal plate 1120 (e.g., the metal plate 520 in FIGS. 5 and 6A), a first conductive plate 1130 (e.g., the first conductive plate 530 in FIGS. 6A and 6B), a second conductive plate 1140 (e.g., the second conductive plate 540 in FIGS. 5 and 6A), and a polymer member 1150.

In one embodiment, the display 1100 may include a polarizer (POL) (e.g., a polarizing film) and a window (e.g., a polyimide (PI) film or a ultra-thin glass (UTG)) sequentially disposed on an upper portion of the display panel 1110 (e.g., based on the z-axis direction).

In one embodiment, the window, the POL, the display panel 1110, the metal plate 1120, the first conductive plate 1130, the second conductive plate 1140, and the polymer member 1150 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 1110, the metal plate 1120, the first conductive plate 1130, the second conductive plate 1140, and the polymer member 1150 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 1100 may include a first area h1, a second area h2, and a third area h3 positioned between the first area h1 and the second area h2. For example, the first area h1 and the second area h2 may be constituted to be folded or unfolded about the third area h3.

In one embodiment, the display panel 1110, the metal plate 1120, the first conductive plate 1130, the second conductive plate 1140, and the polymer member 1150 may be attached to one another by means of adhesive members P1, P2, P3, and P4. For example, the adhesive members P1, P2, P3, and P4 may each include at least one of an optical clear adhesive (OCA), a pressure sensitive adhesive (PSA), a thermally reactive bonding agent, thermoplastic polyurethane, a general bonding agent, or a double-sided tape.

According to the embodiment, the polymer member 1150 may be disposed on a lower portion of the display panel 1110 (e.g., based on the -z-axis direction). In one embodiment, a dark color (e.g., black) may be applied to the polymer member 1150, which may assist in visualizing the background when the display is turned off. In one embodiment, the polymer member 1150 may serve as a buffer member (cushion) that absorbs impact applied from the outside of the electronic device to prevent damage to the display 1100.

In one embodiment, the polymer member 1150 may include a polyimide film, a crystalline polyetheretherketone (PEEK) film, an amorphous PEEK film, and a high-stretch polyethyleneterephthalate (PET) film. For example, the polymer member 1150 may have an elastic modulus of about 1.5% or higher. For example, the polymer member 1150 may include a film stretched in two directions (e.g., in a machinery direction (MD) and a transverse direction (TD)). According to the embodiment, the polymer member 1150 may include a film more greatly stretched in one direction by using an asymmetric process method in comparison with the bidirectional polymer member 1150. For example, the polymer member may include a film stretched in a one-axis direction (e.g., in the MD direction) to provide improved elasticity and flexural resistance.

According to the embodiment, the display 1100 may include the metal plate 1120 disposed between the polymer member 1150 and the first conductive plate 1130.

According to the embodiment, the metal plate 1120 may be disposed on a lower portion of the polymer member 1150 (e.g., based on the -z-axis direction). In one embodiment, the metal plate 1120 may include liquid metal and have a thickness of about 12 um to 35 um. In one embodiment, an entire area of the metal plate 1120 may have substantially the same thickness. In another embodiment, the metal plate 1120 may be formed to have a plurality of thicknesses. For example, one area of the metal plate 1120 may have a first thickness (e.g., about 35 um), and another area of the metal plate 1120 may have a second thickness (e.g., about 12 um).

In one embodiment, the metal plate 1120 may be made of a material with an elastic strain ratio of 1.5% or higher and a modulus of 70 GPa or more. In one embodiment, the metal plate 1120 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 1120 may include polymer. In one embodiment, the metal plate 1120 may have a modulus 70 GPa or more and a yield strength 1200 MPa or higher. In one embodiment, specific resistance of the metal plate 1120 may be about 1500 (nΩ.m) or higher. The metal plate 1120 may reinforce the rigidity of the display panel 1110 and support the display panel 1110. The metal plate 1120 may prevent the occurrence of folding marks and creases in the folding area (e.g., the third area h3) when the display 1100 is folded or unfolded.

According to the embodiment, the first conductive plate 1130 may be disposed on a lower portion of the metal plate 1120 (e.g., based on the -z-axis direction). The first conductive plate 1130 may be provided in the form of a metal sheet and assist in reinforcing the rigidity of the electronic device. The first conductive plate 1130 may be used to block surrounding noise and disperse heat discharged from peripheral heat-radiating components. For example, the first conductive plate 1130 may include at least one of Cu, Al, SUS, or CLAD (e.g., a stack member in which SUS and Al are alternately disposed). In another example, the first conductive plate 1130 may include other alloy materials.

The first conductive plate 1130 may include a first planar portion 1131, a second planar portion 1132, and a flexible portion 1133. In one embodiment, the first planar portion 1131, the second planar portion 1132, and the flexible portion 1133 of the first conductive plate 1130 may be integrated.

In one embodiment, the first planar portion 1131 may face (e.g., overlap based on the z-axis) the first area h1 of the display 1100. In one embodiment, the second planar portion 1132 may face (e.g., overlap based on the z-axis) the second area h2 of the display 1100. In one embodiment, the flexible portion 1133 may face (e.g., overlap based on the z-axis) the third area h3 of the display 1100. In one embodiment, the first planar portion 1131, the second planar portion 1132, and the flexible portion 1133 may be disposed to overlap the first area h1, the second area h2, and the third area h3 of the display 1100 based on the z-axis.

According to the embodiment, in the unfolded state of the display 1100, the first conductive plate 1130 may be folded together with the display panel 1110 by means of at least a part of the flexible portion 1133.

According to the embodiment, in the folded state of the display 1100, the first conductive plate 1130 may be unfolded together with the display panel 1110 by means of at least a part of the flexible portion 1133.

According to the embodiment, at least a part of the flexible portion 1133 may be disposed in the third area h3 of the display 1100 so as to support the rear surface of the display panel 1110 (e.g., the rear surface of the third area h3). In another embodiment, the third area h3 may correspond only to at least a part of the flexible portion 1133. In this case, at least a part of the flexible portion 1133 may be applied to an attachment area that is attached flat to the housing structures, such that at least a part of the flexible portion 1133 may not be deformed when the display is bent.

In one embodiment, the second conductive plate 1140 may be disposed on a lower portion of the first conductive plate 1130 (e.g., based on the -z-axis direction). The second conductive plate 1140 may be provided in the form of a metal sheet and assist in reinforcing the rigidity of the electronic device. The second conductive plate 1140 may be used to support the first conductive plate 1130 and disperse heat discharged from peripheral heat-radiating components. For example, the second conductive plate 1140 may include at least one of Cu, Al, SUS, or CLAD (e.g., a stack member in which SUS and Al are alternately disposed). In another example, the second conductive plate 1140 may include other alloy materials.

In the display 1100 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 1120 (e.g., the liquid metal plate) and the plurality of conductive plates 1130 and 1140 are provided to support the foldable display panel 1110 (e.g., the flexible display panel). Therefore, it is possible to prevent the occurrence of folding marks and creases on the display 1100 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

FIG. 13 is a cross-sectional view illustrating the layered structure of the display according to various embodiments of the present disclosure. In the description of a display 1300 illustrated in FIG. 13, a detailed description of components identical or similar to those of the display 500 in FIGS. 5 and 6A may be omitted.

With reference to FIG. 13, the electronic device (e.g., the electronic device 101 in FIG. 1, the electronic device 300 in FIGS. 3A and 3B, or the electronic device 400 in FIG. 4) according to various embodiments of the present disclosure may include the display 1300.

According to the embodiment, the display 1300 may include a display panel 1310 (e.g., the display panel 510 in FIGS. 5 and 6A), a metal plate 1320 (e.g., the metal plate 520 in FIGS. 5 and 6A), a digitizer 1360, a first conductive plate 1330 (e.g., the first conductive plate 530 in FIGS. 6A and 6B), and a second conductive plate 1340 (e.g., the second conductive plate 540 in FIGS. 5 and 6A).

In one embodiment, the display 1300 may include a polarizer (POL) (e.g., a polarizing film) and a window (e.g., a polyimide (PI) film or a ultra-thin glass (UTG)) sequentially disposed on an upper portion of the display panel 1310 (e.g., based on the z-axis direction).

In one embodiment, the window, the POL, the display panel 1310, the metal plate 1320, the digitizer 1360, the first conductive plate 1330, and the second conductive plate 1340 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 1310, the metal plate 1320, the digitizer 1360, the first conductive plate 1330, and the second conductive plate 1340 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 1300 may include a first area h1, a second area h2, and a third area h3 positioned between the first area h1 and the second area h2. For example, the first area h1 and the second area h2 may be constituted to be folded or unfolded about the third area h3.

In one embodiment, the display panel 1310, the metal plate 1320, the digitizer 1360, the first conductive plate 1330, and the second conductive plate 1340 may be attached to one another by means of adhesive members P1, P2, P3, and P4. For example, the adhesive members P1, P2, P3, and P4 may each include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 1320 may be disposed on a lower portion of the display panel 1310 (e.g., based on the -z-axis direction).

In one embodiment, the metal plate 1320 may include liquid metal and have a thickness of about 12 um to 35 um. In one embodiment, an entire area of the metal plate 1320 may have substantially the same thickness. In another embodiment, the metal plate 1320 may be formed to have a plurality of thicknesses. For example, one area of the metal plate 1320 may have a first thickness (e.g., about 35 um), and another area of the metal plate 1320 may have a second thickness (e.g., about 12 um).

In one embodiment, the metal plate 1320 may be made of a material with an elastic strain ratio of 1.5% or higher and a modulus of 70 GPa or more. In one embodiment, the metal plate 1320 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 1320 may include polymer. In one embodiment, the metal plate 1320 may have a modulus 70 GPa or more and a yield strength 1200 MPa or higher. In one embodiment, specific resistance of the metal plate 1320 may be about 1500 (nΩ.m) or higher. The high electrical resistance of the metal plate 1320 may be advantageous in transmitting a signal of the digitizer 1360 to the digitizer pen (e.g., the stylus pen).

The metal plate 1320 may reinforce the rigidity of the display panel 1310 and support the display panel 1310. The metal plate 1320 may prevent the occurrence of folding marks and creases in the folding area (e.g., the third area h3) when the display 1300 is folded or unfolded.

According to the embodiment, the digitizer 1360 may be disposed on a lower portion of the metal plate 1320 (e.g., based on the -z-axis direction). For example, the digitizer 1360 may detect an input from an electromagnetic induction-type writing member. For example, the digitizer 1360 may be formed as a single plate to correspond to an entire area of the display panel 1310.

According to the embodiment, the first conductive plate 1330 may be disposed on a lower portion of the digitizer 1360 (e.g., based on the -z-axis direction). The first conductive plate 1330 may be provided in the form of a metal sheet and assist in reinforcing the rigidity of the electronic device. The first conductive plate 1330 may be used to block surrounding noise and disperse heat discharged from peripheral heat-radiating components. For example, the first conductive plate 1330 may include at least one of Cu, Al, SUS, or CLAD (e.g., a stack member in which SUS and Al are alternately disposed). In another example, the first conductive plate 1330 may include other alloy materials.

The first conductive plate 1330 may include a first planar portion 1331, a second planar portion 1332, and a flexible portion 1333. In one embodiment, the first planar portion 1331, the second planar portion 1332, and the flexible portion 1333 of the first conductive plate 1330 may be integrated.

In one embodiment, the first planar portion 1331 may face (e.g., overlap based on the z-axis) the first area h1 of the display 1300. In one embodiment, the second planar portion 1332 may face (e.g., overlap based on the z-axis) the second area h2 of the display 1300. In one embodiment, the flexible portion 1333 may face (e.g., overlap based on the z-axis) the third area h3 of the display 1300.

According to the embodiment, the first conductive plate 1330 may be folded or unfolded together with the display panel 1310 by means of at least a part of the flexible portion 1333.

In one embodiment, the second conductive plate 1340 may be disposed on a lower portion of the first conductive plate 1330 (e.g., based on the -z-axis direction).

In one embodiment, the second conductive plate 1340 may include a first portion 1342 and a second portion 1344. For example, the first portion 1342 may face (e.g., overlap based on the z-axis) the first area h1 of the display 1300. The second portion 1344 may face (e.g., overlap based on the z-axis) the second area h2 of the display 1300. For example, the second conductive plate 1340 may not be formed on the portion that faces (e.g., overlaps based on the z-axis) the flexible portion 1333 of the first conductive plate 1330 (e.g., the portion that faces the third area h3 of the display 1300).

In one embodiment, the first portion 1342 and the second portion 1344 of the second conductive plate 1340 may be disposed to be spaced apart from each other at a predetermined interval. For example, the first portion 1342 and the second portion 1344 of the second conductive plate 1340 may be disposed to be spaced apart from each other at a distance smaller than a width of the third area h3 of the display 1300. For example, the first portion 1342 and the second portion 1344 of the second conductive plate 1340 may be disposed to be spaced apart from each other by a width of the flexible portion 1333 of the first conductive plate 1330 or disposed to be spaced apart from each other at a distance smaller than the width of the flexible portion 1333.

In one embodiment, because the first portion 1342 and the second portion 1344 of the second conductive plate 1340 are separated, a U type may be defined when the display 1300 is folded.

In one embodiment, the second conductive plate 1340 may be provided in the form of a metal sheet and assist in reinforcing the rigidity of the electronic device. The second conductive plate 1340 may be used to support the first conductive plate 1330 and disperse heat discharged from peripheral heat-radiating components. For example, the second conductive plate 1340 may include at least one of Cu, Al, SUS, or CLAD (e.g., a stack member in which SUS and Al are alternately disposed). In another example, the second conductive plate 1340 may include other alloy materials.

In the display 1300 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 1320 (e.g., the liquid metal plate) and the plurality of conductive plates 1330 and 1340 are provided to support the foldable display panel 1310 (e.g., the flexible display panel). Therefore, it is possible to prevent the occurrence of folding marks and creases on the display 1300 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

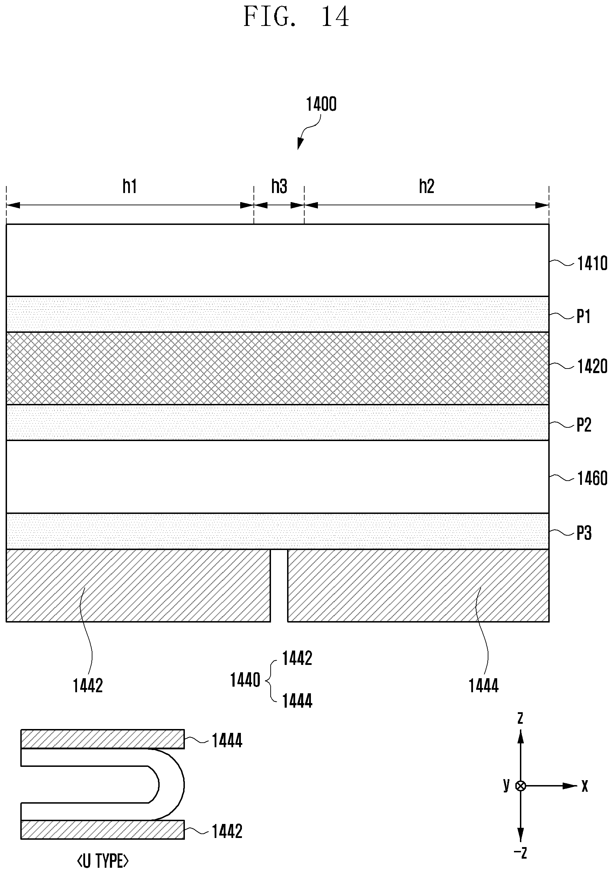

FIG. 14 is a cross-sectional view illustrating the layered structure of the display according to various embodiments of the present disclosure. In the description of a display 1400 illustrated in FIG. 14, a detailed description of components identical or similar to those of the display 1300 in FIG. 13 may be omitted.

With reference to FIG. 14, the electronic device (e.g., the electronic device 101 in FIG. 1, the electronic device 300 in FIGS. 3A and 3B, or the electronic device 400 in FIG. 4) according to various embodiments of the present disclosure may include the display 1400.

According to the embodiment, the display 1400 may include a display panel 1410 (e.g., the display panel 510 in FIGS. 5 and 6A), a metal plate 1420 (e.g., the metal plate 520 in FIGS. 5 and 6A), a digitizer 1460, and a conductive plate 1440 (e.g., the second conductive plate 540 in FIGS. 5 and 6A or the second conductive plate 1340 in FIG. 13).

In one embodiment, the display 1400 may include a polarizer (POL) (e.g., a polarizing film) and a window (e.g., a polyimide (PI) film or a ultra-thin glass (UTG)) sequentially disposed on an upper portion of the display panel 1410 (e.g., based on the z-axis direction).

In one embodiment, the window, the POL, the display panel 1410, the metal plate 1420, the digitizer 1460, and the conductive plate 1440 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 1410, the metal plate 1420, the digitizer 1460, and the conductive plate 1440 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 1400 may include a first area h1, a second area h2, and a third area h3 positioned between the first area h1 and the second area h2. For example, the first area h1 and the second area h2 may be constituted to be folded or unfolded about the third area h3.

In one embodiment, the display panel 1410, the metal plate 1420, the digitizer 1460, and the conductive plate 1440 may be attached to one another by means of the adhesive members P1, P2, and P3. For example, the adhesive members P1, P2, and P3 may each include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 1420 may be disposed on a lower portion of the display panel 1410 (e.g., based on the -z-axis direction).

In one embodiment, the metal plate 1420 may include liquid metal and have a thickness of about 12 um to 35 um. In one embodiment, an entire area of the metal plate 1420 may have substantially the same thickness. In another embodiment, the metal plate 1420 may be formed to have a plurality of thicknesses. For example, one area of the metal plate 1420 may have a first thickness (e.g., about 35 um), and another area of the metal plate 1420 may have a second thickness (e.g., about 12 um).

In one embodiment, the metal plate 1420 may be made of a material with an elastic strain ratio of 1.5% or higher and a modulus of 70 GPa or more. In one embodiment, the metal plate 1420 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 1420 may include polymer. In one embodiment, the metal plate 1420 may have a modulus 70 GPa or more and a yield strength 1200 MPa or higher. In one embodiment, specific resistance of the metal plate 1420 may be about 1500 (nΩ.m) or higher. The high electrical resistance of the metal plate 1420 may be advantageous in transmitting a signal of the digitizer 1460 to the digitizer pen (e.g., the stylus pen).

The metal plate 1420 may reinforce the rigidity of the display panel 1410 and support the display panel 1410. The metal plate 1420 may prevent the occurrence of folding marks and creases in the folding area (e.g., the third area h3) when the display 1400 is folded or unfolded.

According to the embodiment, the digitizer 1460 may be disposed on a lower portion of the metal plate 1420 (e.g., based on the -z-axis direction). For example, the digitizer 1460 may detect an input from the electromagnetic induction-type writing member. For example, the digitizer 1460 may be formed as a single plate to correspond to an entire area of the display panel 1410.

In one embodiment, the conductive plate 1440 may be disposed on a lower portion of the digitizer 1460 (e.g., based on the -z-axis direction).

In one embodiment, the conductive plate 1440 may include a first portion 1442 and a second portion 1444. For example, the first portion 1442 may face (e.g., overlap based on the z-axis) the first area h1 of the display 1400. The second portion 1444 may face (e.g., overlap based on the z-axis) the second area h2 of the display 1400. For example, the conductive plate 1440 may not be formed on the portion that faces (e.g., overlaps based on the z-axis) the third area h3 of the display 1400.

In one embodiment, the first portion 1442 and the second portion 1444 of the second conductive plate 1440 may be disposed to be spaced apart from each other at a predetermined interval. For example, the first portion 1442 and the second portion 1444 of the second conductive plate 1440 may be disposed to be spaced apart from each other at a distance smaller than a width of the third area h3 of the display 1400.

In one embodiment, because the first portion 1442 and the second portion 1444 of the conductive plate 1440 are separated, a U type may be defined when the display 1400 is folded.

In one embodiment, the conductive plate 1440 may be provided in the form of a metal sheet and assist in reinforcing the rigidity of the electronic device. The conductive plate 1440 may be used to support the digitizer 1460 and disperse heat discharged from peripheral heat-radiating components. For example, the conductive plate 1440 may include at least one of Cu, Al, SUS, or CLAD (e.g., a stack member in which SUS and Al are alternately disposed). In another example, the conductive plate 1440 may include other alloy materials.

In the display 1400 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 1420 (e.g., the liquid metal plate) and the conductive plate 1440 are provided to support the foldable display panel 1410 (e.g., the flexible display panel). Therefore, it is possible to prevent the occurrence of folding marks and creases on the display 1400 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

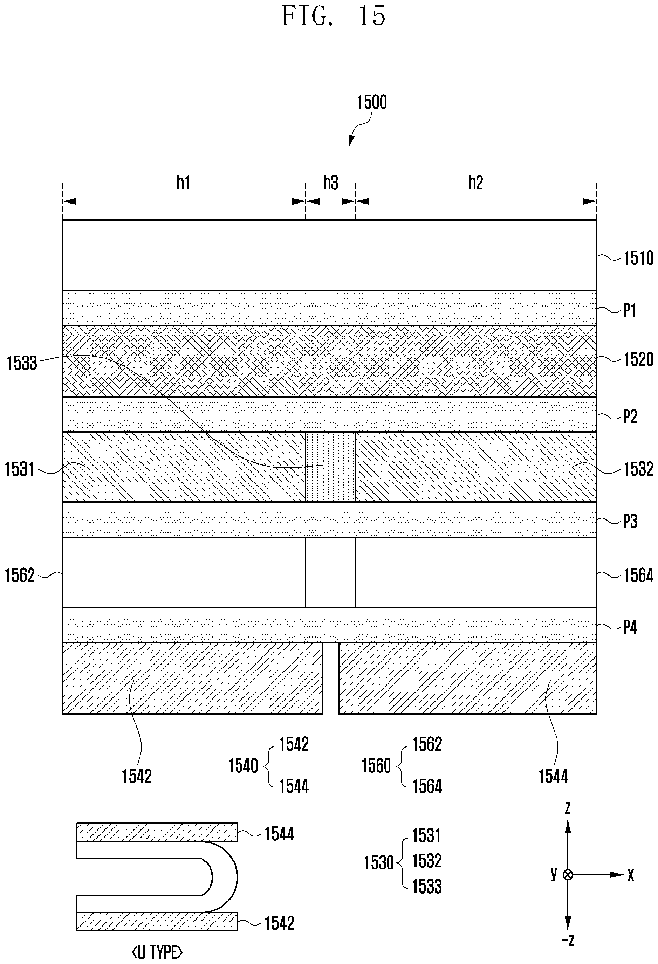

FIG. 15 is a cross-sectional view illustrating the layered structure of the display according to various embodiments of the present disclosure. In the description of a display 1500 illustrated in FIG. 15, a detailed description of components identical or similar to those of the display 1300 in FIG. 13 and/or the display 1400 in FIG. 14 may be omitted.

With reference to FIG. 15, the electronic device (e.g., the electronic device 101 in FIG. 1, the electronic device 300 in FIGS. 3A and 3B, or the electronic device 400 in FIG. 4) according to various embodiments of the present disclosure may include the display 1500.

According to the embodiment, the display 1500 may include a display panel 1510 (e.g., the display panel 510 in FIGS. 5 and 6A), a metal plate 1520 (e.g., the metal plate 520 in FIGS. 5 and 6A), a first plate 1530 (e.g., the first conductive plate 530 in FIGS. 6A and 6B), a digitizer 1560, and a second plate 1540 (e.g., the second conductive plate 540 in FIGS. 5 and 6A).

In one embodiment, the display 1500 may include a polarizer (POL) (e.g., a polarizing film) and a window (e.g., a polyimide (PI) film or a ultra-thin glass (UTG)) sequentially disposed on an upper portion of the display panel 1510 (e.g., based on the z-axis direction).

In one embodiment, the window, the POL, the display panel 1510, the metal plate 1520, the first plate 1530, the digitizer 1560, and the second plate 1540 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 1510, the metal plate 1520, the first plate 1530, the digitizer 1560, and the second plate 1540 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 1500 may include a first area h1, a second area h2, and a third area h3 positioned between the first area h1 and the second area h2. For example, the first area h1 and the second area h2 may be constituted to be folded or unfolded about the third area h3.

In one embodiment, the display panel 1510, the metal plate 1520, the first plate 1530, the digitizer 1560, and the second plate 1540 may be attached to one another by means of adhesive members P1, P2, P3, and P4. For example, the adhesive members P1, P2, P3, and P4 may each include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 1520 may be disposed on a lower portion of the display panel 1510 (e.g., based on the -z-axis direction).

In one embodiment, the metal plate 1520 may include liquid metal and have a thickness of about 12 um to 35 um. In one embodiment, an entire area of the metal plate 1520 may have substantially the same thickness. In another embodiment, the metal plate 1520 may be formed to have a plurality of thicknesses. For example, one area of the metal plate 1520 may have a first thickness (e.g., about 35 um), and another area of the metal plate 1520 may have a second thickness (e.g., about 12 um).

In one embodiment, the metal plate 1520 may be made of a material with an elastic strain ratio of 1.5% or higher and a modulus of 70 GPa or more. In one embodiment, the metal plate 1520 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 1520 may include polymer. In one embodiment, the metal plate 1520 may have a modulus 70 GPa or more and a yield strength 1200 MPa or higher. In one embodiment, specific resistance of the metal plate 1520 may be about 1500 (nΩ.m) or higher. The high electrical resistance of the metal plate 1520 may be advantageous in transmitting a signal of the digitizer 1560 to the digitizer pen (e.g., the stylus pen).

The metal plate 1520 may reinforce the rigidity of the display panel 1510 and support the display panel 1510. The metal plate 1520 may prevent the occurrence of folding marks and creases in the folding area (e.g., the third area h3) when the display 1500 is folded or unfolded.

According to the embodiment, the first plate 1530 may be disposed on a lower portion of the metal plate 1520 (e.g., based on the -z-axis direction).

In one embodiment, the first plate 1530 may be made of a non-electrically conductive material (e.g., carbon fiber reinforced plastics (CFRP)), and the first plate 1530 may assist in reinforcing the rigidity of the electronic device and be used to block surrounding noise.

In another embodiment, the first plate 1530 may be provided in the form of a metal sheet and assist in reinforcing the rigidity of the electronic device. The first plate 1530 may be used to block surrounding noise and disperse heat discharged from peripheral heat-radiating components. For example, the first plate 1530 may include at least one of Cu, Al, SUS, or CLAD (e.g., a stack member in which SUS and Al are alternately disposed). In another example, the first plate 1530 may include other alloy materials.

The first plate 1530 may include a first planar portion 1531, a second planar portion 1532, and a flexible portion 1533. In one embodiment, the first planar portion 1531, the second planar portion 1532, and the flexible portion 1533 of the first plate 1530 may be integrated.

In one embodiment, the first planar portion 1531 may face (e.g., overlap based on the z-axis) the first area h1 of the display 1500. In one embodiment, the second planar portion 1532 may face (e.g., overlap based on the z-axis) the second area h2 of the display 1500. In one embodiment, the flexible portion 1533 may face (e.g., overlap based on the z-axis) the third area h3 of the display 1500.

According to the embodiment, the first plate 1530 may be folded or unfolded together with the display panel 1510 by means of at least a part of the flexible portion 1533.

In one embodiment, the digitizer 1560 may be disposed on a lower portion of the first plate 1530 (e.g., based on the -z-axis direction). For example, the digitizer 1560 may detect an input from the electromagnetic induction-type writing member. For example, the digitizer 1560 may include a first digitizer 1562 and a second digitizer 1564. For example, the first digitizer 1562 and the second digitizer 1564 may be disposed to be spaced apart from each other at a distance smaller than a width of the third area h3 of the display 1500. For example, the first digitizer 1562 and the second digitizer 1564 may be disposed to be spaced apart from each other by a width of the flexible portion 1533 of the first plate 1530 or disposed to be spaced apart from each other at a distance smaller than the width of the flexible portion 1533.

For example, the first digitizer 1562 may be disposed to face the first area h1 of the display 1500. The second digitizer 1564 may be disposed to face the second area h2 of the display 1500. For example, the digitizer 1560 may not be formed on the portion that faces the flexible portion 1533 of the first plate 1530 (e.g., the portion that faces the third area h3 of the display 1500).

In one embodiment, the second plate 1540 may be disposed on a lower portion of the digitizer 1560 (e.g., based on the -z-axis direction). In one embodiment, the second plate 1540 may include a first portion 1542 and a second portion 1544. For example, the first portion 1542 may face (e.g., overlap based on the z-axis) the first area h1 of the display 1500. The second portion 1544 may face (e.g., overlap based on the z-axis) the second area h2 of the display 1500. For example, the second plate 1540 may not be formed on the portion that faces (e.g., overlaps based on the z-axis) the flexible portion 1533 of the first plate 1530 (e.g., the portion that faces the third area h3 of the display 1500).

In one embodiment, the first portion 1542 and the second portion 1544 of the second plate 1540 may be disposed to be spaced apart from each other at a predetermined interval. For example, the first portion 1542 and the second portion 1544 of the second plate 1540 may be disposed to be spaced apart from each other at a distance smaller than a width of the third area h3 of the display 1500. For example, the first portion 1542 and the second portion 1544 of the second plate 1540 may be disposed to be spaced apart from each other by a width of the flexible portion 1533 of the first plate 1530 or disposed to be spaced apart from each other at a distance smaller than the width of the flexible portion 1533.

In one embodiment, because the first portion 1542 and the second portion 1544 of the second plate 1540 are separated, a U type may be defined when the display 1500 is folded.

In one embodiment, the second plate 1540 may be provided in the form of a metal sheet and assist in reinforcing the rigidity of the electronic device. The second plate 1540 may be used to support the digitizer 1560 and disperse heat discharged from peripheral heat-radiating components. For example, the second plate 1540 may include at least one of Cu, Al, SUS, or CLAD (e.g., a stack member in which SUS and Al are alternately disposed). In another example, the second plate 1540 may include other alloy materials.

In another embodiment, the second plate 1540 may be made of a non-electrically conductive material (e.g., carbon fiber reinforced plastics (CFRP)), and the second plate 1540 may assist in reinforcing the rigidity of the electronic device and be used to support the digitizer 1560.

In the display 1500 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 1520 (e.g., the liquid metal plate) and the plurality of plates 1530 and 1540 are provided to support the foldable display panel 1510 (e.g., the flexible display panel). Therefore, it is possible to prevent the occurrence of folding marks and creases on the display 1500 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

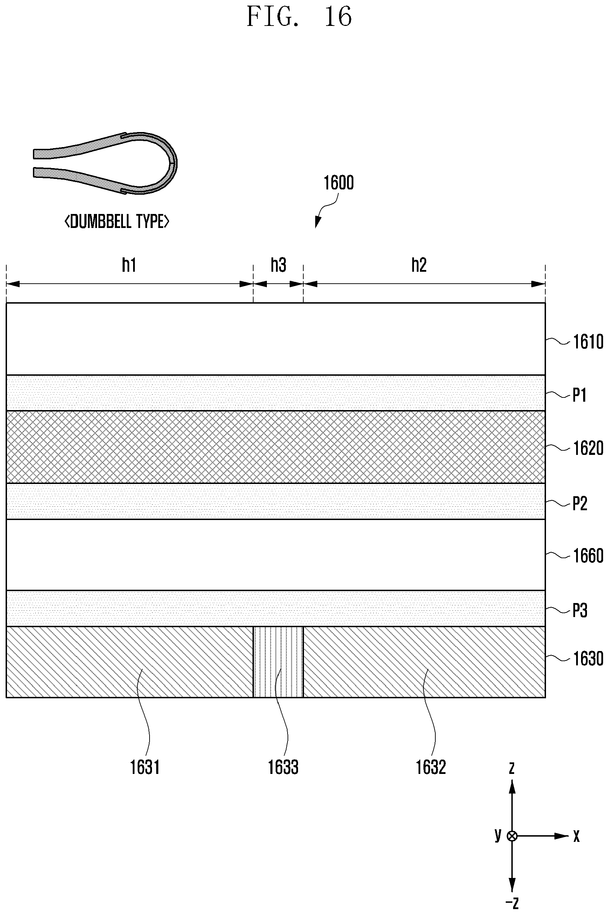

FIG. 16 is a cross-sectional view illustrating the layered structure of the display according to various embodiments of the present disclosure. In the description of a display 1600 illustrated in FIG. 16, a detailed description of components identical or similar to those of the display 500 in FIGS. 5 and 6A may be omitted.

With reference to FIG. 16, the electronic device (e.g., the electronic device 101 in FIG. 1, the electronic device 300 in FIGS. 3A and 3B, or the electronic device 400 in FIG. 4) according to various embodiments of the present disclosure may include the display 1600.

According to the embodiment, the display 1600 may include a display panel 1610 (e.g., the display panel 510 in FIGS. 5 and 6A), a metal plate 1620 (e.g., the metal plate 520 in FIGS. 5 and 6A), a digitizer 1660, and a conductive plate 1630 (e.g., the first conductive plate 530 in FIGS. 6A and 6B).

In one embodiment, the display 1600 may include a polarizer (POL) (e.g., a polarizing film) and a window (e.g., a polyimide (PI) film or a ultra-thin glass (UTG)) sequentially disposed on an upper portion of the display panel 1610 (e.g., based on the z-axis direction).

In one embodiment, the window, the POL, the display panel 1610, the metal plate 1620, the digitizer 1660, and the conductive plate 1630 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 1610, the metal plate 1620, the digitizer 1660, and the conductive plate 1630 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 1600 may include a first area h1, a second area h2, and a third area h3 positioned between the first area h1 and the second area h2. For example, the first area h1 and the second area h2 may be constituted to be folded or unfolded about the third area h3.

In one embodiment, the display panel 1610, the metal plate 1620, the digitizer 1660, and the conductive plate 1630 may be attached to one another by means of the adhesive members P1, P2, and P3. For example, the adhesive members P1, P2, and P3 may each include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 1620 may be disposed on a lower portion of the display panel 1610 (e.g., based on the -z-axis direction).

In one embodiment, the metal plate 1620 may include liquid metal and have a thickness of about 12 um to 35 um. In one embodiment, an entire area of the metal plate 1620 may have substantially the same thickness. In another embodiment, the metal plate 1620 may be formed to have a plurality of thicknesses. For example, one area of the metal plate 1620 may have a first thickness (e.g., about 35 um), and another area of the metal plate 1620 may have a second thickness (e.g., about 12 um).

In one embodiment, the metal plate 1620 may be made of a material with an elastic strain ratio of 1.5% or higher and a modulus of 70 GPa or more. In one embodiment, the metal plate 1620 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 1620 may include polymer. In one embodiment, the metal plate 1620 may have a modulus 70 GPa or more and a yield strength 1200 MPa or higher. In one embodiment, specific resistance of the metal plate 1620 may be about 1500 (nΩ.m) or higher. The high electrical resistance of the metal plate 1620 may be advantageous in transmitting a signal of the digitizer 1660 to the digitizer pen (e.g., the stylus pen).

The metal plate 1620 may reinforce the rigidity of the display panel 1610 and support the display panel 1610. The metal plate 1620 may prevent the occurrence of folding marks and creases in the folding area (e.g., the third area h3) when the display 1600 is folded or unfolded.

According to the embodiment, the digitizer 1660 may be disposed on a lower portion of the metal plate 1620 (e.g., based on the -z-axis direction). For example, the digitizer 1660 may detect an input from the electromagnetic induction-type writing member. For example, the digitizer 1660 may be formed as a single plate to correspond to an entire area of the display panel 1610.

According to the embodiment, the conductive plate 1630 may be disposed on a lower portion of the digitizer 1660 (e.g., based on the -z-axis direction). The conductive plate 1630 may be provided in the form of a metal sheet and assist in reinforcing the rigidity of the electronic device. The conductive plate 1630 may be used to block surrounding noise and disperse heat discharged from peripheral heat-radiating components. For example, the conductive plate 1630 may include at least one of Cu, Al, SUS, or CLAD (e.g., a stack member in which SUS and Al are alternately disposed). In another example, the conductive plate 1630 may include other alloy materials.

The conductive plate 1630 may include a first planar portion 1631, a second planar portion 1632, and a flexible portion 1633. In one embodiment, the first planar portion 1631, the second planar portion 1632, and the flexible portion 1633 of the conductive plate 1630 may be integrated.

In one embodiment, the first planar portion 1631 may face (e.g., overlap based on the z-axis) the first area h1 of the display 1600. In one embodiment, the second planar portion 1632 may face (e.g., overlap based on the z-axis) the second area h2 of the display 1600. In one embodiment, the flexible portion 1633 may face (e.g., overlap based on the z-axis) the third area h3 of the display 1600.

According to the embodiment, the conductive plate 1630 may be folded or unfolded together with the display panel 1610 by means of at least a part of the flexible portion 1633.

In one embodiment, a dumbbell type may be defined when the display 1600 is folded.

In the display 1600 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 1620 (e.g., the liquid metal plate) and the conductive plate 1630 are provided to support the foldable display panel 1610 (e.g., the flexible display panel). Therefore, it is possible to prevent the occurrence of folding marks and creases on the display 1600 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

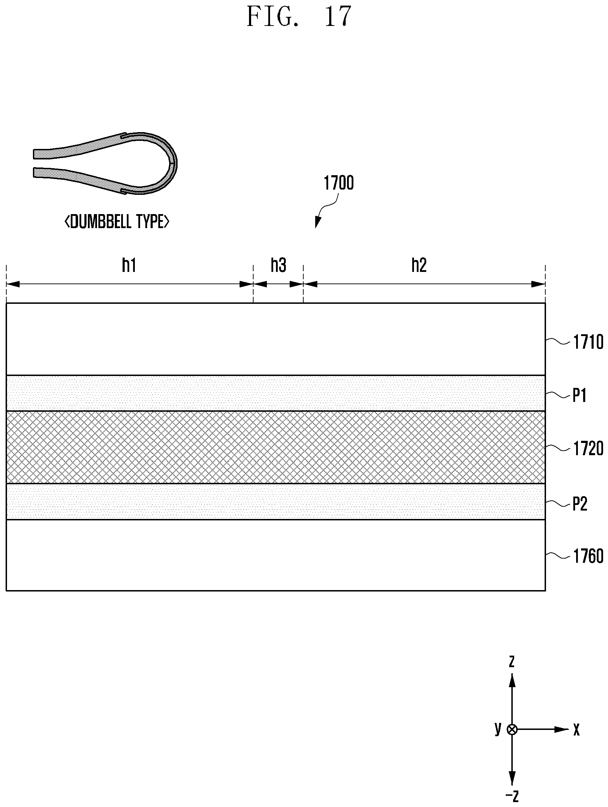

FIG. 17 is a cross-sectional view illustrating the layered structure of the display according to various embodiments of the present disclosure. In the description of a display 1700 illustrated in FIG. 17, a detailed description of components identical or similar to those of the display 500 in FIGS. 5 and 6A may be omitted.

With reference to FIG. 17, the electronic device (e.g., the electronic device 101 in FIG. 1, the electronic device 300 in FIGS. 3A and 3B, or the electronic device 400 in FIG. 4) according to various embodiments of the present disclosure may include the display 1700.

According to the embodiment, the display 1700 may include a display panel 1710 (e.g., the display panel 510 in FIGS. 5 and 6A), a metal plate 1720 (e.g., the metal plate 520 in FIGS. 5 and 6A), and a digitizer 1760.

In one embodiment, the display 1700 may include a polarizer (POL) (e.g., a polarizing film) and a window (e.g., a polyimide (PI) film or a ultra-thin glass (UTG)) sequentially disposed on an upper portion of the display panel 1710 (e.g., based on the z-axis direction).

In one embodiment, the window, the POL, the display panel 1710, the metal plate 1720, and the digitizer 1760 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 1710, the metal plate 1720, and the digitizer 1760 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 1700 may include a first area h1, a second area h2, and a third area h3 positioned between the first area h1 and the second area h2. For example, the first area h1 and the second area h2 may be constituted to be folded or unfolded about the third area h3.

In one embodiment, the display panel 1710, the metal plate 1720, and the digitizer 1760 may be attached to one another by means of the adhesive members P1 and P2. For example, the adhesive members P1 and P2 may each include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 1720 may be disposed on a lower portion of the display panel 1710 (e.g., based on the -z-axis direction).

In one embodiment, the metal plate 1720 may include liquid metal and have a thickness of about 12 um to 35 um. In one embodiment, an entire area of the metal plate 1720 may have substantially the same thickness. In another embodiment, the metal plate 1720 may be formed to have a plurality of thicknesses. For example, one area of the metal plate 1720 may have a first thickness (e.g., about 35 um), and another area of the metal plate 1720 may have a second thickness (e.g., about 12 um).

In one embodiment, the metal plate 1720 may be made of a material with an elastic strain ratio of 1.5% or higher and a modulus of 70 GPa or more. In one embodiment, the metal plate 1720 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 1720 may include polymer. In one embodiment, the metal plate 1720 may have a modulus 70 GPa or more and a yield strength 1200 MPa or higher. In one embodiment, specific resistance of the metal plate 1720 may be about 1500 (nΩ.m) or higher. The high electrical resistance of the metal plate 1720 may be advantageous in transmitting a signal of the digitizer 1760 to the digitizer pen (e.g., the stylus pen).

The metal plate 1720 may reinforce the rigidity of the display panel 1710 and support the display panel 1710. The metal plate 1720 may prevent the occurrence of folding marks and creases in the folding area (e.g., the third area h3) when the display 1700 is folded or unfolded.

According to the embodiment, the digitizer 1760 may be disposed on a lower portion of the metal plate 1720 (e.g., based on the -z-axis direction). For example, the digitizer 1760 may detect an input from the electromagnetic induction-type writing member. For example, the digitizer 1760 may be formed as a single plate to correspond to an entire area of the display panel 1710.

In one embodiment, a dumbbell type may be defined when the display 1700 is folded.

In the display 1700 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 1720 (e.g., the liquid metal plate) is provided to support the foldable display panel 1710 (e.g., the flexible display panel). Therefore, it is possible to prevent the occurrence of folding marks and creases on the display 1700 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

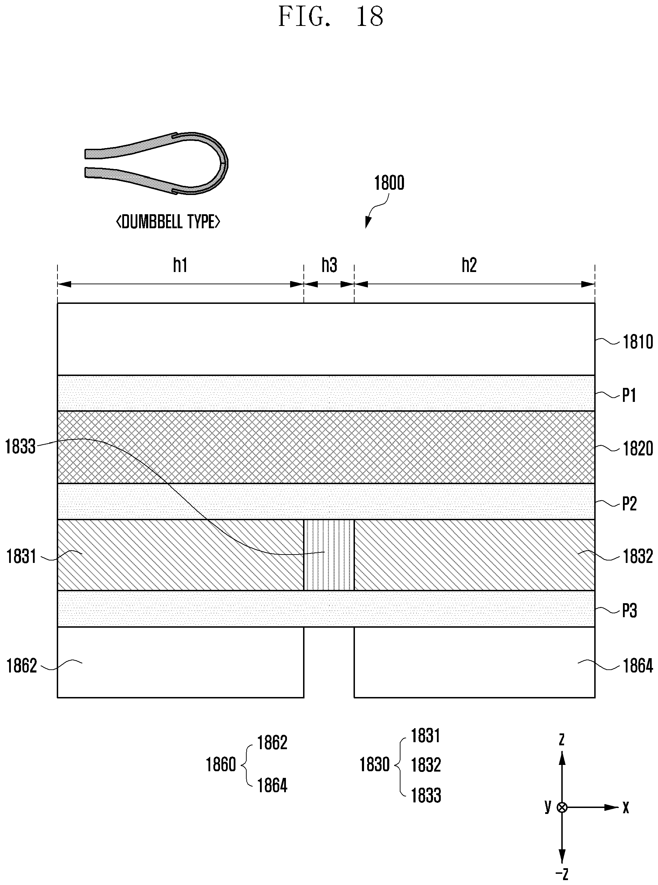

FIG. 18 is a cross-sectional view illustrating the layered structure of the display according to various embodiments of the present disclosure. In the description of a display 1800 illustrated in FIG. 18, a detailed description of components identical or similar to those of the display 500 in FIGS. 5 and 6A may be omitted.

With reference to FIG. 18, the electronic device (e.g., the electronic device 101 in FIG. 1, the electronic device 300 in FIGS. 3A and 3B, or the electronic device 400 in FIG. 4) according to various embodiments of the present disclosure may include the display 1800.

According to the embodiment, the display 1800 may include a display panel 1810 (e.g., the display panel 510 in FIGS. 5 and 6A), a metal plate 1820 (e.g., the metal plate 520 in FIGS. 5 and 6A), a first plate 1830 (e.g., FIG. 159] the first plate 1530), and a digitizer 1860.

In one embodiment, the display 1800 may include a polarizer (POL) (e.g., a polarizing film) and a window (e.g., a polyimide (PI) film or a ultra-thin glass (UTG)) sequentially disposed on an upper portion of the display panel 1810 (e.g., based on the z-axis direction).

In one embodiment, the window, the POL, the display panel 1810, the metal plate 1820, the first plate 1830, and the digitizer 1860 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 1810, the metal plate 1820, the first plate 1830, and the digitizer 1860 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 1800 may include a first area h1, a second area h2, and a third area h3 positioned between the first area h1 and the second area h2. For example, the first area h1 and the second area h2 may be constituted to be folded or unfolded about the third area h3.

In one embodiment, the display panel 1810, the metal plate 1820, the first plate 1830, and the digitizer 1860 may be attached to one another by means of the adhesive members P1, P2, and P3. For example, the adhesive members P1, P2, and P3 may each include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 1820 may be disposed on a lower portion of the display panel 1810 (e.g., based on the -z-axis direction).

In one embodiment, the metal plate 1820 may include liquid metal and have a thickness of about 12 um to 35 um. In one embodiment, an entire area of the metal plate 1820 may have substantially the same thickness. In another embodiment, the metal plate 1820 may be formed to have a plurality of thicknesses. For example, one area of the metal plate 1820 may have a first thickness (e.g., about 35 um), and another area of the metal plate 1820 may have a second thickness (e.g., about 12 um).

In one embodiment, the metal plate 1820 may be made of a material with an elastic strain ratio of 1.5% or higher and a modulus of 70 GPa or more. In one embodiment, the metal plate 1820 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 1820 may include polymer. In one embodiment, the metal plate 1820 may have a modulus 70 GPa or more and a yield strength 1200 MPa or higher. In one embodiment, specific resistance of the metal plate 1820 may be about 1500 (nΩ.m) or higher. The high electrical resistance of the metal plate 1820 may be advantageous in transmitting a signal of the digitizer 1860 to the digitizer pen (e.g., the stylus pen).

The metal plate 1820 may reinforce the rigidity of the display panel 1810 and support the display panel 1810. The metal plate 1820 may prevent the occurrence of folding marks and creases in the folding area (e.g., the third area h3) when the display 1800 is folded or unfolded.

According to the embodiment, the first plate 1830 may be disposed on a lower portion of the metal plate 1820 (e.g., based on the -z-axis direction). In one embodiment, the first plate 1830 may be made of a non-electrically conductive material (e.g., carbon fiber reinforced plastics (CFRP)), and the first plate 1830 may assist in reinforcing the rigidity of the electronic device and be used to block surrounding noise.

In another embodiment, the first plate 1830 may be provided in the form of a metal sheet and assist in reinforcing the rigidity of the electronic device. The first plate 1830 may be used to block surrounding noise and disperse heat discharged from peripheral heat-radiating components. For example, the first plate 1830 may include at least one of Cu, Al, SUS, or CLAD (e.g., a stack member in which SUS and Al are alternately disposed). In another example, the first plate 1830 may include other alloy materials.

The first plate 1830 may include a first planar portion 1831, a second planar portion 1832, and a flexible portion 1833. In one embodiment, the first planar portion 1831, the second planar portion 1832, and the flexible portion 1833 of the first plate 1830 may be integrated.

In one embodiment, the first planar portion 1831 may face (e.g., overlap based on the z-axis) the first area h1 of the display 1800. In one embodiment, the second planar portion 1832 may face (e.g., overlap based on the z-axis) the second area h2 of the display 1800. In one embodiment, the flexible portion 1833 may face (e.g., overlap based on the z-axis) the third area h3 of the display 1800.

According to the embodiment, the first plate 1830 may be folded or unfolded together with the display panel 1810 by means of at least a part of the flexible portion 1833.

In one embodiment, the digitizer 1860 may be disposed on a lower portion of the first plate 1830 (e.g., based on the -z-axis direction). For example, the digitizer 1860 may detect an input from the electromagnetic induction-type writing member. For example, the digitizer 1860 may include a first digitizer 1862 and a second digitizer 1864. For example, the first digitizer 1862 and the second digitizer 1864 may be disposed to be spaced apart from each other at a distance smaller than a width of the third area h3 of the display 1800. For example, the first digitizer 1862 and the second digitizer 1864 may be disposed to be spaced apart from each other by a width of the flexible portion 1833 of the first plate 1830 or disposed to be spaced apart from each other at a distance smaller than the width of the flexible portion 1833.

For example, the first digitizer 1862 may be disposed to face the first area h1 of the display 1800. The second digitizer 1864 may be disposed to face the second area h2 of the display 1800. For example, the digitizer 1860 may not be formed on the portion that faces the flexible portion 1833 of the first plate 1830 (e.g., the portion that faces the third area h3 of the display 1800).

In one embodiment, a dumbbell type may be defined when the display 1800 is folded.

In the display 1800 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 1820 (e.g., the liquid metal plate) and the first plate 1830 are provided to support the foldable display panel 1810 (e.g., the flexible display panel). Therefore, it is possible to prevent the occurrence of folding marks and creases on the display 1800 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

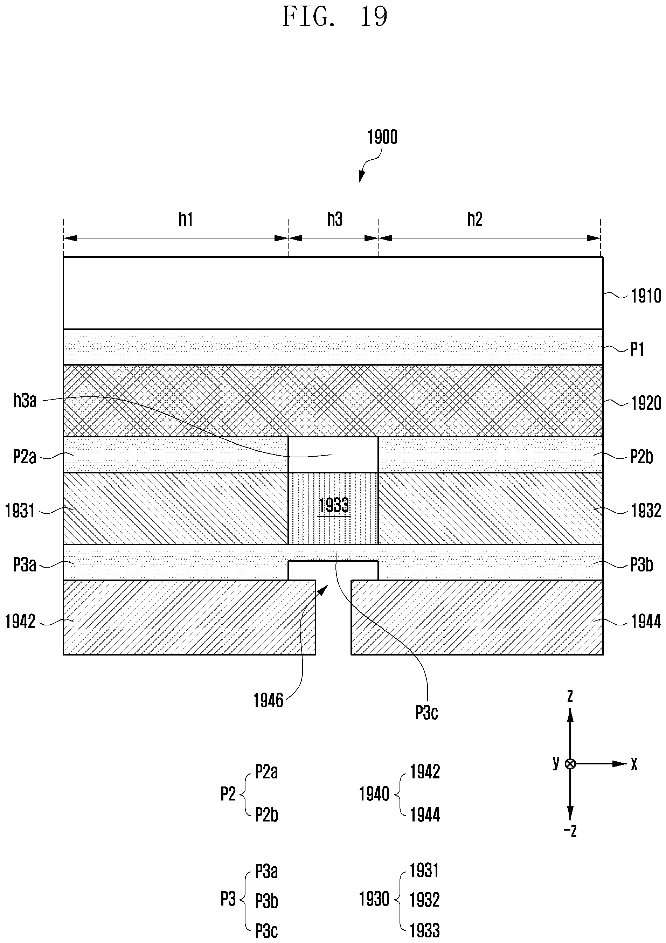

FIG. 19 is a cross-sectional view illustrating the layered structure of the display according to various embodiments of the present disclosure. In the description of a display 1900 illustrated in FIG. 19, a detailed description of components identical or similar to those of the display 500 in FIGS. 5 and 6A may be omitted.

With reference to FIG. 19, the electronic device (e.g., the electronic device 101 in FIG. 1, the electronic device 300 in FIGS. 3A and 3B, or the electronic device 400 in FIG. 4) according to various embodiments of the present disclosure may include the display 1900.

According to the embodiment, the display 1900 may include a display panel 1910 (e.g., the display panel 510 in FIGS. 5 and 6A), a metal plate 1920 (e.g., the metal plate 520 in FIGS. 5 and 6A), a first conductive plate 1930 (e.g., the first conductive plate 530 in FIGS. 6A and 6B), and a second conductive plate 1940 (e.g., the second conductive plate 540 in FIGS. 5 and 6A).

In one embodiment, the display 1900 may include a polarizer (POL) (e.g., a polarizing film) and a window (e.g., a polyimide (PI) film or a ultra-thin glass (UTG)) sequentially disposed on an upper portion of the display panel 1910 (e.g., based on the z-axis direction).

In one embodiment, the window, the POL, the display panel 1910, the metal plate 1920, the first conductive plate 1930, and the second conductive plate 1940 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 1910, the metal plate 1920, the first conductive plate 1930, and the second conductive plate 1940 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 1900 may include a first area h1, a second area h2, and a third area h3 positioned between the first area h1 and the second area h2. For example, the first area h1 and the second area h2 may be constituted to be folded or unfolded about the third area h3.

According to the embodiment, the metal plate 1920 may be disposed on a lower portion of the display panel 1910 (e.g., based on the -z-axis direction).

In one embodiment, the metal plate 1920 may include liquid metal and have a thickness of about 12 um to 35 um. In one embodiment, an entire area of the metal plate 1920 may have substantially the same thickness. In another embodiment, the metal plate 1920 may be formed to have a plurality of thicknesses. For example, one area of the metal plate 1920 may have a first thickness (e.g., about 35 um), and another area of the metal plate 1920 may have a second thickness (e.g., about 12 um).

In one embodiment, the metal plate 1920 may be made of a material with an elastic strain ratio of 1.5% or higher and a modulus of 70 GPa or more. In one embodiment, the metal plate 1920 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 1920 may include polymer. In one embodiment, the metal plate 1920 may have a modulus 70 GPa or more and a yield strength 1200 MPa or higher. In one embodiment, specific resistance of the metal plate 1920 may be about 1500 (nΩ.m) or higher.

In case that the digitizer (e.g., the digitizer 1360 in FIG. 13) is applied to the display 1900, the high electrical resistance of the metal plate 1920 may be advantageous in transmitting a signal of the digitizer (e.g., the digitizer 1360 in FIG. 13) to the digitizer pen (e.g., the stylus pen).

The metal plate 1920 may reinforce the rigidity of the display panel 1910 and support the display panel 1910. The metal plate 1920 may prevent the occurrence of folding marks and creases in the folding area (e.g., the third area h3) when the display 1900 is folded or unfolded.

According to the embodiment, the first conductive plate 1930 may be disposed on a lower portion of the metal plate 1920 (e.g., based on the -z-axis direction). The first conductive plate 1930 may be provided in the form of a metal sheet and assist in reinforcing the rigidity of the electronic device. The first conductive plate 1930 may be used to block surrounding noise and disperse heat discharged from peripheral heat-radiating components. For example, the first conductive plate 1930 may include at least one of Cu, Al, SUS, or CLAD (e.g., a stack member in which SUS and Al are alternately disposed). In another example, the first conductive plate 1930 may include other alloy materials.

The first conductive plate 1930 may include a first planar portion 1931, a second planar portion 1932, and a flexible portion 1933. In one embodiment, the first planar portion 1931, the second planar portion 1932, and the flexible portion 1933 of the first conductive plate 1930 may be integrated.

In one embodiment, the first planar portion 1931 may face (e.g., overlap based on the z-axis) the first area h1 of the display 1900. In one embodiment, the second planar portion 1932 may face (e.g., overlap based on the z-axis) the second area h2 of the display 1900. In one embodiment, the flexible portion 1933 may face (e.g., overlap based on the z-axis) the third area h3 of the display 1900.

According to the embodiment, the first conductive plate 1930 may be folded or unfolded together with the display panel 1910 by means of at least a part of the flexible portion 1933.

In one embodiment, the second conductive plate 1940 may be disposed on a lower portion of the first conductive plate 1930 (e.g., based on the -z-axis direction).

In one embodiment, the second conductive plate 1940 may include a first portion 1942 and a second portion 1944. For example, the first portion 1942 may face (e.g., overlap based on the z-axis) the first area h1 of the display 1900. The second portion 1944 may face (e.g., overlap based on the z-axis) the second area h2 of the display 1900. For example, the second conductive plate 1940 may not be formed on the portion that faces (e.g., overlaps based on the z-axis) the flexible portion 1933 of the first conductive plate 1930 (e.g., the portion that faces the third area h3 of the display 1900).

In one embodiment, the first portion 1942 and the second portion 1944 of the second conductive plate 1940 may be disposed to be spaced apart from each other at a predetermined interval. For example, the first portion 1942 and the second portion 1944 of the second conductive plate 1940 may be disposed to be spaced apart from each other at a distance smaller than a width of the third area h3 of the display 1900. For example, the first portion 1942 and the second portion 1944 of the second conductive plate 1940 may be disposed to be spaced apart from each other by a width of the flexible portion 1933 of the first conductive plate 1930 or disposed to be spaced apart from each other at a distance smaller than the width of the flexible portion 1933.

In one embodiment, because the first portion 1942 and the second portion 1944 of the second conductive plate 1940 are separated, a U type may be defined when the display 1900 is folded.

In one embodiment, the second conductive plate 1940 may be provided in the form of a metal sheet and assist in reinforcing the rigidity of the electronic device. The second conductive plate 1940 may be used to support the first conductive plate 1930 and disperse heat discharged from peripheral heat-radiating components. For example, the second conductive plate 1940 may include at least one of Cu, Al, SUS, or CLAD (e.g., a stack member in which SUS and Al are alternately disposed). In another example, the second conductive plate 1940 may include other alloy materials.

In one embodiment, the display panel 1910, the metal plate 1920, the first conductive plate 1930, and the second conductive plate 1940 may be attached to one another by means of adhesive members P1, P2, and P3. For example, the adhesive members P1, P2, and P3 may each include at least one of an optical clear adhesive (OCA), a pressure sensitive adhesive (PSA), a thermally reactive bonding agent, thermoplastic polyurethane, a general bonding agent, or a double-sided tape.

In one embodiment, the first adhesive member P1 may be disposed between a lower portion of the display panel 1910 and an upper portion of the metal plate 1920 and join the display panel 1910 and the metal plate 1920. For example, the first adhesive member P1 may be formed with a uniform thickness in an overall area of the display panel 1910 and an overall area of the metal plate 1920.

In one embodiment, the second adhesive member P2 may be disposed between a lower portion of the metal plate 1920 and an upper portion of the first conductive plate 1930 and join the metal plate 1920 and the first conductive plate 1930. For example, the second adhesive member P2 may include a first portion P2a and a second portion P2b. The first portion P2a of the second adhesive member P2 may face (e.g., overlap based on the z-axis) the first area h1 of the display 1900. The second portion P2b of the second adhesive member P2 may face (e.g., overlap based on the z-axis) the second area h2 of the display 1900. The second adhesive member P2 may not be formed on a portion h3a that faces (e.g., overlaps based on the z-axis) the flexible portion 1933 of the first conductive plate 1930 (e.g., a portion that faces the third area h3 of the display 1900).

In one embodiment, the third adhesive member P3 may be disposed between a lower portion of the first conductive plate 1930 and an upper portion of the second conductive plate 1940 and join the first conductive plate 1930 and the second conductive plate 1940. For example, the third adhesive member P3 may include a first portion P3a, a second portion P3b, and a third portion P3c. For example, the first portion P3a of the third adhesive member P3 may face (e.g., overlap based on the z-axis) the first area h1 of the display 1900. The second portion P3b of the third adhesive member P3 may face (e.g., overlap based on the z-axis) the second area h2 of the display 1900. The third portion P3c of the third adhesive member P3 may face (e.g., overlap based on the z-axis) the third area h3 of the display 1900 (e.g., the flexible portion 1933 of the first conductive plate 1930).

For example, the first portion P3a and the second portion P3b of the third adhesive member P3 may each have a first thickness, and the third portion P3c of the third adhesive member P3 may have a second thickness smaller than the first thickness. The third adhesive member P3 may be attached to the entire lower surface of the first conductive plate 1930. The third adhesive member P3 may not be attached to an area of at least a part of the second conductive plate 1940. The third adhesive member P3 may not be formed in a portion 1946 where the first portion 1942 and the second portion 1944 of the second conductive plate 1940 are separated.

In the display 1900 of the electronic device (e.g., the electronic device 101 in FIG. 1, the electronic device 300 in FIGS. 3A and 3B, or the electronic device 400 in FIG. 4) according to various embodiments of the present disclosure, the second adhesive member P2 is not formed in the portion h3a that faces the flexible portion 1933 of the first conductive plate 1930 in the folding area (e.g., the third area h3), such that the thickness of the third portion P3c of the third adhesive member P3 may be reduced, and the stress caused by the folding/unfolding operation may be reduced.

In the display 1900 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 1920 (e.g., the liquid metal plate) and the plurality of conductive plates 1930 and 1940 are provided to support the foldable display panel 1910 (e.g., the flexible display panel). Therefore, it is possible to prevent the occurrence of folding marks and creases on the display 1900 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

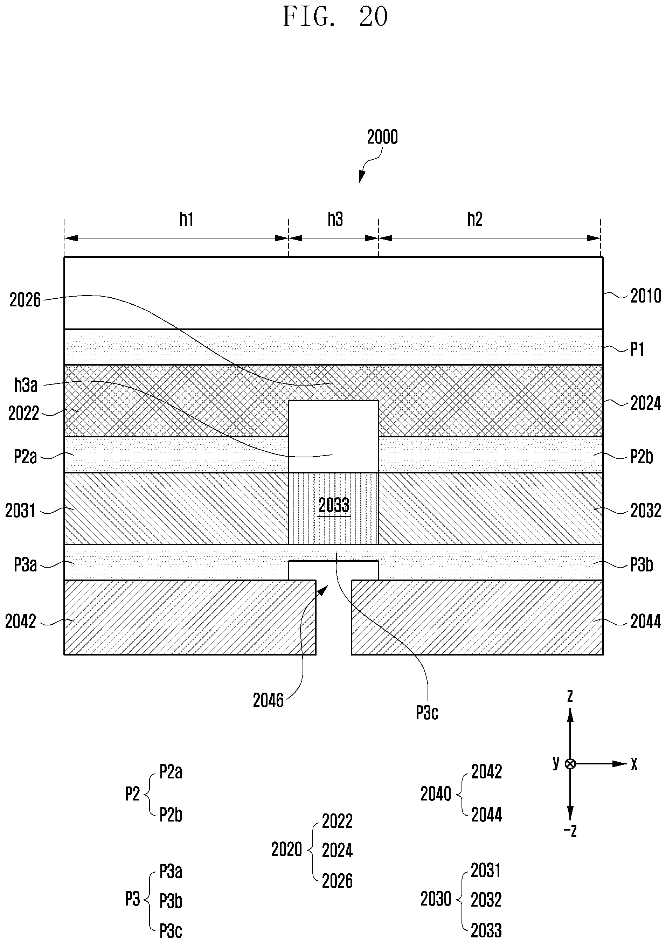

FIG. 20 is a cross-sectional view illustrating the layered structure of the display according to various embodiments of the present disclosure. In the description of a display 2000 illustrated in FIG. 20, a detailed description of components identical or similar to those of the display 500 in FIGS. 5 and 6A and/or the display 1900 in FIG. 19 may be omitted.

With reference to FIG. 20, the electronic device (e.g., the electronic device 101 in FIG. 1, the electronic device 300 in FIGS. 3A and 3B, or the electronic device 400 in FIG. 4) according to various embodiments of the present disclosure may include the display 2000.

According to the embodiment, the display 2000 may include a display panel 2010 (e.g., the display panel 510 in FIGS. 5 and 6A), a metal plate 2020 (e.g., the metal plate 1920 in FIG. 19), a first conductive plate 2030 (e.g., the first conductive plate 530 in FIGS. 6A and 6B), and a second conductive plate 2040 (e.g., the second conductive plate 540 in FIGS. 5 and 6A).

In one embodiment, the display 2000 may include a polarizer (POL) (e.g., a polarizing film) and a window (e.g., a polyimide (PI) film or a ultra-thin glass (UTG)) sequentially disposed on an upper portion of the display panel 2010 (e.g., based on the z-axis direction).

In one embodiment, the window, the POL, the display panel 2010, the metal plate 2020, the first conductive plate 2030, and the second conductive plate 2040 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 2010, the metal plate 2020, the first conductive plate 2030, and the second conductive plate 2040 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 2000 may include a first area h1, a second area h2, and a third area h3 positioned between the first area h1 and the second area h2. For example, the first area h1 and the second area h2 may be constituted to be folded or unfolded about the third area h3.

According to the embodiment, the metal plate 2020 may be disposed on a lower portion of the display panel 2010 (e.g., based on the -z-axis direction).

In one embodiment, the metal plate 2020 may include a first portion 2022, a second portion 2024, and a third portion 2026. The third portion 2026 may be disposed between the first portion 2022 and the second portion 2024. For example, the first portion 2022 of the metal plate 2020 may face (e.g., overlap based on the z-axis) the first area h1 of the display 2000. The second portion 2024 of the metal plate 2020 may face (e.g., overlap based on the z-axis) the second area h2 of the display 2000. The third portion 2026 of the metal plate 2020 may face (e.g., overlap based on the z-axis) the third area h3 of the display 2000.

In one embodiment, the metal plate 2020 may include liquid metal and have a thickness of about 12 um to 35 um. For example, the first portion 2022 and the second portion 2024 of the metal plate 2020 may each have a first thickness (e.g., about 35 um). The third portion 2026 of the metal plate 2020 (e.g., the portion that faces a flexible portion 2033 of the first conductive plate 2030) may have a second thickness (e.g., about 12 um) smaller than the first thickness (e.g., about 35 um).

In one embodiment, the metal plate 2020 may be made of a material with an elastic strain ratio of 1.5% or higher and a modulus of 70 GPa or more. In one embodiment, the metal plate 2020 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 2020 may include polymer. In one embodiment, the metal plate 2020 may have a modulus 70 GPa or more and a yield strength 1200 MPa or higher. In one embodiment, specific resistance of the metal plate 2020 may be about 1500 (nΩ.m) or higher.

In case that the digitizer (e.g., the digitizer 1360 in FIG. 13) is applied to the display 2000, the high electrical resistance of the metal plate 2020 may be advantageous in transmitting a signal of the digitizer (e.g., the digitizer 1360 in FIG. 13) to the digitizer pen (e.g., the stylus pen).

The metal plate 2020 may reinforce the rigidity of the display panel 2010 and support the display panel 2010. The metal plate 2020 may prevent the occurrence of folding marks and creases in the folding area (e.g., the third area h3) when the display 2000 is folded or unfolded.

According to the embodiment, the first conductive plate 2030 may be disposed on a lower portion of the metal plate 2020 (e.g., based on the -z-axis direction). The first conductive plate 2030 may be provided in the form of a metal sheet and assist in reinforcing the rigidity of the electronic device. The first conductive plate 2030 may be used to block surrounding noise and disperse heat discharged from peripheral heat-radiating components. For example, the first conductive plate 2030 may include at least one of Cu, Al, SUS, or CLAD (e.g., a stack member in which SUS and Al are alternately disposed). In another example, the first conductive plate 2030 may include other alloy materials.

The first conductive plate 2030 may include a first planar portion 2031, a second planar portion 2032, and the flexible portion 2033. In one embodiment, the first planar portion 2031, the second planar portion 2032, and the flexible portion 2033 of the first conductive plate 2030 may be integrated.

In one embodiment, the first planar portion 2031 may face (e.g., overlap based on the z-axis) the first area h1 of the display 2000. In one embodiment, the second planar portion 2032 may face (e.g., overlap based on the z-axis) the second area h2 of the display 2000. In one embodiment, the flexible portion 2033 may face (e.g., overlap based on the z-axis) the third area h3 of the display 2000.

According to the embodiment, the first conductive plate 2030 may be folded or unfolded together with the display panel 2010 by means of at least a part of the flexible portion 2033.

In one embodiment, the second conductive plate 2040 may be disposed on a lower portion of the first conductive plate 2030 (e.g., based on the -z-axis direction).

In one embodiment, the second conductive plate 2040 may include a first portion 2042 and a second portion 2044. For example, the first portion 2042 may face (e.g., overlap based on the z-axis) the first area h1 of the display 2000. The second portion 2044 may face (e.g., overlap based on the z-axis) the second area h2 of the display 2000. For example, the second conductive plate 2040 may not be formed on the portion that faces (e.g., overlaps based on the z-axis) the flexible portion 2033 of the first conductive plate 2030 (e.g., the portion that faces the third area h3 of the display 2000).

In one embodiment, the flexible portion 2033 may include a plurality of openings (e.g., the plurality of openings 5331 (e.g., slits) in FIG. 6B). For example, the widths and intervals of the plurality of openings (e.g., slits) may be variably configured on the basis of the strain ratio of the folding area (e.g., the third area h3).

In one embodiment, the first portion 2042 and the second portion 2044 of the second conductive plate 2040 may be disposed to be spaced apart from each other at a predetermined interval. For example, the first portion 2042 and the second portion 2044 of the second conductive plate 2040 may be disposed to be spaced apart from each other at a distance smaller than a width of the third area h3 of the display 2000. For example, the first portion 2042 and the second portion 2044 of the second conductive plate 2040 may be disposed to be spaced apart from each other by a width of the flexible portion 2033 of the first conductive plate 2030 or disposed to be spaced apart from each other at a distance smaller than the width of the flexible portion 2033.

In one embodiment, because the first portion 2042 and the second portion 2044 of the second conductive plate 2040 are separated, a U type may be defined when the display 2000 is folded.

In one embodiment, the second conductive plate 2040 may be provided in the form of a metal sheet and assist in reinforcing the rigidity of the electronic device. The second conductive plate 2040 may be used to support the first conductive plate 2030 and disperse heat discharged from peripheral heat-radiating components. For example, the second conductive plate 2040 may include at least one of Cu, Al, SUS, or CLAD (e.g., a stack member in which SUS and Al are alternately disposed). In another example, the second conductive plate 2040 may include other alloy materials.

In one embodiment, the display panel 2010, the metal plate 2020, the first conductive plate 2030, and the second conductive plate 2040 may be attached to one another by means of adhesive members P1, P2, and P3. For example, the adhesive members P1, P2, and P3 may each include at least one of an optical clear adhesive (OCA), a pressure sensitive adhesive (PSA), a thermally reactive bonding agent, thermoplastic polyurethane, a general bonding agent, or a double-sided tape.

In one embodiment, the first adhesive member P1 may be disposed between a lower portion of the display panel 2010 and an upper portion of the metal plate 2020 and join the display panel 2010 and the metal plate 2020. For example, the first adhesive member P1 may be formed with a uniform thickness in an overall area of the display panel 2010 and an overall area of the metal plate 2020.

In one embodiment, the second adhesive member P2 may be disposed between a lower portion of the metal plate 2020 and an upper portion of the first conductive plate 2030 and join the metal plate 2020 and the first conductive plate 2030. For example, the second adhesive member P2 may include a first portion P2a and a second portion P2b. The first portion P2a of the second adhesive member P2 may face (e.g., overlap based on the z-axis) the first area h1 of the display 2000. The second portion P2b of the second adhesive member P2 may face (e.g., overlap based on the z-axis) the second area h2 of the display 2000. The second adhesive member P2 may not be formed on a portion h3a that faces (e.g., overlaps based on the z-axis) the flexible portion 2033 of the first conductive plate 2030 (e.g., a portion that faces the third area h3 of the display 2000).

In one embodiment, the third adhesive member P3 may be disposed between a lower portion of the first conductive plate 2030 and an upper portion of the second conductive plate 2040 and join the first conductive plate 2030 and the second conductive plate 2040. For example, the third adhesive member P3 may include a first portion P3a, a second portion P3b, and a third portion P3c. For example, the first portion P3a of the third adhesive member P3 may face (e.g., overlap based on the z-axis) the first area h1 of the display 2000. The second portion P3b of the third adhesive member P3 may face (e.g., overlap based on the z-axis) the second area h2 of the display 2000. The third portion P3c of the third adhesive member P3 may face (e.g., overlap based on the z-axis) the third area h3 of the display 2000 (e.g., the flexible portion 2033 of the first conductive plate 2030).

For example, the first portion P3a and the second portion P3b of the third adhesive member P3 may each have a first thickness, and the third portion P3c of the third adhesive member P3 may have a second thickness smaller than the first thickness. The third adhesive member P3 may be attached to the entire lower surface of the first conductive plate 2030. The third adhesive member P3 may not be attached to an area of at least a part of the second conductive plate 2040. The third adhesive member P3 may not be formed in a portion 2046 where the first portion 2042 and the second portion 2044 of the second conductive plate 2040 are separated.

In the display 2000 of the electronic device (e.g., the electronic device 101 in FIG. 1, the electronic device 300 in FIGS. 3A and 3B, or the electronic device 400 in FIG. 4) according to various embodiments of the present disclosure, the second adhesive member P2 is not formed in the portion h3a that faces the flexible portion 2033 of the first conductive plate 2030 in the folding area (e.g., the third area h3), such that the thickness of the third portion P3c of the third adhesive member P3 may be reduced, and the stress caused by the folding/unfolding operation may be reduced. In addition, in the display 2000 of the electronic device (e.g., the electronic device 101 in FIG. 1, the electronic device 300 in FIGS. 3A and 3B, or the electronic device 400 in FIG. 4) according to various embodiments of the present disclosure, the thickness of the third portion 2026 of the metal plate 2020 in the folding area (e.g., the third area h3) may be reduced, and the stress caused by the folding/unfolding operation may be reduced.

In the display 2000 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 2020 (e.g., the liquid metal plate) and the plurality of conductive plates 2030 and 2040 are provided to support the foldable display panel 2010 (e.g., the flexible display panel). Therefore, it is possible to prevent the occurrence of folding marks and creases on the display 2000 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

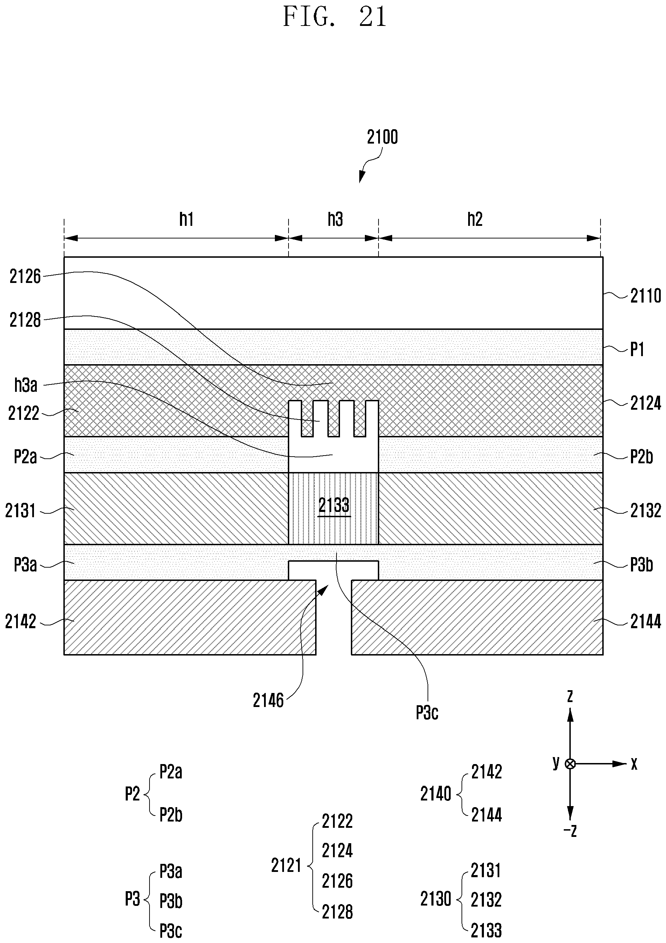

FIG. 21 is a cross-sectional view illustrating the layered structure of the display according to various embodiments of the present disclosure. In the description of a display 2100 illustrated in FIG. 21, a detailed description of components identical or similar to those of the display 500 in FIGS. 5 and 6A, the display 1900 in FIG. 19, and/or the display 2000 in FIG. 20 may be omitted.

With reference to FIG. 21, the electronic device (e.g., the electronic device 101 in FIG. 1, the electronic device 300 in FIGS. 3A and 3B, or the electronic device 400 in FIG. 4) according to various embodiments of the present disclosure may include the display 2100.

According to the embodiment, the display 2100 may include a display panel 2110 (e.g., the display panel 510 in FIGS. 5 and 6A), a metal plate 2120 (e.g., the metal plate 2020 in FIG. 20), a first conductive plate 2130 (e.g., the first conductive plate 530 in FIGS. 6A and 6B or the first conductive plate 2030 in FIG. 20), and a second conductive plate 2140 (e.g., the second conductive plate 540 in FIGS. 5 and 6A or the second conductive plate 2040 in FIG. 20).

In one embodiment, the display 2100 may include a polarizer (POL) (e.g., a polarizing film) and a window (e.g., a polyimide (PI) film or a ultra-thin glass (UTG)) sequentially disposed on an upper portion of the display panel 2110 (e.g., based on the z-axis direction).

In one embodiment, the window, the POL, the display panel 2110, the metal plate 2120, the first conductive plate 2130, and the second conductive plate 2140 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 2110, the metal plate 2120, the first conductive plate 2130, and the second conductive plate 2140 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 2100 may include a first area h1, a second area h2, and a third area h3 positioned between the first area h1 and the second area h2. For example, the first area h1 and the second area h2 may be constituted to be folded or unfolded about the third area h3.

According to the embodiment, the metal plate 2120 may be disposed on a lower portion of the display panel 2110 (e.g., based on the -z-axis direction).

In one embodiment, the metal plate 2120 may include a first portion 2122, a second portion 2124, and a third portion 2126. The third portion 2126 may be disposed between the first portion 2122 and the second portion 2124. For example, the first portion 2122 of the metal plate 2120 may face (e.g., overlap based on the z-axis) the first area h1 of the display 2100. The second portion 2124 of the metal plate 2120 may face (e.g., overlap based on the z-axis) the second area h2 of the display 2100. The third portion 2126 of the metal plate 2120 may face (e.g., overlap based on the z-axis) the third area h3 of the display 2100. For example, a plurality of grooves 2128 may be formed in the third portion 2126 of the metal plate 2120. For example, the first portion 2122 and second portion 2144 of the metal plate 2120 may each have a first thickness. Because the plurality of grooves 2128 is formed in the third portion 2126 of the metal plate 2120, at least a part of the third portion 2126 may be formed to be thinner than the first portion 2122 and second portion 2144.

In one embodiment, the metal plate 2120 may include liquid metal and have a thickness of about 12 um to 35 um. For example, the first portion 2122 and the second portion 2124 of the metal plate 2120 may each have a first thickness (e.g., about 35 um). In the third portion 2126 of the metal plate 2120 (e.g., the portion that faces a flexible portion 2133 of the first conductive plate 2130), the portion, in which the plurality of grooves 2128 is formed, may have a second thickness (e.g., about 12 um) smaller than the first thickness (e.g., about 35 um).

In one embodiment, the intervals and thicknesses of the plurality of grooves 2128 may be constant. In another embodiment, the intervals and thicknesses of the plurality of grooves 2128 may be different from one another. For example, as the distance from the first portion 2122 decreases, the interval between at least some of the plurality of grooves 2128 may decrease, and the thickness of at least some of the plurality of grooves 2128 may decrease. For example, as the distance from the second portion 2124 decreases, the interval between at least some of the plurality of grooves 2128 may decrease, and the thickness of at least some of the plurality of grooves 2128 may decrease.

In one embodiment, the shape, in which the first portion 2122, the second portion 2124, and the third portion 2126 of the metal plate 2120 of the display 2100 have different thicknesses, may also be applied to another layer (e.g., the first conductive plate 2130) of the display 2100. For example, a first planar portion 2131, a second planar portion 2132, and the flexible portion 2133 of the first conductive plate 2130 may have different thicknesses. In addition, the thicknesses of the first planar portion 2131, the second planar portion 2132, and the flexible portion 2133 may be different from one another.

In one embodiment, the metal plate 2120 may be made of a material with an elastic strain ratio of 1.5% or higher and a modulus of 70 GPa or more. In one embodiment, the metal plate 2120 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 2120 may include polymer. In one embodiment, the metal plate 2120 may have a modulus 70 GPa or more and a yield strength 1200 MPa or higher. In one embodiment, specific resistance of the metal plate 2020 may be about 1500 (nΩ.m) or higher.

In case that the digitizer (e.g., the digitizer 1360 in FIG. 13) is applied to the display 2100, the high electrical resistance of the metal plate 2120 may be advantageous in transmitting a signal of the digitizer (e.g., the digitizer 1360 in FIG. 13) to the digitizer pen (e.g., the stylus pen).

The metal plate 2120 may reinforce the rigidity of the display panel 2110 and support the display panel 2110. The metal plate 2120 may prevent the occurrence of folding marks and creases in the folding area (e.g., the third area h3) when the display 2100 is folded or unfolded.

According to the embodiment, the first conductive plate 2130 may be disposed on a lower portion of the metal plate 2120 (e.g., based on the -z-axis direction). The first conductive plate 2130 may be provided in the form of a metal sheet and assist in reinforcing the rigidity of the electronic device. The first conductive plate 2130 may be used to block surrounding noise and disperse heat discharged from peripheral heat-radiating components. For example, the first conductive plate 2130 may include at least one of Cu, Al, SUS, or CLAD (e.g., a stack member in which SUS and Al are alternately disposed). In another example, the first conductive plate 2130 may include other alloy materials.

The first conductive plate 2130 may include the first planar portion 2131, the second planar portion 2132, and the flexible portion 2133. In one embodiment, the first planar portion 2131, the second planar portion 2132, and the flexible portion 2133 of the first conductive plate 2130 may be integrated.

In one embodiment, the first planar portion 2131 may face (e.g., overlap based on the z-axis) the first area h1 of the display 2100. In one embodiment, the second planar portion 2132 may face (e.g., overlap based on the z-axis) the second area h2 of the display 2100. In one embodiment, the flexible portion 2133 may face (e.g., overlap based on the z-axis) the third area h3 of the display 2100.

According to the embodiment, the first conductive plate 2130 may be folded or unfolded together with the display panel 2110 by means of at least a part of the flexible portion 2133.

In one embodiment, the second conductive plate 2140 may be disposed on a lower portion of the first conductive plate 2130 (e.g., based on the -z-axis direction).

In one embodiment, the second conductive plate 2140 may include a first portion 2142 and a second portion 2144. For example, the first portion 2142 may face (e.g., overlap based on the z-axis) the first area h1 of the display 2100. The second portion 2144 may face (e.g., overlap based on the z-axis) the second area h2 of the display 2100. For example, the second conductive plate 2140 may not be formed on the portion that faces (e.g., overlaps based on the z-axis) the flexible portion 2133 of the first conductive plate 2130 (e.g., the portion that faces the third area h3 of the display 2100).

In one embodiment, the first portion 2142 and the second portion 2144 of the second conductive plate 2140 may be disposed to be spaced apart from each other at a predetermined interval. For example, the first portion 2142 and the second portion 2144 of the second conductive plate 2140 may be disposed to be spaced apart from each other at a distance smaller than a width of the third area h3 of the display 2100. For example, the first portion 2142 and the second portion 2144 of the second conductive plate 2140 may be disposed to be spaced apart from each other by a width of the flexible portion 2133 of the first conductive plate 2130 or disposed to be spaced apart from each other at a distance smaller than the width of the flexible portion 2133.

In one embodiment, because the first portion 2142 and the second portion 2144 of the second conductive plate 2140 are separated, a U type may be defined when the display 2100 is folded.

In one embodiment, the second conductive plate 2140 may be provided in the form of a metal sheet and assist in reinforcing the rigidity of the electronic device. The second conductive plate 2140 may be used to support the first conductive plate 2130 and disperse heat discharged from peripheral heat-radiating components. For example, the second conductive plate 2140 may include at least one of Cu, Al, SUS, or CLAD (e.g., a stack member in which SUS and Al are alternately disposed). In another example, the second conductive plate 2140 may include other alloy materials.

In one embodiment, the display panel 2110, the metal plate 2120, the first conductive plate 2130, and the second conductive plate 2140 may be attached to one another by means of adhesive members P1, P2, and P3. For example, the adhesive members P1, P2, and P3 may each include at least one of an optical clear adhesive (OCA), a pressure sensitive adhesive (PSA), a thermally reactive bonding agent, thermoplastic polyurethane, a general bonding agent, or a double-sided tape.

In one embodiment, the first adhesive member P1 may be disposed between a lower portion of the display panel 2110 and an upper portion of the metal plate 2120 and join the display panel 2110 and the metal plate 2120. For example, the first adhesive member P1 may be formed with a uniform thickness in an overall area of the display panel 2110 and an overall area of the metal plate 2120.

In one embodiment, the second adhesive member P2 may be disposed between a lower portion of the metal plate 2120 and an upper portion of the first conductive plate 2130 and join the metal plate 2120 and the first conductive plate 2130. For example, the second adhesive member P2 may include a first portion P2a and a second portion P2b. The first portion P2a of the second adhesive member P2 may face (e.g., overlap based on the z-axis) the first area h1 of the display 2100. The second portion P2b of the second adhesive member P2 may face (e.g., overlap based on the z-axis) the second area h2 of the display 2100. The second adhesive member P2 may not be formed on a portion h3a that faces (e.g., overlaps based on the z-axis) the flexible portion 2133 of the first conductive plate 2130 (e.g., a portion that faces the third area h3 of the display 2000).

In one embodiment, the third adhesive member P3 may be disposed between a lower portion of the first conductive plate 2130 and an upper portion of the second conductive plate 2140 and join the first conductive plate 2130 and the second conductive plate 2140. For example, the third adhesive member P3 may include a first portion P3a, a second portion P3b, and a third portion P3c. For example, the first portion P3a of the third adhesive member P3 may face (e.g., overlap based on the z-axis) the first area h1 of the display 2100. The second portion P3b of the third adhesive member P3 may face (e.g., overlap based on the z-axis) the second area h2 of the display 2100. The third portion P3c of the third adhesive member P3 may face (e.g., overlap based on the z-axis) the third area h3 of the display 2100 (e.g., the flexible portion 2133 of the first conductive plate 2130).

For example, the first portion P3a and the second portion P3b of the third adhesive member P3 may each have a first thickness, and the third portion P3c of the third adhesive member P3 may have a second thickness smaller than the first thickness. The third adhesive member P3 may be attached to the lower surface of the first conductive plate 2130. The third adhesive member P3 may not be attached to an area of at least a part of the second conductive plate 2140. The third adhesive member P3 may not be formed in a portion 2146 where the first portion 2142 and the second portion 2144 of the second conductive plate 2140 are separated.

In the display 2100 of the electronic device (e.g., the electronic device 101 in FIG. 1, the electronic device 300 in FIGS. 3A and 3B, or the electronic device 400 in FIG. 4) according to various embodiments of the present disclosure, the second adhesive member P2 is not formed in the portion h3a that faces the flexible portion 2033 of the first conductive plate 2030 in the folding area (e.g., the third area h3), such that the thickness of the third portion P3c of the third adhesive member P3 may be reduced, and the stress caused by the folding/unfolding operation may be reduced. In addition, in the display 2100 of the electronic device (e.g., the electronic device 101 in FIG. 1, the electronic device 300 in FIGS. 3A and 3B, or the electronic device 400 in FIG. 4) according to various embodiments of the present disclosure, the thickness of at least a part of the third portion 2126 of the metal plate 2020 in the folding area (e.g., the third area h3) may be reduced, and the stress caused by the folding/unfolding operation may be reduced.

In the display 2100 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 2120 (e.g., the liquid metal plate) and the plurality of conductive plates 2130 and 2140 are provided to support the foldable display panel 2110 (e.g., the flexible display panel). Therefore, it is possible to prevent the occurrence of folding marks and creases on the display 2100 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

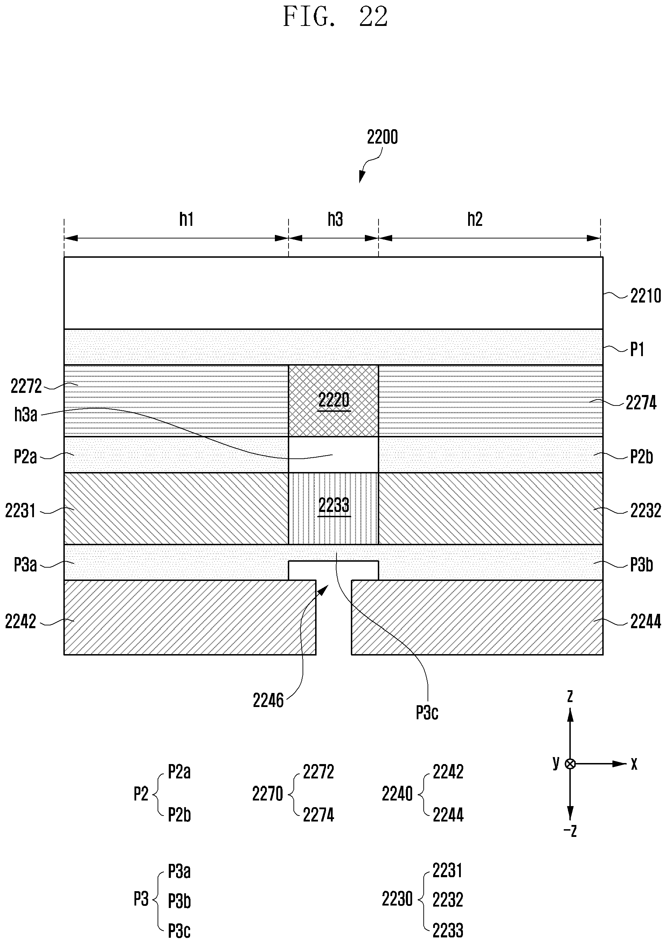

FIG. 22 is a cross-sectional view illustrating the layered structure of the display according to various embodiments of the present disclosure. In the description of a display 2200 illustrated in FIG. 22, a detailed description of components identical or similar to those of the display 500 in FIGS. 5 and 6A, the display 1300 in FIG. 13, the display 1400 in FIG. 14, and the display 1500 in FIG. 15 may be omitted.

With reference to FIG. 22, the electronic device (e.g., the electronic device 101 in FIG. 1, the electronic device 300 in FIGS. 3A and 3B, or the electronic device 400 in FIG. 4) according to various embodiments of the present disclosure may include the display 2200.

According to the embodiment, the display 2200 may include a display panel 2210 (e.g., the display panel 510 in FIGS. 5 and 6A), a metal plate 2220 (e.g., the metal plate 520 in FIGS. 5 and 6A), a first conductive plate 2230 (e.g., the first conductive plate 530 in FIGS. 6A and 6B), a second conductive plate 2240 (e.g., the second conductive plate 540 in FIGS. 5 and 6A), and a heat dissipation plate 2270.

In one embodiment, the display 2200 may include a polarizer (POL) (e.g., a polarizing film) and a window (e.g., a polyimide (PI) film or a ultra-thin glass (UTG)) sequentially disposed on an upper portion of the display panel 2210 (e.g., based on the z-axis direction).

In one embodiment, the window, the POL, the display panel 2210, the metal plate 2220, the first conductive plate 2230, the second conductive plate 2240, and the heat dissipation plate 2270 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 2210, the metal plate 2220, the first conductive plate 2230, the second conductive plate 2240, and the heat dissipation plate 2270 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 2200 may include a first area h1, a second area h2, and a third area h3 positioned between the first area h1 and the second area h2. For example, the first area h1 and the second area h2 may be constituted to be folded or unfolded about the third area h3.

According to the embodiment, the metal plate 2220 and the heat dissipation plate 2270 may be disposed on a lower portion of the display panel 2210 (e.g., based on the -z-axis direction).

In one embodiment, the metal plate 2220 and the heat dissipation plate 2270 may be positioned substantially on the same plane.

In one embodiment, the metal plate 2220 may face the third area h3 of the display 2200. For example, the metal plate 2220 may be positioned to overlap a flexible portion 2233 of the first conductive plate 2230.

In one embodiment, the metal plate 2220 may include liquid metal and have a thickness of about 12 um to 35 um. In one embodiment, an entire area of the metal plate 2220 may have substantially the same thickness. In another embodiment, the metal plate 2220 may be formed to have a plurality of thicknesses. For example, one area of the metal plate 2220 may have a first thickness (e.g., about 35 um), and another area of the metal plate 2220 may have a second thickness (e.g., about 12 um).

In one embodiment, the metal plate 2220 may be made of a material with an elastic strain ratio of 1.5% or higher and a modulus of 70 GPa or more. In one embodiment, the metal plate 2220 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 2220 may include polymer. In one embodiment, the metal plate 2220 may have a modulus 70 GPa or more and a yield strength 1200 MPa or higher. In one embodiment, specific resistance of the metal plate 2220 may be about 1500 (nΩ.m) or higher.

In case that the digitizer (e.g., the digitizer 1360 in FIG. 13) is applied to the display 2200, the high electrical resistance of the metal plate 2220 may be advantageous in transmitting a signal of the digitizer (e.g., the digitizer 1360 in FIG. 13) to the digitizer pen (e.g., the stylus pen).

The metal plate 2220 may reinforce the rigidity of the display panel 2210 and support the display panel 2210. The metal plate 2220 may prevent the occurrence of folding marks and creases in the folding area (e.g., the third area h3) when the display 2200 is folded or unfolded.

In one embodiment, the heat dissipation plate 2270 may be disposed to surround the metal plate 2220. The heat dissipation plate 2270 may include a first portion 2272 and a second portion 2274. For example, the first portion 2272 of the heat dissipation plate 2270 may face (e.g., overlap based on the z-axis) the first area h1 of the display 2200. The second portion 2274 of the heat dissipation plate 2270 may face (e.g., overlap based on the z-axis) the second area h2 of the display 2200. The heat dissipation plate 2270 may disperse heat discharged from peripheral heat-radiating components.

According to the embodiment, the first conductive plate 2230 may be disposed on a lower portion of the metal plate 2220 and a lower portion of the heat dissipation plate 2270 (e.g., based on the -z-axis direction). The first conductive plate 2230 may be provided in the form of a metal sheet and assist in reinforcing the rigidity of the electronic device. The first conductive plate 2230 may be used to block surrounding noise and disperse heat discharged from peripheral heat-radiating components. For example, the first conductive plate 2230 may include at least one of Cu, Al, SUS, or CLAD (e.g., a stack member in which SUS and Al are alternately disposed). In another example, the first conductive plate 2230 may include other alloy materials.

In one embodiment, the first conductive plate 2230 may include a first planar portion 2231, a second planar portion 2232, and the flexible portion 2233. In one embodiment, the first planar portion 2231, the second planar portion 2232, and the flexible portion 2233 of the first conductive plate 2230 may be integrated.

In one embodiment, the first planar portion 2231 of the first conductive plate 2230 may face (e.g., overlap based on the z-axis) the first area h1 of the display 1900. For example, the first planar portion 2231 may face (e.g., overlap based on the z-axis) the first portion 2272 of the heat dissipation plate 2270.

In one embodiment, the second planar portion 2232 of the first conductive plate 2230 may face the second area h2 of the display 2200. For example, the second planar portion 2232 may face the second portion 2274 of the heat dissipation plate 2270.

In one embodiment, the flexible portion 2233 of the first conductive plate 2230 may face the third area h3 of the display 2200. For example, the flexible portion 2233 may face the metal plate 2220.

According to the embodiment, the first conductive plate 2230 may be folded or unfolded together with the display panel 2210 by means of at least a part of the flexible portion 2233.

In one embodiment, the second conductive plate 2240 may be disposed on a lower portion of the first conductive plate 2230 (e.g., based on the -z-axis direction).

In one embodiment, the second conductive plate 2240 may include a first portion 2242 and a second portion 2244. For example, the first portion 2242 may face (e.g., overlap based on the z-axis) the first area h1 of the display 22900. The second portion 2244 may face (e.g., overlap based on the z-axis) the second area h2 of the display 2200. For example, the second conductive plate 2240 may not be formed on the portion that faces (e.g., overlaps based on the z-axis) the flexible portion 2233 of the first conductive plate 2230 (e.g., the portion that faces the third area h3 of the display 2200).

In one embodiment, the first portion 2242 and the second portion 2244 of the second conductive plate 2240 may be disposed to be spaced apart from each other at a predetermined interval. For example, the first portion 2242 and the second portion 2244 of the second conductive plate 2240 may be disposed to be spaced apart from each other at a distance smaller than a width of the third area h3 of the display 2200. For example, the first portion 2242 and the second portion 2244 of the second conductive plate 2240 may be disposed to be spaced apart from each other by a width of the flexible portion 2233 of the first conductive plate 2230 or disposed to be spaced apart from each other at a distance smaller than the width of the flexible portion 2233.

In one embodiment, because the first portion 2242 and the second portion 2244 of the second conductive plate 2240 are separated, a U type may be defined when the display 2200 is folded.

In one embodiment, the second conductive plate 2240 may be provided in the form of a metal sheet and assist in reinforcing the rigidity of the electronic device. The second conductive plate 2240 may be used to support the first conductive plate 2230 and disperse heat discharged from peripheral heat-radiating components. For example, the second conductive plate 2240 may include at least one of Cu, Al, SUS, or CLAD (e.g., a stack member in which SUS and Al are alternately disposed). In another example, the second conductive plate 2240 may include other alloy materials.

In one embodiment, the display panel 2210, the metal plate 2220, the heat dissipation plate 2270, the first conductive plate 2230, and the second conductive plate 2240 may be attached to one another by means of the adhesive members P1, P2, and P3. For example, the adhesive members P1, P2, and P3 may each include at least one of an optical clear adhesive (OCA), a pressure sensitive adhesive (PSA), a thermally reactive bonding agent, thermoplastic polyurethane, a general bonding agent, or a double-sided tape.

In one embodiment, the first adhesive member P1 may be disposed between a lower portion of the display panel 2210, an upper portion of the metal plate 2220, and an upper portion of the heat dissipation plate 2270 and join the display panel 2210, the metal plate 2220, and the heat dissipation plate 2270. For example, the first adhesive member P1 may be formed with a uniform thickness in an overall area of the display panel 2210, an overall area of the metal plate 2220, and an overall area of the heat dissipation plate 2270.

In one embodiment, the second adhesive member P2 may be disposed between a lower portion of the heat dissipation plate 2270 and an upper portion of the first conductive plate 2230 and join the heat dissipation plate 2270 and the first conductive plate 2230. For example, the second adhesive member P2 may include a first portion P2a and a second portion P2b. The first portion P2a of the second adhesive member P2 may face (e.g., overlap based on the z-axis) the first area h1 of the display 2200. The second portion P2b of the second adhesive member P2 may face (e.g., overlap based on the z-axis) the second area h2 of the display 2200. The second adhesive member P2 may not be formed on a portion h3a that faces (e.g., overlaps based on the z-axis) the flexible portion 2233 of the first conductive plate 2230 (e.g., a portion that faces the third area h3 of the display 2200).

In one embodiment, the third adhesive member P3 may be disposed between a lower portion of the first conductive plate 2230 and an upper portion of the second conductive plate 2240 and join the first conductive plate 2230 and the second conductive plate 2240. For example, the third adhesive member P3 may include a first portion P3a, a second portion P3b, and a third portion P3c. For example, the first portion P3a of the third adhesive member P3 may face (e.g., overlap based on the z-axis) the first area h1 of the display 2200. The second portion P3b of the third adhesive member P3 may face (e.g., overlap based on the z-axis) the second area h2 of the display 2200. The third portion P3c of the third adhesive member P3 may face (e.g., overlap based on the z-axis) the third area h3 of the display 2200 (e.g., the flexible portion 2233 of the first conductive plate 2230).

For example, the first portion P3a and the second portion P3b of the third adhesive member P3 may each have a first thickness, and the third portion P3c of the third adhesive member P3 may have a second thickness smaller than the first thickness. The third adhesive member P3 may be attached to the entire lower surface of the first conductive plate 2230. The third adhesive member P3 may not be attached to an area of at least a part of the second conductive plate 2240. The third adhesive member P3 may not be formed in a portion 2246 where the first portion 2242 and the second portion 2244 of the second conductive plate 2240 are separated.

In the display 2200 of the electronic device (e.g., the electronic device 101 in FIG. 1, the electronic device 300 in FIGS. 3A and 3B, or the electronic device 400 in FIG. 4) according to various embodiments of the present disclosure, the second adhesive member P2 is not formed in the portion h3a that faces the flexible portion 2233 of the first conductive plate 2230 in the folding area (e.g., the third area h3), such that the thickness of the third portion P3c of the third adhesive member P3 may be reduced, and the stress caused by the folding/unfolding operation may be reduced.

In one embodiment, in order to prevent creases and/or improve heat dissipation performance, the first portion 2272 and the second portion 2274 of the heat dissipation plate 2270 may each include a high-heat-dissipation metallic material. For example, the first portion 2272 may be a planar area and face (e.g., overlap based on the z-axis) the first area h1. For example, the second portion 2274 may be a planar area and face (e.g., overlap based on the z-axis) the second area h2. In one embodiment, in order to prevent creases and/or improve heat dissipation performance, the heat dissipation plate 2270 may include liquid metal. For example, the heat dissipation plate 2270 may be a folding area and at least partially face (e.g., overlap based on the z-axis) the third area h3. In the display 2200 of the electronic device (e.g., the electronic device 101 in FIG. 1, the electronic device 300 in FIGS. 3A and 3B, or the electronic device 400 in FIG. 4) according to various embodiments of the present disclosure, the metal plate 2220 (e.g., the liquid metal plate), the plurality of conductive plates 2230 and 2240, and the heat dissipation plate 2270 are provided. Therefore, it is possible to prevent the occurrence of folding marks and creases on the display 2200 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

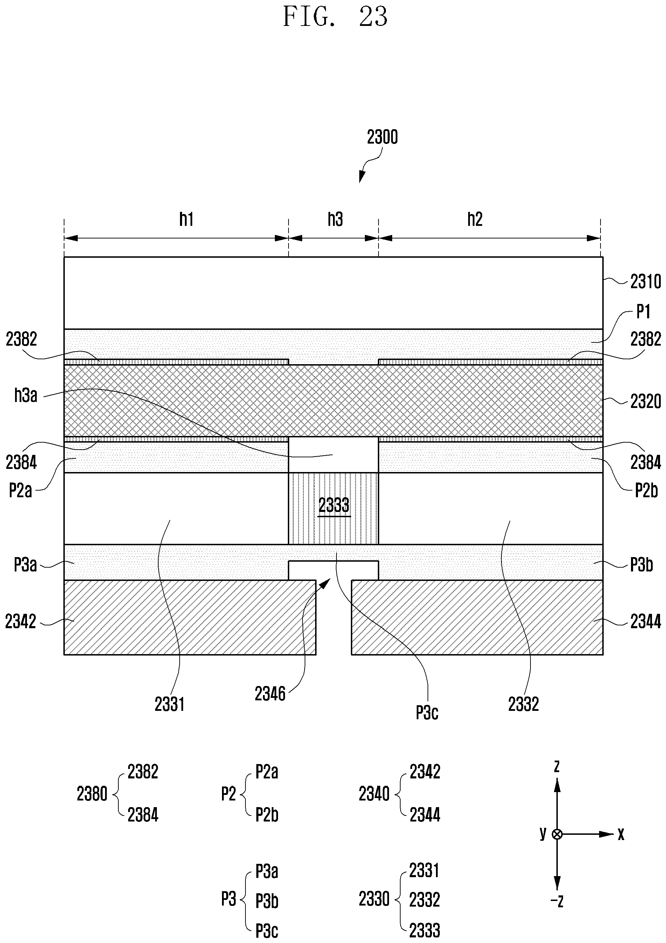

FIG. 23 is a cross-sectional view illustrating the layered structure of the display according to various embodiments of the present disclosure. In the description of a display 2300 illustrated in FIG. 23, a detailed description of components identical or similar to those of the display 500 in FIGS. 5 and 6A, the display 1300 in FIG. 13, the display 1400 in FIG. 14, the display 1500 in FIG. 15, and/or the display 2200 in FIG. 22 may be omitted.

With reference to FIG. 23, the electronic device (e.g., the electronic device 101 in FIG. 1, the electronic device 300 in FIGS. 3A and 3B, or the electronic device 400 in FIG. 4) according to various embodiments of the present disclosure may include the display 2300.

According to the embodiment, the display 2300 may include a display panel 2310 (e.g., the display panel 510 in FIGS. 5 and 6A), a metal plate 2320 (e.g., the metal plate 520 in FIGS. 5 and 6A), a first conductive plate 2330 (e.g., the first conductive plate 530 in FIGS. 6A and 6B), a second conductive plate 2340 (e.g., the second conductive plate 540 in FIGS. 5 and 6A), and a plurality of heat dissipation plating layers 2380.

In one embodiment, the display 2300 may include a polarizer (POL) (e.g., a polarizing film) and a window (e.g., a polyimide (PI) film or a ultra-thin glass (UTG)) sequentially disposed on an upper portion of the display panel 2310 (e.g., based on the z-axis direction).

In one embodiment, the window, the POL, the display panel 2310, the metal plate 2320, the first conductive plate 2330, the second conductive plate 2340, and the plurality of heat dissipation plating layers 2380 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 2310, the metal plate 2320, the first conductive plate 2330, the second conductive plate 2340, and the plurality of heat dissipation plating layers 2380 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 2300 may include a first area h1, a second area h2, and a third area h3 positioned between the first area h1 and the second area h2. For example, the first area h1 and the second area h2 may be constituted to be folded or unfolded about the third area h3.

According to the embodiment, the metal plate 2320 may be disposed on a lower portion of the display panel 2310 (e.g., based on the -z-axis direction).

In one embodiment, the metal plate 2320 may include liquid metal and have a thickness of about 12 um to 35 um. In one embodiment, an entire area of the metal plate 2320 may have substantially the same thickness. In another embodiment, the metal plate 2320 may be formed to have a plurality of thicknesses. For example, one area of the metal plate 2320 may have a first thickness (e.g., about 35 um), and another area of the metal plate 2320 may have a second thickness (e.g., about 12 um).

In one embodiment, the metal plate 2320 may be made of a material with an elastic strain ratio of 1.5% or higher and a modulus of 70 GPa or more. In one embodiment, the metal plate 2320 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 2320 may include polymer. In one embodiment, the metal plate 2320 may have a modulus 70 GPa or more and a yield strength 1200 MPa or higher. In one embodiment, specific resistance of the metal plate 2320 may be about 1500 (nΩ.m) or higher.

In case that the digitizer (e.g., the digitizer 1360 in FIG. 13) is applied to the display 2300, the high electrical resistance of the metal plate 2320 may be advantageous in transmitting a signal of the digitizer (e.g., the digitizer 1360 in FIG. 13) to the digitizer pen (e.g., the stylus pen).

The metal plate 2320 may reinforce the rigidity of the display panel 2310 and support the display panel 2310. The metal plate 2320 may prevent the occurrence of folding marks and creases in the folding area (e.g., the third area h3) when the display 2300 is folded or unfolded.

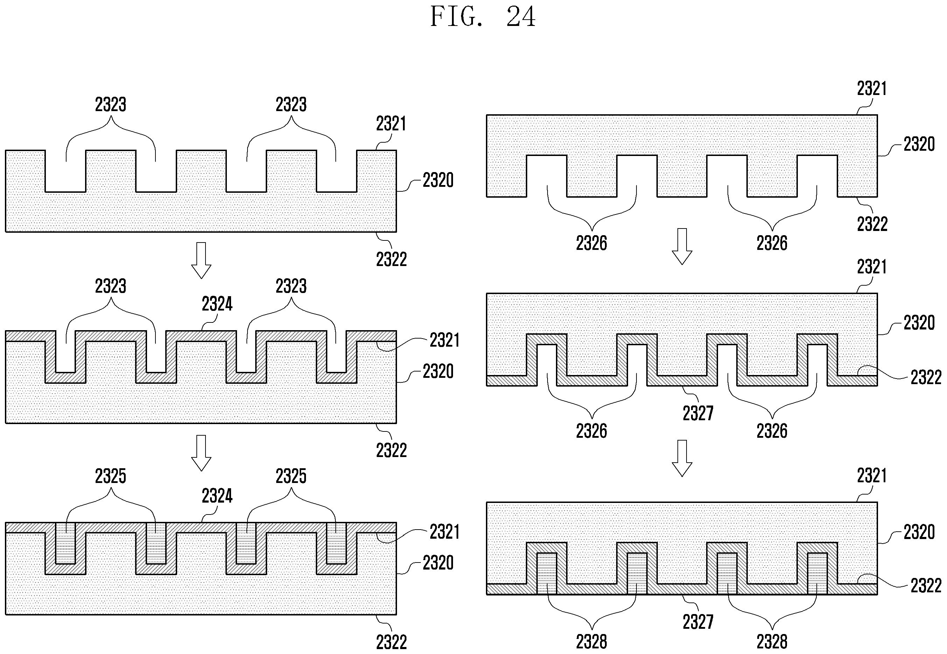

In one embodiment, the plurality of heat dissipation plating layers 2380 may be disposed on at least a part of an upper surface of the metal plate 2320 and at least a part of a lower surface of the metal plate 2320. For example, the plurality of heat dissipation plating layers 2380 may include a first heat dissipation plating layer 2382 and a second heat dissipation plating layer 2384. For example, the first heat dissipation plating layer 2382 may be disposed on at least a part of the upper surface of the metal plate 2320. The first heat dissipation plating layer 2382 may be positioned in the first area h1 and the second area h2 of the display 2300. For example, the second heat dissipation plating layer 2384 may be disposed on at least a part of the lower surface of the metal plate 2320. The second heat dissipation plating layer 2384 may be positioned in the first area h1 and the second area h2 of the display 2300. For example, in order to improve folding performance and heat dissipation performance of the display 2300, the first heat dissipation plating layer 2382 and the second heat dissipation plating layer 2384 may be disposed on the planar portion (e.g., the first area h1 and the second area h2) of the display 2300. The plurality of heat dissipation plating layers 2380 may disperse heat discharged from peripheral heat-radiating components. FIG. 24 is a view illustrating an example of a method of manufacturing a display of the present disclosure.

With reference to FIGS. 23 and 24, in one embodiment, a first heat dissipation plating layer 2324 (e.g., the first heat dissipation plating layer 2382 in FIG. 23), which has higher thermal conductivity than the metal plate 2320, may be disposed on at least a part of an upper surface 2321 of the metal plate 2320. The metal plate 2320 may include a first polymer layer 2325 having a predetermined elastic strain ratio (e.g., an elastic strain ratio of 5%). For example, a plurality of grooves 2323 may be formed by performing half-etching on at least a part of the upper surface 2321 of the metal plate 2320, and the first heat dissipation plating layer 2324 (e.g., the first heat dissipation plating layer 2382 in FIG. 23) may be formed on at least a part of the upper surface 2321 of the metal plate 2320. The first heat dissipation plating layer 2324 may be formed to cover at least a part of the upper surface 2321 of the metal plate 2320 and the interiors of the plurality of grooves 2323. Thereafter, the first polymer layer 2325 may be formed by charging the plurality of grooves 2323 with polymer having a predetermined elastic strain ratio (e.g., an elastic strain ratio of 5%) in order to fill the plurality of grooves 2323. The first polymer layer 2325 may be formed to fill the plurality of grooves 2323, such that the upper surface 2321 of the metal plate 2320 may be substantially flattened.

In one embodiment, a second heat dissipation plating layer 2327 (e.g., the second heat dissipation plating layer 2384 in FIG. 23), which has higher thermal conductivity than the metal plate 2320, may be disposed on at least a part of a lower surface 2322 of the metal plate 2320. The metal plate 2320 may include a second polymer layer 2328 having a predetermined elastic strain ratio (e.g., an elastic strain ratio of 5%). For example, a plurality of grooves 2326 may be formed by performing half-etching on at least a part of the lower surface 2322 of the metal plate 2320, and the second heat dissipation plating layer 2327 (e.g., the second heat dissipation plating layer 2384 in FIG. 23) may be formed on at least a part of the lower surface 2322 of the metal plate 2320. The second heat dissipation plating layer 2328 may be formed to cover at least a part of the lower surface 2322 of the metal plate 2320 and the interiors of the plurality of grooves 2326. Thereafter, the second polymer layer 2328 may be formed by charging the plurality of grooves 2326 with polymer having a predetermined elastic strain ratio (e.g., an elastic strain ratio of 5%) in order to fill the plurality of grooves 2326. The second polymer layer 2328 may be formed to fill the plurality of grooves 2326, such that the lower surface 2322 of the metal plate 2320 may be substantially flattened.

According to the embodiment, the first conductive plate 2330 may be disposed on a lower portion of the metal plate 2320 (e.g., based on the -z-axis direction). The first conductive plate 2330 may be provided in the form of a metal sheet and assist in reinforcing the rigidity of the electronic device. The first conductive plate 2330 may be used to block surrounding noise and disperse heat discharged from peripheral heat-radiating components. For example, the first conductive plate 2330 may include at least one of Cu, Al, SUS, or CLAD (e.g., a stack member in which SUS and Al are alternately disposed). In another example, the first conductive plate 2330 may include other alloy materials.

The first conductive plate 2330 may include a first planar portion 2331, a second planar portion 2332, and a flexible portion 2333. In one embodiment, the first planar portion 2331, the second planar portion 2332, and the flexible portion 2333 of the first conductive plate 2330 may be integrated.

In one embodiment, the first planar portion 2331 of the first conductive plate 2330 may face (e.g., overlap based on the z-axis) the first area h1 of the display 2300. In one embodiment, the second planar portion 2332 of the first conductive plate 2330 may face (e.g., overlap based on the z-axis) the second area h2 of the display 2300. In one embodiment, the flexible portion 2333 of the first conductive plate 2330 may face (e.g., overlap based on the z-axis) the third area h3 of the display 2300.

According to the embodiment, the first conductive plate 2330 may be folded or unfolded together with the display panel 2310 by means of at least a part of the flexible portion 2333.

In one embodiment, the second conductive plate 2340 may be disposed on a lower portion of the first conductive plate 2330 (e.g., based on the -z-axis direction).

In one embodiment, the second conductive plate 2340 may include a first portion 2342 and a second portion 2344. For example, the first portion 2342 may face (e.g., overlap based on the z-axis) the first area h1 of the display 2300. The second portion 2344 may face (e.g., overlap based on the z-axis) the second area h2 of the display 2300. For example, the second conductive plate 2340 may not be formed on the portion that faces (e.g., overlaps based on the z-axis) the flexible portion 2333 of the first conductive plate 2330 (e.g., the portion that faces the third area h3 of the display 2300).

In one embodiment, the first portion 2342 and the second portion 2344 of the second conductive plate 2340 may be disposed to be spaced apart from each other at a predetermined interval. For example, the first portion 2342 and the second portion 2344 of the second conductive plate 2340 may be disposed to be spaced apart from each other at a distance smaller than a width of the third area h3 of the display 2300. For example, the first portion 2342 and the second portion 2344 of the second conductive plate 2340 may be disposed to be spaced apart from each other by a width of the flexible portion 2333 of the first conductive plate 2330 or disposed to be spaced apart from each other at a distance smaller than the width of the flexible portion 2333.

In one embodiment, because the first portion 2342 and the second portion 2344 of the second conductive plate 2340 are separated, a U type may be defined when the display 2300 is folded.

In one embodiment, the second conductive plate 2340 may be provided in the form of a metal sheet and assist in reinforcing the rigidity of the electronic device. The second conductive plate 2340 may be used to support the first conductive plate 2330 and disperse heat discharged from peripheral heat-radiating components. For example, the second conductive plate 2340 may include at least one of Cu, Al, SUS, or CLAD (e.g., a stack member in which SUS and Al are alternately disposed). In another example, the second conductive plate 2340 may include other alloy materials.

In one embodiment, the display panel 2310, the metal plate 2320, the first conductive plate 2330, the second conductive plate 2340, and the plurality of heat dissipation plating layers 2380 may be attached to one another by means of the adhesive members P1, P2, and P3. For example, the adhesive members P1, P2, and P3 may each include at least one of an optical clear adhesive (OCA), a pressure sensitive adhesive (PSA), a thermally reactive bonding agent, thermoplastic polyurethane, a general bonding agent, or a double-sided tape.

In one embodiment, the first adhesive member P1 may be disposed between a lower portion of the display panel 2310, an upper portion of the metal plate 2320, and an upper portion of the first heat dissipation plating layer 2382 and join the display panel 2310, the metal plate 2320, and the first heat dissipation plating layer 2382.

In one embodiment, the second adhesive member P2 may be disposed between a lower portion of the metal plate 2320, a lower portion of the second heat dissipation plating layer 2384, and an upper portion of the first conductive plate 2330 and join the metal plate 2320, the second heat dissipation plating layer 2384, and the first conductive plate 2330. For example, the second adhesive member P2 may include a first portion P2a and a second portion P2b. The first portion P2a of the second adhesive member P2 may face (e.g., overlap based on the z-axis) the first area h1 of the display 2300. The second portion P2b of the second adhesive member P2 may face (e.g., overlap based on the z-axis) the second area h2 of the display 2300. The second adhesive member P2 may not be formed on a portion h3a that faces (e.g., overlaps based on the z-axis) the flexible portion 2333 of the first conductive plate 2330 (e.g., a portion that faces the third area h3 of the display 2300).

In one embodiment, the third adhesive member P3 may be disposed between a lower portion of the first conductive plate 2330 and an upper portion of the second conductive plate 2340 and join the first conductive plate 2330 and the second conductive plate 2340. For example, the third adhesive member P3 may include a first portion P3a, a second portion P3b, and a third portion P3c. For example, the first portion P3a of the third adhesive member P3 may face (e.g., overlap based on the z-axis) the first area h1 of the display 2300. The second portion P3b of the third adhesive member P3 may face (e.g., overlap based on the z-axis) the second area h2 of the display 2300. The third portion P3c of the third adhesive member P3 may face (e.g., overlap based on the z-axis) the third area h3 of the display 2300 (e.g., the flexible portion 2333 of the first conductive plate 2330).

For example, the first portion P3a and the second portion P3b of the third adhesive member P3 may each have a first thickness, and the third portion P3c of the third adhesive member P3 may have a second thickness smaller than the first thickness. The third adhesive member P3 may be attached to the entire lower surface of the first conductive plate 2330. The third adhesive member P3 may not be attached to an area of at least a part of the second conductive plate 2340. The third adhesive member P3 may not be formed in a portion 2346 where the first portion 2342 and the second portion 2344 of the second conductive plate 2340 are separated.

In the display 2300 of the electronic device (e.g., the electronic device 101 in FIG. 1, the electronic device 300 in FIGS. 3A and 3B, or the electronic device 400 in FIG. 4) according to various embodiments of the present disclosure, the second adhesive member P2 is not formed in the portion h3a that faces the flexible portion 2333 of the first conductive plate 2330 in the folding area (e.g., the third area h3), such that the thickness of the third portion P3c of the third adhesive member P3 may be reduced, and the stress caused by the folding/unfolding operation may be reduced.

In the display 2300 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 2320 (e.g., the liquid metal plate), the plurality of conductive plates 2330 and 2340, and the plurality of heat dissipation plating layers 2380 are provided to support the foldable display panel 2310 (e.g., the flexible display panel). Therefore, it is possible to prevent the occurrence of folding marks and creases on the display 2300 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

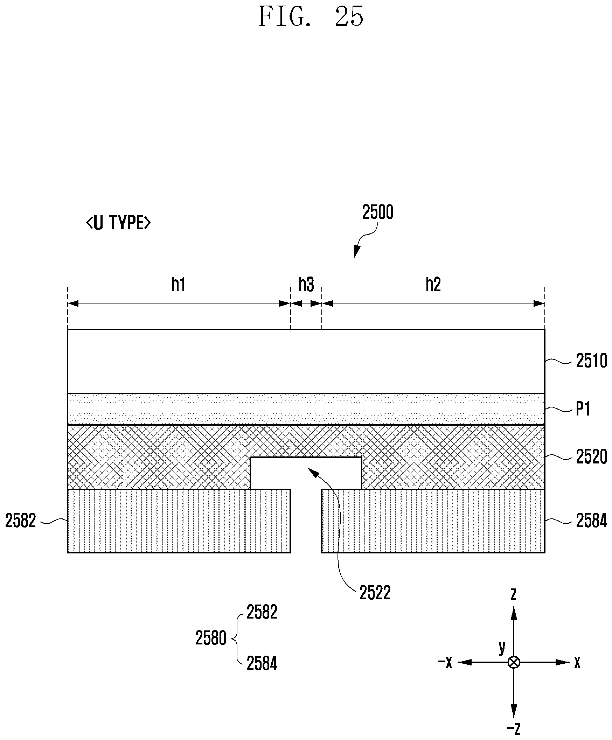

FIG. 25 is a cross-sectional view illustrating the layered structure of the display according to various embodiments of the present disclosure. In the description of a display 2500 illustrated in FIG. 25, a detailed description of components identical or similar to those of the display 1300 in FIG. 13, the display 1400 in FIG. 14, and/or the display 1500 in FIG. 15 may be omitted.

With reference to FIG. 25, the electronic device (e.g., the electronic device 101 in FIG. 1, the electronic device 300 in FIGS. 3A and 3B, or the electronic device 400 in FIG. 4) according to various embodiments of the present disclosure may include the display 2500.

According to the embodiment, the display 2500 may include a display panel 2510 (e.g., the display panel 1310 in FIG. 13), a metal plate 2520 (e.g., the metal plate 1320 in FIG. 13), and a heat dissipation plate 2580 (e.g., the heat dissipation plate 2270 in FIG. 22).

In one embodiment, the display 2500 may include a polarizer (POL) (e.g., a polarizing film) and a window (e.g., a polyimide (PI) film or a ultra-thin glass (UTG)) sequentially disposed on an upper portion of the display panel 2510 (e.g., based on the z-axis direction).

In one embodiment, the window, the POL, the display panel 2510, the metal plate 2520, and the heat dissipation plate 2580 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 2510, the metal plate 2520, and the heat dissipation plate 2580 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 2500 may include a first area h1, a second area h2, and a third area h3 positioned between the first area h1 and the second area h2. For example, the first area h1 and the second area h2 may be constituted to be folded or unfolded about the third area h3.

In one embodiment, the display panel 2510 and the metal plate 2520 may be attached to each other by means of the adhesive member P1. For example, the adhesive member P1 may include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 2520 may be disposed on a lower portion of the display panel 2510 (e.g., based on the -z-axis direction).

In one embodiment, the metal plate 2520 may include liquid metal and have a thickness of about 12 um to 35 um. In one embodiment, the metal plate 2520 may be formed to have a plurality of thicknesses. For example, one area of the metal plate 2520 may have a first thickness (e.g., about 35 um), and another area of the metal plate 2520 may have a second thickness (e.g., about 12 um).

In one embodiment, at least a part of the metal plate 2520 (e.g., a portion 2522 having a small thickness) (e.g., a portion that overlaps the third area h3 of the display 2510) has a small thickness (e.g., about 12 um), such that a stepped portion may be formed. For example, the portion 2522 where the metal plate 2520 has a small thickness may overlap (e.g., overlap based on the z-axis direction) a part of the first area h1 of the display 2510. For example, the portion 2522 where the metal plate 2520 has a small thickness may overlap (e.g., overlap based on the z-axis direction) a part of the second area h2 of the display 2510.

In one embodiment, the metal plate 2520 may be made of a material with an elastic strain ratio of 1.5% or higher and a modulus of 70 GPa or more. In one embodiment, the metal plate 2520 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 2520 may include polymer. In one embodiment, the metal plate 2520 may have a modulus 70 GPa or more and a yield strength 1200 MPa or higher. In one embodiment, specific resistance of the metal plate 2520 may be about 1500 (nΩ.m) or higher. For example, in case that the display 2500 includes the digitizer (e.g., the digitizer 1360 in FIG. 13), the high electrical resistance of the metal plate 2520 may be advantageous in transmitting a signal of the digitizer to the digitizer pen (e.g., the stylus pen).

The metal plate 2520 may reinforce the rigidity of the display panel 2510 and support the display panel 2510. The metal plate 2520 may prevent the occurrence of folding marks and creases in the folding area (e.g., the third area h3) when the display 2500 is folded or unfolded.

According to the embodiment, the heat dissipation plate 2580 may be disposed on a lower portion of the metal plate 2520 (e.g., based on the -z-axis direction).

In one embodiment, the heat dissipation plate 2580 may include a first portion 2582 and a second portion 2584. For example, the first portion 2582 of the heat dissipation plate 2580 may face (e.g., overlap based on the z-axis) the first area h1 of the display 2500. The second portion 2584 of the heat dissipation plate 2580 may face (e.g., overlap based on the z-axis) the second area h2 of the display 2500. The heat dissipation plate 2580 may not be formed on the portion that overlaps (e.g., overlaps based on the z-axis) the third area h3 of the display 2500.

In one embodiment, the first portion 2582 and the second portion 2584 of the heat dissipation plate 2580 may be disposed to be spaced apart from each other at a predetermined interval. For example, the first portion 2582 and the second portion 2584 of the heat dissipation plate 2580 may be disposed to be spaced apart from each other at a distance equal to a width of the third area h3 of the display 2500 or disposed to be spaced apart from each other at a distance smaller than the width of the third area h3.

In one embodiment, the heat dissipation plate 2580 may be provided in the form of a metal sheet and assist in reinforcing the rigidity of the electronic device. The heat dissipation plate 2580 may be used to support the metal plate 2520 and disperse heat discharged from peripheral heat-radiating components.

In the display 2500 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 2520 (e.g., the liquid metal plate) and the heat dissipation plate 2580 are provided to support the foldable display panel 2510 (e.g., the flexible display panel). Therefore, it is possible to prevent the occurrence of folding marks and creases on the display 2500 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

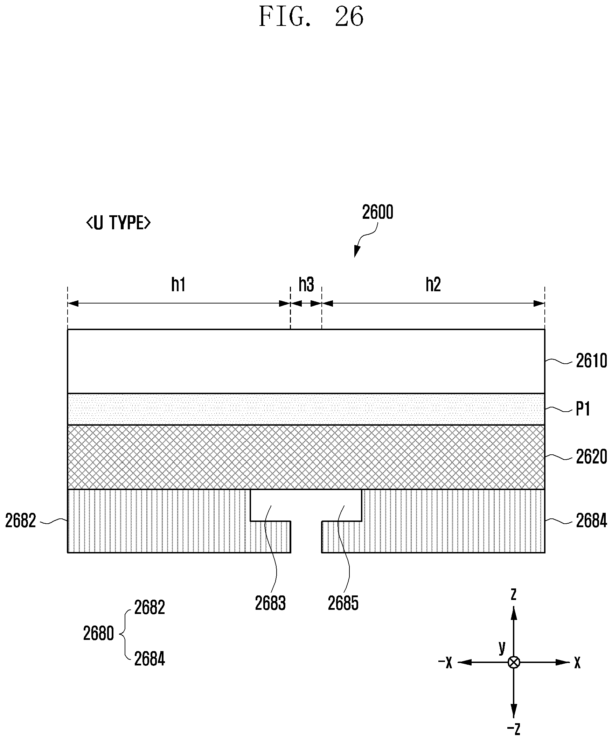

FIG. 26 is a cross-sectional view illustrating the layered structure of the display according to various embodiments of the present disclosure. In the description of a display 2600 illustrated in FIG. 26, a detailed description of components identical or similar to those of the display 2500 in FIG. 25 may be omitted.

With reference to FIG. 26, the electronic device (e.g., the electronic device 101 in FIG. 1, the electronic device 300 in FIGS. 3A and 3B, or the electronic device 400 in FIG. 4) according to various embodiments of the present disclosure may include the display 2600.

According to the embodiment, the display 2600 may include a display panel 2610 (e.g., the display panel 1310 in FIG. 13 or the display panel 2510 in FIG. 25), a metal plate 2620 (e.g., the metal plate 1320 in FIG. 13 or the metal plate 2520 in FIG. 25), and a heat dissipation plate 2680 (e.g., the heat dissipation plate 2270 in FIG. 22 or the heat dissipation plate 2580 in FIG. 25).

In one embodiment, the display 2600 may include a polarizer (POL) (e.g., a polarizing film) and a window (e.g., a polyimide (PI) film or a ultra-thin glass (UTG)) sequentially disposed on an upper portion of the display panel 2610 (e.g., based on the z-axis direction).

In one embodiment, the window, the POL, the display panel 2610, the metal plate 2620, and the heat dissipation plate 2680 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 2610, the metal plate 2620, and the heat dissipation plate 2680 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 2600 may include a first area h1, a second area h2, and a third area h3 positioned between the first area h1 and the second area h2. For example, the first area h1 and the second area h2 may be constituted to be folded or unfolded about the third area h3.

In one embodiment, the display panel 2610 and the metal plate 2620 may be attached to each other by means of the adhesive member P1. For example, the adhesive member P1 may include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 2620 may be disposed on a lower portion of the display panel 2610 (e.g., based on the -z-axis direction).

In one embodiment, the metal plate 2620 may include liquid metal and have a thickness of about 12 um to 35 um. In one embodiment, an entire area of the metal plate 2620 may have substantially the same thickness.

In one embodiment, the metal plate 2620 may be made of a material with an elastic strain ratio of 1.5% or higher and a modulus of 70 GPa or more. In one embodiment, the metal plate 2620 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 2620 may include polymer. In one embodiment, the metal plate 2620 may have a modulus 70 GPa or more and a yield strength 1200 MPa or higher. In one embodiment, specific resistance of the metal plate 2620 may be about 1500 (nΩ.m) or higher. For example, in case that the display 2600 includes the digitizer (e.g., the digitizer 1360 in FIG. 13), the high electrical resistance of the metal plate 2620 may be advantageous in transmitting a signal of the digitizer to the digitizer pen (e.g., the stylus pen).

The metal plate 2620 may reinforce the rigidity of the display panel 2610 and support the display panel 2610. The metal plate 2620 may prevent the occurrence of folding marks and creases in the folding area (e.g., the third area h3) when the display 2600 is folded or unfolded.

According to the embodiment, the heat dissipation plate 2680 may be disposed on a lower portion of the metal plate 2620 (e.g., based on the -z-axis direction).

In one embodiment, the heat dissipation plate 2680 may include a first portion 2682 and a second portion 2684. For example, the first portion 2682 of the heat dissipation plate 2680 may face (e.g., overlap based on the z-axis) the first area h1 of the display 2600. The second portion 2684 of the heat dissipation plate 2680 may face (e.g., overlap based on the z-axis) the second area h2 of the display 2600. The heat dissipation plate 2680 may not be formed on the portion that overlaps (e.g., overlaps based on the z-axis) the third area h3 of the display 2600.

In one embodiment, the first portion 2682 and the second portion 2684 of the heat dissipation plate 2680 may be disposed to be spaced apart from each other at a predetermined interval. For example, the first portion 2682 and the second portion 2684 of the heat dissipation plate 2680 may be disposed to be spaced apart from each other at a distance equal to a width of the third area h3 of the display 2600 or disposed to be spaced apart from each other at a distance smaller than the width of the third area h3.

In one embodiment, the portion of the first portion 2682 of the heat dissipation plate 2680, which is adjacent to the metal plate 2620 and the second portion 2684, has a small thickness, such that a stepped portion 2683 may be formed.

In one embodiment, the portion of the second portion 2684 of the heat dissipation plate 2680, which is adjacent to the metal plate 2620 and the first portion 2682, has a small thickness, such that a stepped portion 2685 may be formed.

In one embodiment, the heat dissipation plate 2680 may be provided in the form of a metal sheet and assist in reinforcing the rigidity of the electronic device. The heat dissipation plate 2680 may be used to support the metal plate 2620 and disperse heat discharged from peripheral heat-radiating components.

In the display 2600 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 2620 (e.g., the liquid metal plate) and the heat dissipation plate 2680 are provided to support the foldable display panel 2610 (e.g., the flexible display panel). Therefore, it is possible to prevent the occurrence of folding marks and creases on the display 2600 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

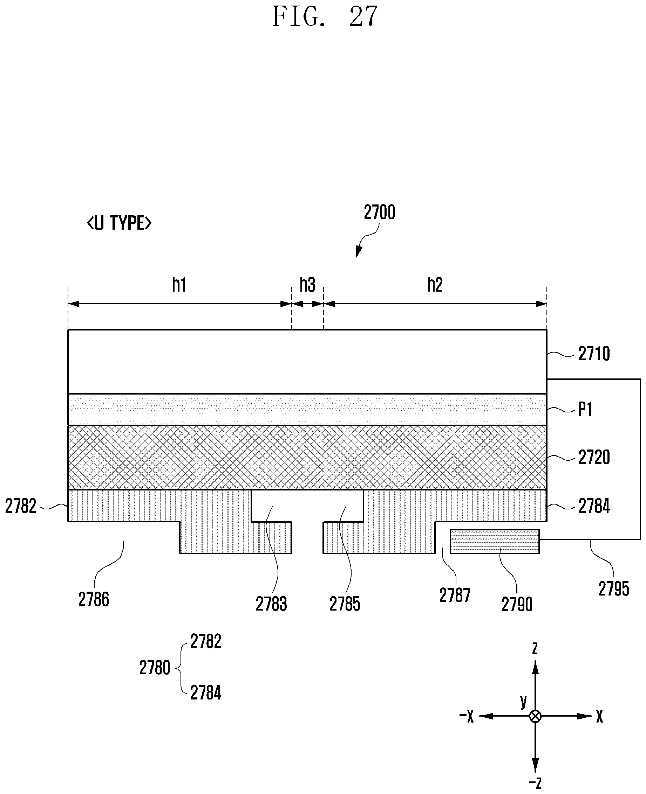

FIG. 27 is a cross-sectional view illustrating the layered structure of the display according to various embodiments of the present disclosure. In the description of a display 2700 illustrated in FIG. 27, a detailed description of components identical or similar to those of the display 2500 in FIG. 25 and/or the display 2600 in FIG. 26 may be omitted.

With reference to FIG. 27, the electronic device (e.g., the electronic device 101 in FIG. 1, the electronic device 300 in FIGS. 3A and 3B, or the electronic device 400 in FIG. 4) according to various embodiments of the present disclosure may include the display 2700.

According to the embodiment, the display 2700 may include a display panel 2710 (e.g., the display panel 1310 in FIG. 13, the display panel 2510 in FIG. 25, or the display panel 2610 in FIG. 26), a metal plate 2720 (e.g., the metal plate 1320 in FIG. 13, the metal plate 2520 in FIG. 25, or the metal plate 2620 in FIG. 26), and a heat dissipation plate 2780 (e.g., the heat dissipation plate 2270 in FIG. 22, the heat dissipation plate 2580 in FIG. 25, or the heat dissipation plate 2680 in FIG. 26).

In one embodiment, the display 2700 may include a polarizer (POL) (e.g., a polarizing film) and a window (e.g., a polyimide (PI) film or a ultra-thin glass (UTG)) sequentially disposed on an upper portion of the display panel 2710 (e.g., based on the z-axis direction).

In one embodiment, the window, the POL, the display panel 2710, the metal plate 2720, and the heat dissipation plate 2780 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 2710, the metal plate 2720, and the heat dissipation plate 2780 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 2700 may include a first area h1, a second area h2, and a third area h3 positioned between the first area h1 and the second area h2. For example, the first area h1 and the second area h2 may be constituted to be folded or unfolded about the third area h3.

In one embodiment, the display panel 2710 and the metal plate 2720 may be attached to each other by means of the adhesive member P1. For example, the adhesive member P1 may include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 2720 may be disposed on a lower portion of the display panel 2710 (e.g., based on the -z-axis direction).

In one embodiment, the metal plate 2720 may include liquid metal and have a thickness of about 12 um to 35 um. In one embodiment, an entire area of the metal plate 2720 may have substantially the same thickness.

In one embodiment, the metal plate 2720 may be made of a material with an elastic strain ratio of 1.5% or higher and a modulus of 70 GPa or more. In one embodiment, the metal plate 2720 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 2720 may include polymer. In one embodiment, the metal plate 2720 may have a modulus 70 GPa or more and a yield strength 1200 MPa or higher. In one embodiment, specific resistance of the metal plate 2720 may be about 1500 (nΩ.m) or higher. For example, in case that the display 2700 includes the digitizer (e.g., the digitizer 1360 in FIG. 13), the high electrical resistance of the metal plate 2720 may be advantageous in transmitting a signal of the digitizer to the digitizer pen (e.g., the stylus pen).

The metal plate 2720 may reinforce the rigidity of the display panel 2710 and support the display panel 2710. The metal plate 2720 may prevent the occurrence of folding marks and creases in the folding area (e.g., the third area h3) when the display 2700 is folded or unfolded.

According to the embodiment, the heat dissipation plate 2780 may be disposed on a lower portion of the metal plate 2720 (e.g., based on the -z-axis direction).

In one embodiment, the heat dissipation plate 2780 may include a first portion 2782 and a second portion 2784. For example, the first portion 2782 of the heat dissipation plate 2780 may face (e.g., overlap based on the z-axis) the first area h1 of the display 2700. The second portion 2784 of the heat dissipation plate 2780 may face (e.g., overlap based on the z-axis) the second area h2 of the display 2700. The heat dissipation plate 2780 may not be formed on the portion that overlaps (e.g., overlaps based on the z-axis) the third area h3 of the display 2700.

In one embodiment, the first portion 2782 and the second portion 2784 of the heat dissipation plate 2780 may be disposed to be spaced apart from each other at a predetermined interval. For example, the first portion 2782 and the second portion 2784 of the heat dissipation plate 2780 may be disposed to be spaced apart from each other at a distance equal to a width of the third area h3 of the display 2700 or disposed to be spaced apart from each other at a distance smaller than the width of the third area h3.

In one embodiment, the portion of the first portion 2782 of the heat dissipation plate 2780, which is adjacent to the metal plate 2720 and the second portion 2784, has a small thickness, such that a stepped portion 2783 may be formed. In addition, the portion of the first portion 2782 of the heat dissipation plate 2780, which overlaps (e.g., overlaps based on the z-axis direction) the first area h1 of the display 2700 and is adjacent to an edge portion of the display 2700 in the -x-axis direction, has a small thickness, such that a stepped portion 2786 may be formed.

In one embodiment, the portion of the second portion 2784 of the heat dissipation plate 2780, which is adjacent to the metal plate 2720 and the first portion 2782, has a small thickness, such that a stepped portion 2785 may be formed. In addition, the portion of the second portion 2784 of the heat dissipation plate 2780, which overlaps (e.g., overlaps based on the z-axis direction) the second area h2 of the display 2700 and is adjacent to an edge portion of the display 2700 in the x-axis direction, has a small thickness, such that a stepped portion 2787 may be formed.

In one embodiment, an electronic component 2790 (e.g., a display driver) for operating the display panel 2710 may be disposed in a space defined by the stepped portion 2787 of the second portion 2784 of the heat dissipation plate 2780 (e.g., a portion adjacent to the edge portion of the display 2700 in the x-axis direction). The display panel 2710 and the electronic component 2790 may be electrically connected by a connection part 2795 (e.g., a flexible circuit board or a connector).

In one embodiment, the heat dissipation plate 2780 may be provided in the form of a metal sheet and assist in reinforcing the rigidity of the electronic device. The heat dissipation plate 2780 may be used to support the metal plate 2720 and disperse heat discharged from peripheral heat-radiating components.

In the display 2700 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 2720 (e.g., the liquid metal plate) and the heat dissipation plate 2780 are provided to support the foldable display panel 2710 (e.g., the flexible display panel). Therefore, it is possible to prevent the occurrence of folding marks and creases on the display 2700 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

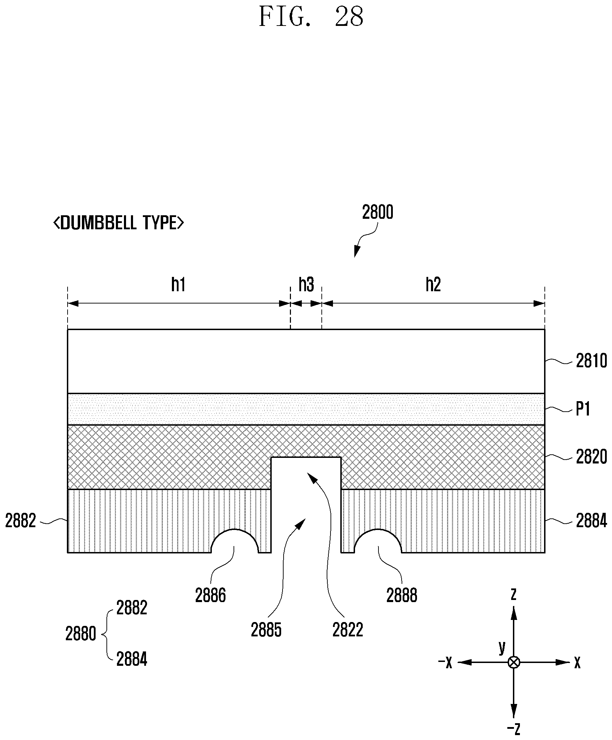

FIG. 28 is a cross-sectional view illustrating the layered structure of the display according to various embodiments of the present disclosure. In the description of a display 2800 illustrated in FIG. 28, a detailed description of components identical or similar to those of the display 1300 in FIG. 13, the display 1400 in FIG. 14, the display 1500 in FIG. 15, and/or the display 2500 in FIG. 25 may be omitted.

With reference to FIG. 28, the electronic device (e.g., the electronic device 101 in FIG. 1, the electronic device 300 in FIGS. 3A and 3B, or the electronic device 400 in FIG. 4) according to various embodiments of the present disclosure may include the display 2800.

According to the embodiment, the display 2800 may include a display panel 2810 (e.g., the display panel 1310 in FIG. 13), a metal plate 2820 (e.g., the metal plate 1320 in FIG. 13), and a heat dissipation plate 2880 (e.g., the heat dissipation plate 2270 in FIG. 22 or or the heat dissipation plate 2580 in FIG. 25).

In one embodiment, the display 2800 may include a polarizer (POL) (e.g., a polarizing film) and a window (e.g., a polyimide (PI) film or a ultra-thin glass (UTG)) sequentially disposed on an upper portion of the display panel 2810 (e.g., based on the z-axis direction).

In one embodiment, the window, the POL, the display panel 2810, the metal plate 2820, and the heat dissipation plate 2880 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 2810, the metal plate 2820, and the heat dissipation plate 2880 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 2800 may include a first area h1, a second area h2, and a third area h3 positioned between the first area h1 and the second area h2. For example, the first area h1 and the second area h2 may be constituted to be folded or unfolded about the third area h3.

In one embodiment, the display panel 2810 and the metal plate 2820 may be attached to each other by means of the adhesive member P1. For example, the adhesive member P1 may include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 2820 may be disposed on a lower portion of the display panel 2810 (e.g., based on the -z-axis direction).

In one embodiment, the metal plate 2820 may include liquid metal and have a thickness of about 12 um to 35 um. In one embodiment, the metal plate 2820 may be formed to have a plurality of thicknesses. For example, one area of the metal plate 2820 may have a first thickness (e.g., about 35 um), and another area of the metal plate 2820 may have a second thickness (e.g., about 12 um).

In one embodiment, at least a part of the metal plate 2820 (e.g., a portion 2822 having a small thickness) (e.g., a portion that overlaps the third area h3 of the display 2810) has a small thickness (e.g., about 12 um), such that a stepped portion may be formed. For example, the portion 2822 where the metal plate 2820 has a small thickness may overlap (e.g., overlap based on the z-axis direction) a part of the first area h1 of the display 2810. For example, the portion 2822 where the metal plate 2820 has a small thickness may overlap (e.g., overlap based on the z-axis direction) a part of the second area h2 of the display 2810.

In one embodiment, the metal plate 2820 may be made of a material with an elastic strain ratio of 1.5% or higher and a modulus of 70 GPa or more. In one embodiment, the metal plate 2820 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 2820 may include polymer. In one embodiment, the metal plate 2820 may have a modulus 70 GPa or more and a yield strength 1200 MPa or higher. In one embodiment, specific resistance of the metal plate 2820 may be about 1500 (nΩ.m) or higher. For example, in case that the display 2800 includes the digitizer (e.g., the digitizer 1360 in FIG. 13), the high electrical resistance of the metal plate 2820 may be advantageous in transmitting a signal of the digitizer to the digitizer pen (e.g., the stylus pen).

The metal plate 2820 may reinforce the rigidity of the display panel 2810 and support the display panel 2810. The metal plate 2820 may prevent the occurrence of folding marks and creases in the folding area (e.g., the third area h3) when the display 2800 is folded or unfolded.

According to the embodiment, the heat dissipation plate 2880 may be disposed on a lower portion of the metal plate 2820 (e.g., based on the -z-axis direction).

In one embodiment, the heat dissipation plate 2880 may include a first portion 2882 and a second portion 2884. For example, the first portion 2882 of the heat dissipation plate 2880 may face (e.g., overlap based on the z-axis) at least a part of the first area h1 of the display 2800. The second portion 2884 of the heat dissipation plate 2880 may face (e.g., overlap based on the z-axis) at least a part of the second area h2 of the display 2800. For example, the heat dissipation plate 2880 may not be formed on the portion that overlaps (e.g., overlaps based on the z-axis) the third area h3 of the display 2800. The heat dissipation plate 2880 may not be formed even on the portion that overlaps (e.g., overlaps based on the z-axis) the first area h1 of the display 2800. The heat dissipation plate 2880 may not be formed even on the portion that overlaps (e.g., overlaps based on the z-axis) the second area h2 of the display 2800.

In one embodiment, the first portion 2882 and the second portion 2884 of the heat dissipation plate 2880 may be disposed to be spaced apart from each other at a predetermined interval. For example, the first portion 2882 and the second portion 2884 of the heat dissipation plate 2880 may be disposed to be spaced apart from each other at a distance equal to a width of the third area h3 of the display 2800 or disposed to be spaced apart from each other at a distance larger than the width of the third area h3. The portion where the first portion 2882 and the second portion 2884 are spaced apart from each other may be an empty space 2885.

In one embodiment, the portion of the first portion 2882 of the heat dissipation plate 2880, which is adjacent to the empty space 2885, has a small thickness, such that a stepped portion 2886 may be formed.

In one embodiment, the portion of the second portion 2884 of the heat dissipation plate 2880, which is adjacent to the empty space 2885, has a small thickness, such that a stepped portion 2888 may be formed.

In one embodiment, the heat dissipation plate 2880 may be provided in the form of a metal sheet and assist in reinforcing the rigidity of the electronic device. The heat dissipation plate 2880 may be used to support the metal plate 2820 and disperse heat discharged from peripheral heat-radiating components.

In the display 2800 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 2820 (e.g., the liquid metal plate) and the heat dissipation plate 2880 are provided to support the foldable display panel 2810 (e.g., the flexible display panel). Therefore, it is possible to prevent the occurrence of folding marks and creases on the display 2800 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

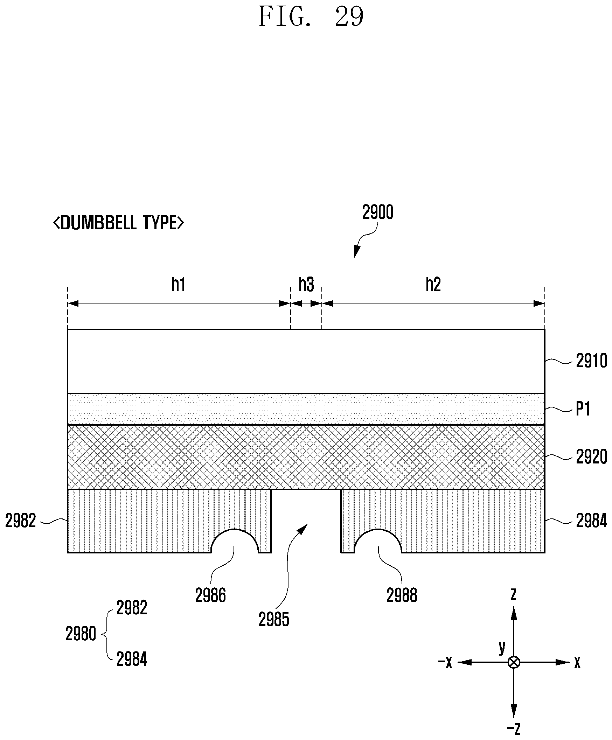

FIG. 29 is a cross-sectional view illustrating the layered structure of the display according to various embodiments of the present disclosure. In the description of a display 2900 illustrated in FIG. 29, a detailed description of components identical or similar to those of the displays 2500, 2600, 2700, and 2800 in FIGS. 25 to 28 may be omitted.

With reference to FIG. 29, the electronic device (e.g., the electronic device 101 in FIG. 1, the electronic device 300 in FIGS. 3A and 3B, or the electronic device 400 in FIG. 4) according to various embodiments of the present disclosure may include the display 2900.

According to the embodiment, the display 2900 may include a display panel 2910 (e.g., the display panel 1310 in FIG. 13, the display panel 2510 in FIG. 25, or the display panel 2610 in FIG. 26), a metal plate 2920 (e.g., the metal plate 1320 in FIG. 13, the metal plate 2520 in FIG. 25, or the metal plate 2920 in FIG. 26), and a heat dissipation plate 2980 (e.g., the heat dissipation plate 2270 in FIG. 22, the heat dissipation plate 2580 in FIG. 25, or the heat dissipation plate 2680 in FIG. 26).

In one embodiment, the display 2900 may include a polarizer (POL) (e.g., a polarizing film) and a window (e.g., a polyimide (PI) film or a ultra-thin glass (UTG)) sequentially disposed on an upper portion of the display panel 2910 (e.g., based on the z-axis direction).

In one embodiment, the window, the POL, the display panel 2910, the metal plate 2920, and the heat dissipation plate 2980 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 2910, the metal plate 2920, and the heat dissipation plate 2980 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 2900 may include a first area h1, a second area h2, and a third area h3 positioned between the first area h1 and the second area h2. For example, the first area h1 and the second area h2 may be constituted to be folded or unfolded about the third area h3.

In one embodiment, the display panel 2910 and the metal plate 2920 may be attached to each other by means of the adhesive member P1. For example, the adhesive member P1 may include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 2920 may be disposed on a lower portion of the display panel 2910 (e.g., based on the -z-axis direction).

In one embodiment, the metal plate 2920 may include liquid metal and have a thickness of about 12 um to 35 um. In one embodiment, an entire area of the metal plate 2920 may have substantially the same thickness.

In one embodiment, the metal plate 2920 may be made of a material with an elastic strain ratio of 1.5% or higher and a modulus of 70 GPa or more. In one embodiment, the metal plate 2920 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 2920 may include polymer. In one embodiment, the metal plate 2920 may have a modulus 70 GPa or more and a yield strength 1200 MPa or higher. In one embodiment, specific resistance of the metal plate 2920 may be about 1500 (nΩ.m) or higher. For example, in case that the display 2900 includes the digitizer (e.g., the digitizer 1360 in FIG. 13), the high electrical resistance of the metal plate 2920 may be advantageous in transmitting a signal of the digitizer to the digitizer pen (e.g., the stylus pen).

The metal plate 2920 may reinforce the rigidity of the display panel 2910 and support the display panel 2910. The metal plate 2920 may prevent the occurrence of folding marks and creases in the folding area (e.g., the third area h3) when the display 2900 is folded or unfolded.

According to the embodiment, the heat dissipation plate 2980 may be disposed on a lower portion of the metal plate 2920 (e.g., based on the -z-axis direction).

In one embodiment, the heat dissipation plate 2980 may include a first portion 2982 and a second portion 2984. For example, the first portion 2982 of the heat dissipation plate 2980 may face (e.g., overlap based on the z-axis) at least a part of the first area h1 of the display 2900. The second portion 2984 of the heat dissipation plate 2980 may face (e.g., overlap based on the z-axis) at least a part of the second area h2 of the display 2900. For example, the heat dissipation plate 2980 may not be formed on the portion that overlaps (e.g., overlaps based on the z-axis) the third area h3 of the display 2900. The heat dissipation plate 2980 may not be formed even on the portion that overlaps (e.g., overlaps based on the z-axis) the first area h1 of the display 2900. The heat dissipation plate 2980 may not be formed even on the portion that overlaps (e.g., overlaps based on the z-axis) the second area h2 of the display 2900.

In one embodiment, the first portion 2982 and the second portion 2984 of the heat dissipation plate 2980 may be disposed to be spaced apart from each other at a predetermined interval. For example, the first portion 2982 and the second portion 2984 of the heat dissipation plate 2980 may be disposed to be spaced apart from each other at a distance equal to a width of the third area h3 of the display 2900 or disposed to be spaced apart from each other at a distance larger than the width of the third area h3. The portion where the first portion 2982 and the second portion 2984 are spaced apart from each other may be an empty space 2985.

In one embodiment, the portion of the first portion 2982 of the heat dissipation plate 2980, which is adjacent to the empty space 2985, has a small thickness, such that a stepped portion 2986 may be formed.

In one embodiment, the portion of the second portion 2984 of the heat dissipation plate 2980, which is adjacent to the empty space 2985, has a small thickness, such that a stepped portion 2988 may be formed.

In one embodiment, the heat dissipation plate 2980 may be provided in the form of a metal sheet and assist in reinforcing the rigidity of the electronic device. The heat dissipation plate 2980 may be used to support the metal plate 2920 and disperse heat discharged from peripheral heat-radiating components.

In the display 2900 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 2920 (e.g., the liquid metal plate) and the heat dissipation plate 2980 are provided to support the foldable display panel 2910 (e.g., the flexible display panel). Therefore, it is possible to prevent the occurrence of folding marks and creases on the display 2900 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

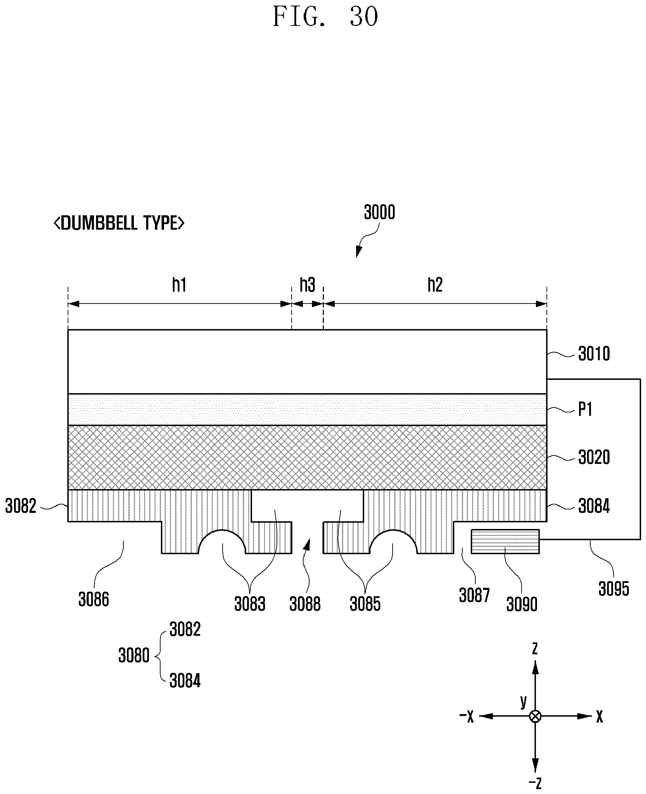

FIG. 30 is a cross-sectional view illustrating the layered structure of the display according to various embodiments of the present disclosure. In the description of a display 3000 illustrated in FIG. 30, a detailed description of components identical or similar to those of the displays 2500, 2600, 2700, 2800, and 2900 in FIGS. 25 to 29 may be omitted.

With reference to FIG. 30, the electronic device (e.g., the electronic device 101 in FIG. 1, the electronic device 300 in FIGS. 3A and 3B, or the electronic device 400 in FIG. 4) according to various embodiments of the present disclosure may include the display 3000.

According to the embodiment, the display 3000 may include a display panel 3010 (e.g., the display panel 1310 in FIG. 13, the display panel 2510 in FIG. 25, the display panel 2610 in FIG. 26, or the display panel 2710 in FIG. 27), a metal plate 3020 (e.g., the metal plate 1320 in FIG. 13, the metal plate 2520 in FIG. 25, the metal plate 2620 in FIG. 26, or the metal plate 2720 in FIG. 27), and a heat dissipation plate 3080 (e.g., the heat dissipation plate 2270 in FIG. 22, the heat dissipation plate 2580 in FIG. 25, the heat dissipation plate 2680 in FIG. 26, or the heat dissipation plate 2780 in FIG. 27).

In one embodiment, the display 3000 may include a polarizer (POL) (e.g., a polarizing film) and a window (e.g., a polyimide (PI) film or a ultra-thin glass (UTG)) sequentially disposed on an upper portion of the display panel 3010 (e.g., based on the z-axis direction).

In one embodiment, the window, the POL, the display panel 3010, the metal plate 3020, and the heat dissipation plate 3080 may be disposed in a space defined by the first housing structure (e.g., the first housing structure 311 in FIGS. 3A and 3B) and the second housing structure (e.g., the second housing structure 312 in FIGS. 3A and 3B). For example, the window, the POL, the display panel 3010, the metal plate 3020, and the heat dissipation plate 3080 may be disposed to traverse at least a part of the first surface (e.g., the front surface of the electronic device, i.e., the surface on which the screen is displayed when the electronic device is unfolded) of the first housing structure (e.g., the first housing structure 311 in FIGS. 3A and 3B) and at least a part of the first surface (e.g., the front surface of the electronic device, i.e., the surface on which the screen is displayed when the electronic device is unfolded) of the second housing structure (e.g., the second housing structure 312 in FIGS. 3A and 3B).

In one embodiment, the display 3000 may include a first area h1, a second area h2, and a third area h3 positioned between the first area h1 and the second area h2. For example, the first area h1 and the second area h2 may be constituted to be folded or unfolded about the third area h3.

In one embodiment, the display panel 3010 and the metal plate 3020 may be attached to each other by means of the adhesive member P1. For example, the adhesive member P1 may include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 3020 may be disposed on a lower portion of the display panel 3010 (e.g., based on the -z-axis direction).

In one embodiment, the metal plate 3020 may include liquid metal and have a thickness of about 12 um to 35 um. In one embodiment, an entire area of the metal plate 3020 may have substantially the same thickness.

In one embodiment, the metal plate 3020 may be made of a material with an elastic strain ratio of 1.5% or higher and a modulus of 70 GPa or more. In one embodiment, the metal plate 3020 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 3020 may include polymer. In one embodiment, the metal plate 3020 may have a modulus 70 GPa or more and a yield strength 1200 MPa or higher. In one embodiment, specific resistance of the metal plate 3020 may be about 1500 (nΩ.m) or higher. For example, in case that the display 3000 includes the digitizer (e.g., the digitizer 1360 in FIG. 13), the high electrical resistance of the metal plate 3020 may be advantageous in transmitting a signal of the digitizer to the digitizer pen (e.g., the stylus pen).

The metal plate 3020 may reinforce the rigidity of the display panel 3010 and support the display panel 3010. The metal plate 3020 may prevent the occurrence of folding marks and creases in the folding area (e.g., the third area h3) when the display 3000 is folded or unfolded.

According to the embodiment, the heat dissipation plate 3080 may be disposed on a lower portion of the metal plate 3020 (e.g., based on the -z-axis direction).

In one embodiment, the heat dissipation plate 3080 may include a first portion 3082 and a second portion 3084. For example, the first portion 3082 of the heat dissipation plate 3080 may face (e.g., overlap based on the z-axis) the first area h1 of the display 3000. The second portion 3084 of the heat dissipation plate 3080 may face (e.g., overlap based on the z-axis) the second area h2 of the display 3000. The heat dissipation plate 3080 may not be formed on the portion that overlaps (e.g., overlaps based on the z-axis) the third area h3 of the display 3000. The heat dissipation plate 3080 may not be formed even on the portion that overlaps (e.g., overlaps based on the z-axis) the first area h1 of the display 3000. The heat dissipation plate 3080 may not be formed even on the portion that overlaps (e.g., overlaps based on the z-axis) the second area h2 of the display 3000.

In one embodiment, the first portion 3082 and the second portion 3084 of the heat dissipation plate 3080 may be disposed to be spaced apart from each other at a predetermined interval. For example, the first portion 3082 and the second portion 3084 of the heat dissipation plate 3080 may be disposed to be spaced apart from each other at a distance equal to a width of the third area h3 of the display 3000 or disposed to be spaced apart from each other at a distance larger than the width of the third area h3. The portion where the first portion 3082 and the second portion 3084 are spaced apart from each other may be an empty space 3088.

In one embodiment, the portions of the first portion 3082 of the heat dissipation plate 3080, which are adjacent to the empty space 3088, each have a small thickness, such that stepped portions 3083 may be formed.

In one embodiment, the portions of the second portion 3084 of the heat dissipation plate 3080, which are adjacent to the empty space 3088, each have a small thickness, such that stepped portions 3085 may be formed.

In one embodiment, the portion of the first portion 3082 of the heat dissipation plate 3080, which overlaps (e.g., overlaps based on the z-axis direction) the first area h1 of the display 3000 and is adjacent to an edge portion of the display 3000 in the -x-axis direction, has a small thickness, such that a stepped portion 3086 may be formed.

In one embodiment, the portion of the second portion 3084 of the heat dissipation plate 3080, which overlaps (e.g., overlaps based on the z-axis direction) the second area h2 of the display 3000 and is adjacent to an edge portion of the display 3000 in the x-axis direction, has a small thickness, such that a stepped portion 3087 may be formed.

In one embodiment, an electronic component 3090 (e.g., a display driver) for operating the display panel 3010 may be disposed in a space defined by the stepped portion 3087 of the second portion 3084 of the heat dissipation plate 3080 (e.g., a portion adjacent to the edge portion of the display 3000 in the x-axis direction). The display panel 3010 and the electronic component 3090 may be electrically connected by a connection part 3095 (e.g., a flexible circuit board or a connector).

In one embodiment, the heat dissipation plate 3080 may be provided in the form of a metal sheet and assist in reinforcing the rigidity of the electronic device. The heat dissipation plate 3080 may be used to support the metal plate 3020 and disperse heat discharged from peripheral heat-radiating components.

In the display 3000 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 3020 (e.g., the liquid metal plate) and the heat dissipation plate 3080 are provided to support the foldable display panel 3010 (e.g., the flexible display panel). Therefore, it is possible to prevent the occurrence of folding marks and creases on the display 3000 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

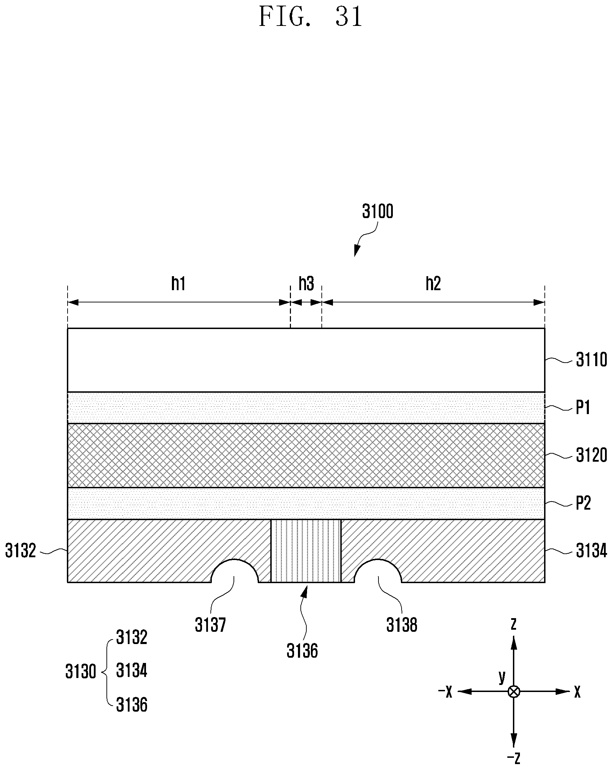

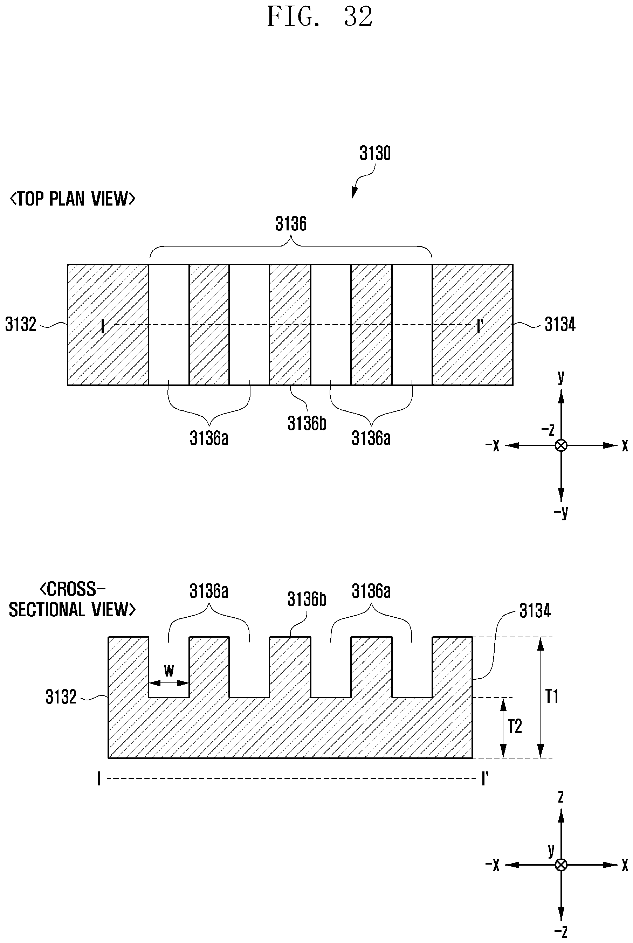

FIG. 31 is a view illustrating the layered structure of the display according to various embodiments of the present disclosure. FIG. 32 is a view illustrating a metal plate illustrated in FIG. 31 and illustrating a state in which a plurality of grooves is formed in the third area (e.g., the folding area). In the description of a display 3100 illustrated in FIGS. 31 and 32, a detailed description of components identical or similar to those of the display 500 in FIGS. 5 and 6A, the display 1100 in FIGS. 11 and 12, the displays 1300, 1400, 1500, 1600, 1700, and 1800 in FIGS. 13 to 18, or the displays 2500, 2600, 2700, 2800, 2900, and 3000 in FIGS. 25 to 30 may be omitted.

With reference to FIGS. 31 and 32, the electronic device (e.g., the electronic device 101 in FIG. 1, the electronic device 300 in FIGS. 3A and 3B, or the electronic device 400 in FIG. 4) according to various embodiments of the present disclosure may include the display 3100.

According to the embodiment, the display 3100 may include a display panel 3110 (e.g., the display panel 1310 in FIG. 13 or the display panel 2510 in FIG. 25), a metal plate 3120 (e.g., the metal plate 1320 in FIG. 13 or the metal plate 2520 in FIG. 25), and a conductive plate 3130 (e.g., the first conductive plate 530 or the second conductive plate 540 in FIG. 6A or the first conductive plate 1330 or the second conductive plate 1340 in FIG. 13).

In one embodiment, the display 3100 may include a first area h1, a second area h2, and a third area h3 positioned between the first area h1 and the second area h2. For example, the first area h1 and the second area h2 may be constituted to be folded or unfolded about the third area h3.

In one embodiment, the display panel 3110 and the metal plate 3120 may be attached to each other by means of the adhesive member P1. For example, the adhesive member P1 may include at least one of an optical clear adhesive (OCA), a pressure sensitive adhesive (PSA), a thermally reactive bonding agent, thermoplastic polyurethane, a general bonding agent, or a double-sided tape.

According to the embodiment, the metal plate 3120 may be disposed on a lower portion of the display panel 3110 (e.g., based on the -z-axis direction).

In one embodiment, the metal plate 3120 may include liquid metal and have a thickness of about 12 um to 35 um. In one embodiment, an entire area of the metal plate 2920 may have substantially the same thickness.

In one embodiment, the metal plate 3120 may be made of a material with an elastic strain ratio of 1.5% or higher and a modulus of 70 GPa or more. In one embodiment, the metal plate 2920 may have a composition of 55 to 70% of zirconium (Zr), 15 to 20% of copper (Cu), 10 to 15% of nickel (Ni), 2 to 6% of aluminum (Al), and 1 to 5% of titanium (Ti) on the basis of wt%. For example, the metal plate 3120 may include polymer. In one embodiment, the metal plate 3120 may have a modulus 70 GPa or more and a yield strength 1200 MPa or higher. In one embodiment, specific resistance of the metal plate 3120 may be about 1500 (nΩ.m) or higher. For example, in case that the display 3100 includes the digitizer (e.g., the digitizer 1360 in FIG. 13), the high electrical resistance of the metal plate 3120 may be advantageous in transmitting a signal of the digitizer to the digitizer pen (e.g., the stylus pen).

The metal plate 3120 may reinforce the rigidity of the display panel 3110 and support the display panel 3110. The metal plate 3120 may prevent the occurrence of folding marks and creases in the folding area (e.g., the third area h3) when the display 3100 is folded or unfolded.

According to the embodiment, the conductive plate 3130 may be disposed on a lower portion of the metal plate 3120 (e.g., based on the -z-axis direction).

In one embodiment, the metal plate 3120 and the conductive plate 3130 may be attached to each other by means of the adhesive member P2. For example, the adhesive member P2 may include at least one of an optical clear adhesive (OCA), a pressure sensitive adhesive (PSA), a thermally reactive bonding agent, thermoplastic polyurethane, a general bonding agent, or a double-sided tape.

The conductive plate 3130 may be provided in the form of a metal sheet and assist in reinforcing the rigidity of the electronic device. The conductive plate 3130 may be used to block surrounding noise and disperse heat discharged from peripheral heat-radiating components. For example, the conductive plate 3130 may include at least one of Cu, Al, SUS, or CLAD (e.g., a stack member in which SUS and Al are alternately disposed). In another example, the conductive plate 3130 may include other alloy materials.

In one embodiment, the first planar portion 3132, the second planar portion 3134, and the flexible portion 3136 of the conductive plate 3130 may be integrated.

In one embodiment, at least a part of the first planar portion 3132 may overlap the first area h1 of the display 3100 based on the z-axis.

In one embodiment, at least a part of the second planar portion 3134 may overlap the second area h2 of the display 3100 based on the z-axis.

In one embodiment, the flexible portion 3136 may be positioned to overlap the folding axis of the display panel 3110. For example, at least a part of the flexible portion 3136 may overlap the first area h1 based on the z-axis. For example, at least a part of the flexible portion 3136 may overlap the second area h2 based on the z-axis.

In one embodiment, the flexible portion 3136 may include half-etched portions. The half-etched portions may each have a small thickness (e.g., a second thickness T2 in FIG. 32).

For example, the flexible portion 3136 may have a plurality of grooves 3136a formed in the half-etched portions. The plurality of grooves 3136a may be disposed at predetermined intervals w. For example, the portions 3136b of the flexible portion 3136, which are not half-etched, may each have a first thickness T1. The portions (e.g., the half-etched portions) of the flexible portion 3136, which have the plurality of grooves 3136a, may each have the second thickness T2 smaller than the first thickness T1.

In another embodiment, the flexible portion 3136 may include patterns, and the patterns of the flexible portion 3136 may include a plurality of openings (e.g., the plurality of openings 5331 in FIG. 6B) disposed to be spaced apart from one another. In any embodiment, the patterns may also include a plurality of recesses spaced apart from one another at predetermined intervals.

According to the embodiment, in the unfolded state of the display 3100, the conductive plate 3130 may be folded together with the display panel 3110 by means of at least a part of the flexible portion 3136.

According to the embodiment, in the folded state of the display 3100, the conductive plate 3130 may be unfolded together with the display panel 3110 by means of at least a part of the flexible portion 3136.

In one embodiment, the portion of the first planar portion 3132 of the conductive plate 3130, which is adjacent to the flexible portion 3136, has a small thickness, such that a stepped portion 3137 may be formed. For example, the stepped portion 3137, which has a semicircular cross-sectional shape, may be formed on the portion adjacent to the flexible portion 3136.

In one embodiment, the portion of the second planar portion 3134 of the conductive plate 3130, which is adjacent to the flexible portion 3136, has a small thickness, such that a stepped portion 3138 may be formed. For example, the stepped portion 3138, which has a semicircular cross-sectional shape, may be formed on the portion adjacent to the flexible portion 3136.

In the display 3100 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 3120 (e.g., the liquid metal plate) and the conductive plate 3130 may be provided to support the foldable display panel 3110 (e.g., the flexible display panel), and the half-etched portions may be formed on the flexible portion 3136 of the conductive plate 3130, thereby assisting in providing the flexibility. Therefore, it is possible to prevent the occurrence of folding marks and creases on the display 3100 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

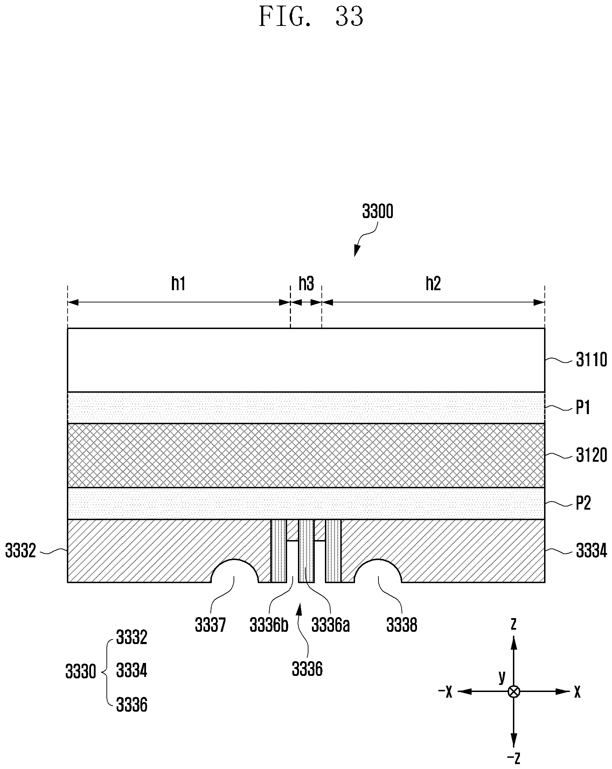

FIG. 33 is a view illustrating the layered structure of the display according to various embodiments of the present disclosure. In the description of a display 3300 illustrated in FIG. 33, a detailed description of components identical or similar to those of the display 3100 in FIGS. 31 and 32 may be omitted.

With reference to FIG. 33, the electronic device (e.g., the electronic device 101 in FIG. 1, the electronic device 300 in FIGS. 3A and 3B, or the electronic device 400 in FIG. 4) according to various embodiments of the present disclosure may include the display 3300.

According to the embodiment, the display 3300 may include a display panel 3110 (e.g., the display panel 1310 in FIG. 13 or the display panel 2510 in FIG. 25), a metal plate 3120 (e.g., the metal plate 1320 in FIG. 13 or the metal plate 2520 in FIG. 25), and a conductive plate 3330 (e.g., the first conductive plate 530 or the second conductive plate 540 in FIG. 6A, the first conductive plate 1330 or the second conductive plate 1340 in FIG. 13, or the conductive plate 3130 in FIG. 31).

According to the embodiment, the metal plate 3120 may be disposed on a lower portion of the display panel 3110 (e.g., based on the -z-axis direction).

In one embodiment, the display panel 3110 and the metal plate 3120 may be attached to each other by means of the adhesive member P1.

According to the embodiment, the conductive plate 3130 may be disposed on a lower portion of the metal plate 3120 (e.g., based on the -z-axis direction).

In one embodiment, the metal plate 3120 and the conductive plate 3330 may be attached to each other by means of the adhesive member P2.

The conductive plate 3330 may be provided in the form of a metal sheet and assist in reinforcing the rigidity of the electronic device. The conductive plate 3330 may be used to block surrounding noise and disperse heat discharged from peripheral heat-radiating components. For example, the conductive plate 3330 may include at least one of Cu, Al, SUS, or CLAD (e.g., a stack member in which SUS and Al are alternately disposed). In another example, the conductive plate 3330 may include other alloy materials.

In one embodiment, a first planar portion 3332, a second planar portion 3334, and a flexible portion 3336 of the conductive plate 3330 may be integrated.

In one embodiment, at least a part of the first planar portion 3332 may overlap the first area h1 of the display 3300 based on the z-axis.

In one embodiment, at least a part of the second planar portion 3334 may overlap the second area h2 of the display 3300 based on the z-axis.

In one embodiment, the flexible portion 3336 may be positioned to overlap the folding axis of the display panel 3110. For example, at least a part of the flexible portion 3336 may overlap the first area h1 based on the z-axis. For example, at least a part of the flexible portion 3336 may overlap the second area h2 based on the z-axis.

In one embodiment, the flexible portion 3336 may include a first portion 3336a and a second portion 3336b. For example, the first portion 3336a and the second portion 3336b may have different thicknesses. The second portion 3336b may be a half-etched portion, and the second portion 3336b may have a smaller thickness than the first portion 3336a. For example, the first portion 3336a and the second portion 3336b may be disposed alternately at a predetermined interval.

In another embodiment, the first portion 3336a of the flexible portion 3336 may include patterns, and the patterns may include a plurality of openings (e.g., the plurality of openings 5331 in FIG. 6B) disposed to be spaced apart from one another. In any embodiment, the patterns may also include a plurality of recesses spaced apart from one another at predetermined intervals.

According to the embodiment, in the unfolded state of the display 3300, the conductive plate 3330 may be folded together with the display panel 3110 by means of at least a part of the flexible portion 3336.

According to the embodiment, in the folded state of the display 3300, the conductive plate 3330 may be unfolded together with the display panel 3110 by means of at least a part of the flexible portion 3336.

In one embodiment, the portion of the first planar portion 3332 of the conductive plate 3330, which is adjacent to the flexible portion 3336, has a small thickness, such that a stepped portion 3337 may be formed. For example, the stepped portion 3337, which has a semicircular cross-sectional shape, may be formed on the portion adjacent to the flexible portion 3336.

In one embodiment, the portion of the second planar portion 3334 of the conductive plate 3330, which is adjacent to the flexible portion 3336, has a small thickness, such that a stepped portion 3338 may be formed. For example, the stepped portion 3338, which has a semicircular cross-sectional shape, may be formed on the portion adjacent to the flexible portion 3336.

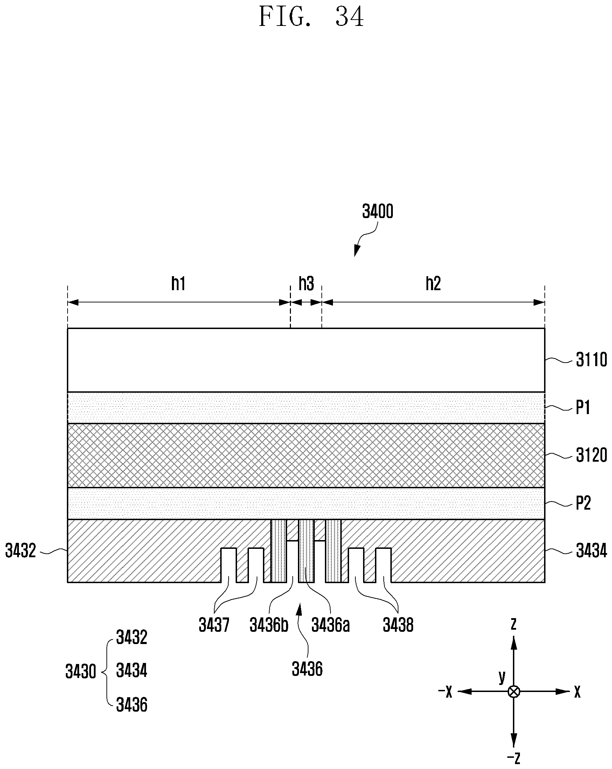

FIG. 34 is a view illustrating the layered structure of the display according to various embodiments of the present disclosure. In the description of a display 3400 illustrated in FIG. 34, a detailed description of components identical or similar to those of the display 3100 in FIGS. 31 and 32 or the display 3300 in FIG. 33 may be omitted.

With reference to FIG. 34, the components of the display 3400 in FIG. 34, which exclude a conductive plate 3430, may be identical to those of the display 3300 in FIG. 33.

According to the embodiment, the metal plate 3120 may be disposed on a lower portion of the display panel 3110 (e.g., based on the -z-axis direction).

In one embodiment, the display panel 3110 and the metal plate 3120 may be attached to each other by means of the adhesive member P1.

According to the embodiment, the conductive plate 3430 may be disposed on a lower portion of the metal plate 3120 (e.g., based on the -z-axis direction).

In one embodiment, the metal plate 3120 and the conductive plate 3430 may be attached to each other by means of the adhesive member P2.

The conductive plate 3430 may be provided in the form of a metal sheet and assist in reinforcing the rigidity of the electronic device. The conductive plate 3430 may be used to block surrounding noise and disperse heat discharged from peripheral heat-radiating components. For example, the conductive plate 3430 may include at least one of Cu, Al, SUS, or CLAD (e.g., a stack member in which SUS and Al are alternately disposed). In another example, the conductive plate 3430 may include other alloy materials.

In one embodiment, a first planar portion 3432, a second planar portion 3434, and a flexible portion 3436 of the conductive plate 3430 may be integrated.

In one embodiment, at least a part of the first planar portion 3432 may overlap the first area h1 of the display 3400 based on the z-axis.

In one embodiment, at least a part of the second planar portion 3434 may overlap the second area h2 of the display 3400 based on the z-axis.

In one embodiment, the flexible portion 3436 may be positioned to overlap the folding axis of the display panel 3110. For example, at least a part of the flexible portion 3436 may overlap the first area h1 based on the z-axis. For example, at least a part of the flexible portion 3436 may overlap the second area h2 based on the z-axis.

In one embodiment, the flexible portion 3436 may include a first portion 3436a and a second portion 3436b. For example, the first portion 3436a and the second portion 3436b may have different thicknesses. The second portion 3436b may be a half-etched portion, and the second portion 3436b may have a smaller thickness than the first portion 3436a. For example, the first portion 3436a and the second portion 3436b may be disposed alternately at a predetermined interval.

In another embodiment, the first portion 3436a of the flexible portion 3436 may include patterns, and the patterns may include a plurality of openings (e.g., the plurality of openings 5331 in FIG. 6B) disposed to be spaced apart from one another. In any embodiment, the patterns may also include a plurality of recesses spaced apart from one another at predetermined intervals.

According to the embodiment, in the unfolded state of the display 3400, the conductive plate 3430 may be folded together with the display panel 3110 by means of at least a part of the flexible portion 3436.

According to the embodiment, in the folded state of the display 3400, the conductive plate 3430 may be unfolded together with the display panel 3110 by means of at least a part of the flexible portion 3436.

In one embodiment, the portion of the first planar portion 3432 of the conductive plate 3430, which is adjacent to the flexible portion 3436, has a small thickness, such that a plurality of stepped portions 3437 may be formed. For example, the plurality of stepped portions 3437, which each has a cross-section having a polygonal shape (e.g., a triangular shape, a quadrangular shape, or a polygonal shape having sides equal or larger in number to or than sides of a pentagonal shape), may be formed on the portion adjacent to the flexible portion 3436.

In one embodiment, the portion of the second planar portion 3434 of the conductive plate 3430, which is adjacent to the flexible portion 3436, has a small thickness, such that a plurality of stepped portions 3438 may be formed. For example, the plurality of stepped portions 3438, which each has a cross-section having a polygonal shape (e.g., a triangular shape, a quadrangular shape, or a polygonal shape having sides equal or larger in number to or than sides of a pentagonal shape), may be formed on the portion adjacent to the flexible portion 3436.

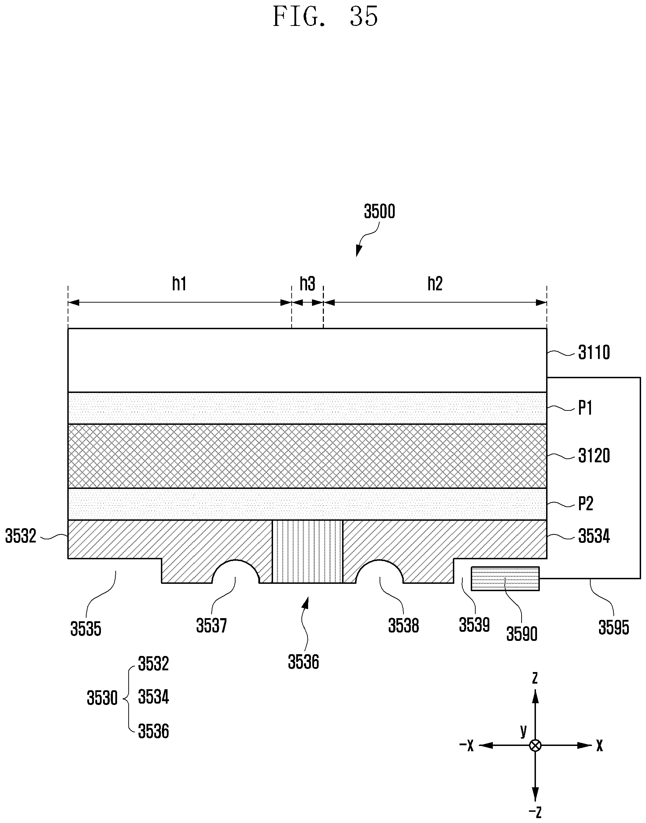

FIG. 35 is a view illustrating the layered structure of the display according to various embodiments of the present disclosure. In the description of a display 3500 illustrated in FIG. 35, a detailed description of components identical or similar to those of the display 3100 in FIGS. 31 and 32, the display 3300 in FIG. 33, or the display 3400 in FIG. 34 may be omitted.

With reference to FIG. 35, according to the embodiment, the metal plate 3120 may be disposed on a lower portion of the display panel 3110 (e.g., based on the -z-axis direction).

In one embodiment, the display panel 3110 and the metal plate 3120 may be attached to each other by means of the adhesive member P1.

According to the embodiment, the conductive plate 3530 may be disposed on a lower portion of the metal plate 3120 (e.g., based on the -z-axis direction).

In one embodiment, the metal plate 3120 and the conductive plate 3530 may be attached to each other by means of the adhesive member P2.

The conductive plate 3530 may be provided in the form of a metal sheet and assist in reinforcing the rigidity of the electronic device. The conductive plate 3530 may be used to block surrounding noise and disperse heat discharged from peripheral heat-radiating components. For example, the conductive plate 3530 may include at least one of Cu, Al, SUS, or CLAD (e.g., a stack member in which SUS and Al are alternately disposed). In another example, the conductive plate 3530 may include other alloy materials.

In one embodiment, a first planar portion 3532, a second planar portion 3534, and a flexible portion 3536 of the conductive plate 3530 may be integrated.

In one embodiment, at least a part of the first planar portion 3532 may overlap the first area h1 of the display 3500 based on the z-axis.

In one embodiment, at least a part of the second planar portion 3534 may overlap the second area h2 of the display 3500 based on the z-axis.

In one embodiment, the flexible portion 3536 may be positioned to overlap the folding axis of the display panel 3110. For example, at least a part of the flexible portion 3536 may overlap the first area h1 based on the z-axis. For example, at least a part of the flexible portion 3536 may overlap the second area h2 based on the z-axis.

In one embodiment, the flexible portion 3536 (e.g., the flexible portion 3136 in FIGS. 31 and 32) may include half-etched portions. The half-etched portions may each have a small thickness (e.g., the second thickness T2 in FIG. 32). For example, the flexible portion 3536 may have a plurality of grooves (e.g., the plurality of grooves 3136a in FIG. 32) formed in the half-etched portions. The plurality of grooves 3136a may be disposed at predetermined intervals w. For example, the portions 3136b (e.g., the non-half-etched portions 3136b in FIG. 32) of the flexible portion 3536, which are not half-etched, may each have the first thickness T1. The portions (e.g., the half-etched portions) of the flexible portion 3536, which have the plurality of grooves 3136a, may each have the second thickness T2 smaller than the first thickness T1.

In another embodiment, the flexible portion 3536 may include patterns, and the patterns of the flexible portion 3536 may include a plurality of openings (e.g., the plurality of openings 5331 in FIG. 6B) disposed to be spaced apart from one another. In any embodiment, the patterns may also include a plurality of recesses spaced apart from one another at predetermined intervals.

According to the embodiment, in the unfolded state of the display 3500, the conductive plate 3530 may be folded together with the display panel 3110 by means of at least a part of the flexible portion 3536.

According to the embodiment, in the folded state of the display 3500, the conductive plate 3530 may be unfolded together with the display panel 3110 by means of at least a part of the flexible portion 3536.

In one embodiment, the portion of the first planar portion 3532 of the conductive plate 3530, which is adjacent to the flexible portion 3536, has a small thickness, such that a stepped portion 3537 may be formed. For example, the stepped portion 3537, which has a semicircular cross-sectional shape, may be formed on the portion adjacent to the flexible portion 3536.

In one embodiment, the portion of the first planar portion 3532 of the conductive plate 3530, which overlaps (e.g., overlaps based on the z-axis direction) the first area h1 of the display 3500 and is adjacent to the edge portion in the -x-axis direction, has a small thickness, such that a stepped portion 3535 may be formed.

In one embodiment, the portion of the second planar portion 3534 of the conductive plate 3530, which is adjacent to the flexible portion 3536, has a small thickness, such that a stepped portion 3538 may be formed. For example, the stepped portion 3538, which has a semicircular cross-sectional shape, may be formed on the portion adjacent to the flexible portion 3536.

In one embodiment, the portion of the second planar portion 3534 of the conductive plate 3530, which overlaps (e.g., overlaps based on the z-axis direction) the second area h2 of the display 3500 and is adjacent to the edge portion in the x-axis direction, has a small thickness, such that a stepped portion 3539 may be formed.

In one embodiment, an electronic component 3590 (e.g., a display driver) for operating the display panel 3110 may be disposed in a space defined by the stepped portion 3539 of the second planar portion 3534 of the conductive plate 3530 (e.g., a portion adjacent to the edge portion of the display 3500 in the x-axis direction). The display panel 3110 and the electronic component 3590 may be electrically connected by a connection part 3595 (e.g., a flexible circuit board or a connector).

In the displays 3300, 3400, and 3500 of the electronic device (e.g., the electronic device 101 in FIG. 1, the electronic device 300 in FIGS. 3A and 3B, or the electronic device 400 in FIG. 4) according to various embodiments of the present disclosure, the integrated foldable metal plate 3120 (e.g., the liquid metal plate) and the conductive plates 3330, 3340, and 3530 may be provided to support the foldable display panel 3110 (e.g., the flexible display panel), and the half-etched portions may be formed on the flexible portions 3336, 3436, and 3536 of the conductive plates 3330, 3340, and 3530, thereby assisting in providing the flexibility. Therefore, it is possible to prevent the occurrence of folding marks and creases on the displays 3300, 3400, and 3500 caused by the frequent folding/unfolding operation and to improve the operation reliability of the electronic device (e.g., the electronic device 101 in FIG. 1, the electronic device 300 in FIGS. 3A and 3B, or the electronic device 400 in FIG. 4).

The electronic device (e.g., the electronic device 101 in FIG. 1, the electronic device 200 in FIGS. 2A and 2B, the electronic device 300 in FIGS. 3A and 3B, or the electronic device 400 in FIG. 4) according to various embodiments of the present disclosure may include the display panel (e.g., the display panel 510 in FIG. 5, the display panel 710 in FIG. 7, the display panel 910 in FIG. 9, the display panel 1110 in FIG. 11, the display panel 1310 in FIG. 13, the display panel 1410 in FIG. 14, the display panel 1510 in FIG. 15, the display panel 1610 in FIG. 16, the display panel 1710 in FIG. 17, the display panel 1810 in FIG. 18, the display panel 1910 in FIG. 19, the display panel 2010 in FIG. 20, the display panel 2110 in FIG. 22, the display panel 2210 in FIG. 22, or the display panel 2301 in FIG. 23) configured to be folded and unfolded about the folding axis (e.g., the folding axis A in FIG. 3A), the metal plate (e.g., the metal plate 520 in FIG. 5, the metal plate 720 in FIG. 7, the metal plate 920 in FIG. 9, the metal plate 1120 in FIG. 11, the metal plate 1320 in FIG. 13, the metal plate 1420 in FIG. 14, the metal plate 1520 in FIG. 15, the metal plate 1620 in FIG. 16, the metal plate 1720 in FIG. 17, the metal plate 1820 in FIG. 18, the metal plate 1920 in FIG. 19, the metal plate 2020 in FIG. 20, the metal plate 2120 in FIG. 21, or the metal plate 2320 in FIG. 23) disposed on the lower portion of the display panel 510, 710, 910, 1110, 1310, 1410, 1510, 1610, 1710, 1810, 1910, 2010, 2110, 2210, or 2301, the first adhesive member P1 configured to join the display panel 510, 710, 910, 1110, 1310, 1410, 1510, 1610, 1710, 1810, 1910, 2010, 2110, 2210, or 2301 and the metal plate 520, 720, 920, 1120, 1320, 1420, 1520, 1620, 1720, 1820, 1920, 2020, 2120, or 2320, the first conductive plate (e.g., the first conductive plate 530 in FIG. 5, the first conductive plate 1030 in FIG. 10, the first conductive plate 1130 in FIG. 11, the first conductive plate 1330 in FIG. 13, the first conductive plate 1530 in FIG. 15, the first conductive plate 1930 in FIG. 19, the first conductive plate 2030 in FIG. 20, the first conductive plate 2130 in FIG. 21, the first conductive plate 2230 in FIG. 22, or the first conductive plate 2330 in FIG. 23) disposed on the lower portion of the metal plate 520, 720, 920, 1120, 1320, 1420, 1520, 1620, 1720, 1820, 1920, 2020, 2120, or 2320, the second adhesive member P2 configured to join the metal plate 520, 720, 920, 1120, 1320, 1420, 1520, 1620, 1720, 1820, 1920, 2020, 2120, or 2320 and the first conductive plate 530, 1030, 1130, 1330, 1530, 1930, 2030, 2130, 2230, or 2330, and the digitizer (e.g., the digitizer 1360 in FIG. 13, the digitizer 1460 in FIG. 14, or the digitizer 1660 in FIG. 16) disposed on the lower portion of the display panel 510, 710, 910, 1110, 1310, 1410, 1510, 1610, 1710, 1810, 1910, 2010, 2110, 2210, or 2301.

According to the embodiment, the metal plate 520, 720, 920, 1120, 1320, 1420, 1520, 1620, 1720, 1820, 1920, 2020, 2120, or 2320 may include polymer.

According to the embodiment, the metal plate 520, 720, 920, 1120, 1320, 1420, 1520, 1620, 1720, 1820, 1920, 2020, 2120, or 2320 may have a thickness of 12 um to 35 um.

According to the embodiment, the metal plate 520, 720, 920, 1120, 1320, 1420, 1520, 1620, 1720, 1820, 1920, 2020, 2120, or 2320 may have a composition of 55 to 70% of zirconium (Zr), 15 to 20% of copper (Cu), 10 to 15% of nickel (Ni), 2 to 6% of aluminum (Al), and 1 to 5% of titanium (Ti).

According to the embodiment, the metal plate 520, 720, 920, 1120, 1320, 1420, 1520, 1620, 1720, 1820, 1920, 2020, 2120, or 2320 may have a modulus of 70 GPa or more.

According to the embodiment, the metal plate 520, 720, 920, 1120, 1320, 1420, 1520, 1620, 1720, 1820, 1920, 2020, 2120, or 2320 may have yield strength of 1200 MPa or higher.

According to the embodiment, the metal plate 520, 720, 920, 1120, 1320, 1420, 1520, 1620, 1720, 1820, 1920, 2020, 2120, or 2320 may have specific resistance of about 1500 (nΩ.m).

According to the embodiment, the metal plate 520, 720, 920, 1120, 1320, 1420, 1520, 1620, 1720, 1820, 1920, 2020, 2120, or 2320 may include the folding area (e.g., the folding area 323 in FIG. 3A or the folding area 523 in FIG. 6A) positioned to overlap the folding axis (e.g., the folding axis A in FIG. 3A), the first planar area (e.g., the first planar area 521 in FIGS. 5 and 6A) positioned at the first side of the folding area (e.g., the folding area 323 in FIG. 3A or the folding area 523 in FIG. 6A), and the second planar area (e.g., the second planar area 522 in FIGS. 5 and 6A) positioned at the second side of the folding area (e.g., the folding area 323 in FIG. 3A or the folding area 523 in FIG. 6A).

According to the embodiment, the first planar area 521 and the second planar area 522 of the metal plate 520, 720, 920, 1120, 1320, 1420, 1520, 1620, 1720, 1820, 1920, 2020, 2120, or 2320 may each have the first thickness. The folding area (e.g., the folding area 323 in FIG. 3A or the folding area 523 in FIG. 6A) of the metal plate 520, 720, 920, 1120, 1320, 1420, 1520, 1620, 1720, 1820, 1920, 2020, 2120, or 2320 may have the second thickness smaller than the first thickness.

According to the embodiment, the first planar area 521 and the second planar area 522 of the metal plate 520, 720, 920, 1120, 1320, 1420, 1520, 1620, 1720, 1820, 1920, 2020, 2120, or 2320 may each have the first thickness. The folding area (e.g., the folding area 323 in FIG. 3A or the folding area 523 in FIG. 6A) of the metal plate 520, 720, 920, 1120, 1320, 1420, 1520, 1620, 1720, 1820, 1920, 2020, 2120, or 2320 may have the plurality of grooves. The portion where the plurality of grooves is formed may have a thickness smaller than the first thickness.

According to the embodiment, the first conductive plate 530, 1030, 1130, 1330, 1530, 1930, 2030, 2130, 2230, or 2330 may include the first planar portion (e.g., the first planar portion 531 in FIGS. 5 and 6A) configured to face the first planar area 521 of the metal plate 520, 720, 920, 1120, 1320, 1420, 1520, 1620, 1720, 1820, 1920, 2020, 2120, or 2320, the second planar portion (e.g., the second planar portion 532 in FIGS. 5 and 6A) configured to face the second planar area 522 of the metal plate 520, 720, 920, 1120, 1320, 1420, 1520, 1620, 1720, 1820, 1920, 2020, 2120, or 2320, and the flexible portion (e.g., the flexible portion 533 in FIGS. 5 and 6A) configured to face the folding area (e.g., the folding area 323 in FIG. 3A or the folding area 523 in FIG. 6A) of the metal plate 520, 720, 920, 1120, 1320, 1420, 1520, 1620, 1720, 1820, 1920, 2020, 2120, or 2320.

According to the embodiment, the electronic device may further include the second conductive plate (e.g., the second conductive plate 540, the second conductive plate 1140 in FIG. 11, the second conductive plate 1340 in FIG. 13, the second conductive plate 1440 in FIG. 14, the second conductive plate 1540 in FIG. 15, the second conductive plate 1840 in FIG. 18, the second conductive plate 1940 in FIG. 19, the second conductive plate 2040 in FIG. 20, the second conductive plate 2140 in FIG. 21, the second conductive plate 2240 in FIG. 22, or the second conductive plate 2340 in FIG. 23) disposed on the lower portion of the first conductive plate 530, 1030, 1130, 1330, 1530, 1930, 2030, 2130, 2230, or 2330, and the third adhesive member P3 configured to join the first conductive plate 530, 1030, 1130, 1330, 1530, 1930, 2030, 2130, 2230, or 2330 and the second conductive plate 540, 1140, 1340, 1440, 1540, 1840, 1940, 2040, 2140, 2240, or 2340.

According to the embodiment, the second conductive plate 540, 1140, 1340, 1440, 1540, 1840, 1940, 2040, 2140, 2240, or 2340 may include the first portion (e.g., the first portion 1342 in FIG. 13, the first portion 1442 in FIG. 14, the first portion 1542 in FIG. 15, the first portion 1942 in FIG. 19, the first portion 2042 in FIG. 20, the first portion 2142 in FIG. 21, the first portion 2242 in FIG. 22, or the first portion 2342 in FIG. 23) configured to face the first planar area 521 of the metal plate 520, 720, 920, 1120, 1320, 1420, 1520, 1620, 1720, 1820, 1920, 2020, 2120, or 2320, and the second portion (e.g., the second portion 1344 in FIG. 13, the second portion 1444 in FIG. 14, the second portion 1544 in FIG. 15, the second portion 1944 in FIG. 19, the second portion 2044 in FIG. 20, the second portion 2144 in FIG. 21, the second portion 2244 in FIG. 22, or the second portion 2344 in FIG. 23) configured to face the second planar area 522 of the metal plate 520, 720, 920, 1120, 1320, 1420, 1520, 1620, 1720, 1820, 1920, 2020, 2120, or 2320. The first portion 1342, 1442, 1542, 1942, 2042, 2142, 2242, or 2342 and the second portion 1344, 1444, 1544, 1944, 2044, 2144, 2244, or 2344 of the second conductive plate 540, 1140, 1340, 1440, 1540, 1840, 1940, 2040, 2140, 2240, or 2340 may be spaced apart from each other at a predetermined interval.

According to the embodiment, the digitizer 1360, 1460, or 1660 may be disposed between the metal plate 520, 720, 920, 1120, 1320, 1420, 1520, 1620, 1720, 1820, 1920, 2020, 2120, or 2320 and the first conductive plate 530, 1030, 1130, 1330, 1530, 1930, 2030, 2130, 2230, or 2330 or disposed between the metal plate 520, 720, 920, 1120, 1320, 1420, 1520, 1620, 1720, 1820, 1920, 2020, 2120, or 2320 and the second conductive plate 540, 1140, 1340, 1440, 1540, 1840, 1940, 2040, 2140, 2240, or 2340.

According to the embodiment, the electronic device may include the first plating layer formed on at least a part of the upper surface of the metal plate 520, 720, 920, 1120, 1320, 1420, 1520, 1620, 1720, 1820, 1920, 2020, 2120, or 2320, and the second plating layer formed on at least a part of the lower surface of the metal plate 520, 720, 920, 1120, 1320, 1420, 1520, 1620, 1720, 1820, 1920, 2020, 2120, or 2320.

According to the embodiment, the first plating layer may be formed to overlap the first planar area 521 and the second planar area 522 of the metal plate 520, 720, 920, 1120, 1320, 1420, 1520, 1620, 1720, 1820, 1920, 2020, 2120, or 2320.

According to the embodiment, the second plating layer may be formed to overlap the first planar area 521 and the second planar area 522 of the metal plate 520, 720, 920, 1120, 1320, 1420, 1520, 1620, 1720, 1820, 1920, 2020, 2120, or 2320.

According to the embodiment, the electronic device may further include the heat dissipation plate disposed on the same plane as the metal plate 520, 720, 920, 1120, 1320, 1420, 1520, 1620, 1720, 1820, 1920, 2020, 2120, or 2320.

According to the embodiment, the heat dissipation plate may be disposed to surround the metal plate 520, 720, 920, 1120, 1320, 1420, 1520, 1620, 1720, 1820, 1920, 2020, 2120, or 2320.

According to the embodiment, the metal plate 520, 720, 920, 1120, 1320, 1420, 1520, 1620, 1720, 1820, 1920, 2020, 2120, or 2320 may include liquid metal having an elastic strain ratio of about 1.5% or higher.

## Claims

1. An electronic device comprising:
a display panel configured to be folded and unfolded about a folding axis;
a metal plate disposed on a lower portion of the display panel;
a first adhesive member configured to join the display panel and the metal plate;
a first conductive plate disposed on a lower portion of the metal plate;
a second adhesive member configured to join the metal plate and the first conductive plate; and
a digitizer disposed on a lower portion of the display panel.

2. The electronic device of claim 1, wherein the metal plate includes polymer.

3. The electronic device of claim 1, wherein the metal plate has a thickness of 12 um to 35 um.

4. The electronic device of claim 1, wherein the metal plate has a composition of 55 to 70% of zirconium (Zr), 15 to 20% of copper (Cu), 10 to 15% of nickel (Ni), 2 to 6% of aluminum (Al), and 1 to 5% of titanium (Ti).

5. The electronic device of claim 1, wherein the metal plate has a modulus of 70 GPa or more.

6. The electronic device of claim 1, wherein the metal plate has yield strength of 1200 MPa or higher.

7. The electronic device of claim 1, wherein the metal plate has specific resistance of 1500 (nΩ.m).

8. The electronic device of claim 1, wherein the metal plate comprises:
a folding area positioned to overlap the folding axis;
a first planar area positioned at a first side of the folding area; and
a second planar area positioned at a second side of the folding area.

9. The electronic device of claim 8, wherein the first planar area and the second planar area of the metal plate each have a first thickness, and the folding area of the metal plate has a second thickness smaller than the first thickness.

10. The electronic device of claim 8, wherein the first planar area and the second planar area of the metal plate each have a first thickness, a plurality of grooves is formed in the folding area of the metal plate, and a portion where the plurality of grooves is formed has a thickness smaller than the first thickness.

11. The electronic device of claim 8, wherein the first conductive plate comprises:
a first planar portion configured to face the first planar area of the metal plate;
a second planar portion configured to face the second planar area of the metal plate; and
a flexible portion configured to face the folding area of the metal plate.

12. The electronic device of claim 11, further comprising:
a second conductive plate disposed on a lower portion of the first conductive plate; and
a third adhesive member configured to join the first conductive plate and the second conductive plate.

13. The electronic device of claim 8, comprising:
a first plating layer formed on at least a part of an upper surface of the metal plate; and
a second plating layer formed on at least a part of a lower surface of the metal plate.

14. The electronic device of claim 1, further comprising:
a heat dissipation plate disposed on the same plane as the metal plate.

15. The electronic device of claim 1, wherein the metal plate includes liquid metal having an elastic strain ratio of 1.5% or higher.
